(19)

Europäisches Patentamt

European Patent Office

Office européen des brevets

(11) **EP 4 439 211 A1**

(12) **EUROPEAN PATENT APPLICATION**

(43) Date of publication:
**02.10.2024 Bulletin 2024/40**

(21) Application number: **24167298.9**

(22) Date of filing: **28.03.2024**

(51) International Patent Classification (IPC):
**G05B 19/418** (2006.01)      **B29C 70/54** (2006.01)
**G05B 13/02** (2006.01)       **G05B 13/04** (2006.01)

(52) Cooperative Patent Classification (CPC):
**G05B 19/41875; B29C 70/54;** G05B 13/0265;
G05B 13/04; G05B 2219/32177; G05B 2219/32187;
G05B 2219/32194

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023   US 202363493118 P
18.01.2024   US 202418416467**

(71) Applicant: **The Boeing Company
Arlington, VA 22202 (US)**

(72) Inventors:
• **SHAHAN, David Williamson
Arlington, 22202 (US)**
• **SUNDARESWARA, Rashmi
Arlington, 22202 (US)**
• **STEWART, Tiffany Allison
Arlington, 22202 (US)**
• **YABANSU, Yuksel Can
Arlington, 22202 (US)**
• **BAUER, Andrew L.
Arlington, 22202 (US)**
• **LANPHERE GROSS, Gwen Marie
Arlington, 22202 (US)**

(74) Representative: **Boult Wade Tennant LLP
Salisbury Square House
8 Salisbury Square
London EC4Y 8AP (GB)**

(54) **REAL TIME CHARACTERISTIC PREDICTION FOR UNCONSOLIDATED COMPOSITE MATERIALS**

(57)      A method, apparatus, system, and computer program product for predicting a number of characteristics of an unconsolidated composite material. Sensor data is received in real time from a composite material manufacturing system during manufacturing of an unconsolidated composite material. Initial predictions are generated for a number of characteristics of the unconsolidated composite material in a completed form in real time during manufacturing of the unconsolidated composite material in the composite material manufacturing system using a number of physics-based models and a number of machine learning models trained using data. A final prediction is determined in real time for the number of characteristics based on the initial predictions.

FIG. 1

## Description

## BACKGROUND INFORMATION

## Field:

The present disclosure relates generally to manufacturing composite materials and in particular, to manufacturing uncured composite materials. Still more particularly, the present disclosure relates to a method, apparatus, system, and computer program product for predicting properties for uncured composite materials during the manufacturing of the uncured composite materials.

## Background:

Aircraft are being designed and manufactured with greater and greater percentages of composite materials. Composite materials are used in aircraft to decrease the weight of the aircraft and improve aero efficiency through design. This decreased weight improves performance features such as increased payload capacities and fuel efficiencies. Further, composite materials provide longer service life for various components in an aircraft.

Composite materials are tough, light-weight materials created by combining two or more functional components. For example, a composite material may include reinforcing fibers bound in a polymer resin matrix. The fibers may be unidirectional or may take the form of a woven cloth or fabric. The fibers and resins are arranged and cured to form a composite material.

Further, using composite materials to create aerospace composite structures potentially allows for portions of an aircraft to be manufactured in larger pieces or sections. For example, a fuselage in an aircraft may be created in cylindrical sections and then assembled to form the fuselage of the aircraft. Other examples include, without limitation, wing sections joined to form a wing or stabilizer sections joined to form a stabilizer.

In manufacturing composite structures, layers of composite material are typically laid up on a tool. The layers may be comprised of fibers in sheets. These sheets may take the form of fabrics, tape, tows, or other suitable forms. In some cases, resin may be infused or pre-impregnated into the sheets. These types of sheets are commonly referred to as prepreg. Prepreg can be manufactured in long sheets that are stored in rolls until the prepreg is used to manufacture composite structures.

Different layers of prepreg may be laid up in different orientations and different numbers of layers may be used depending on the thickness of the composite structure being manufactured. These layers may be laid up by hand or using automated lamination equipment such as a tape laminating machine or a fiber placement system.

After the different layers of composite material have been laid up on the tool, the layers of composite material may be consolidated and cured upon exposure to temperature and pressure, thus forming the final composite structure.

The quality of the final composite structure can be determined using testing, including non-destructive testing. Further, components used to manufacture a composite structure can also be monitored and tested for quality purposes. Maintaining a desired quality for composite components can increase the quality of the final composite structures. For example, prepreg can be inspected to determine whether the thickness is within specified tolerances. The quality testing of composite components, such as prepreg components, can be more time consuming than desired.

Therefore, it would be desirable to have a method and apparatus that take into account at least some of the issues discussed above, as well as other possible issues. For example, it would be desirable to have a method, apparatus, system, and computer program product that overcome a technical problem with quality testing of prepreg components.

## SUMMARY

There is described herein a characteristic prediction system comprising a system in a prediction manager located in the computer system. The prediction manager is configured to generate initial predictions for a number of characteristics of an unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained using historical sensor data to generate a number of the initial predictions using the sensor data. The prediction manager is configured to determine uncertainties for the initial predictions for the number of characteristics of the unconsolidated composite material in the completed form from the number of physics-based models and the number of machine learning models in real time during manufacturing of the unconsolidated composite material. The prediction manager is configured to associate weights with the initial predictions for the number of characteristics using the uncertainties. The prediction manager is configured to determine a final prediction for the number of characteristics based on the initial predictions and the weights associated with the initial predictions.

There is described herein a characteristic prediction system comprising a prediction manager located in the computer system. The prediction manager is configured to receive sensor data in real time from a sensor system for a composite material manufacturing system during manufacturing of an unconsolidated composite material. The prediction manager is configured to generate initial predictions for a number of characteristics of the unconsolidated composite material in a completed form in real time during manufacturing of the unconsolidated composite material in a composite material manufacturing system using a number of physics-based models and a number of machine learning models trained to generate the initial predictions using the sensor data. The prediction manager is configured to determine a final prediction in real time for the number of characteristics based on the initial predictions.

There is described herein a method predicts a number of characteristics of an unconsolidated composite material. Initial predictions generated for a number of characteristics of the unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained to generate the initial predictions using the sensor data. Uncertainties are determined for the initial predictions for the number of characteristics of the unconsolidated composite material in the completed form from the number of physics-based models and the number of machine learning models in real time during manufacturing of the unconsolidated composite material. Weights associated with the initial predictions for the number of characteristics using the uncertainties. A final prediction is determined for the number of characteristics based on the initial predictions and the weights associated with the initial predictions.

There is described herein a method predicts a number of characteristics of an unconsolidated composite material. Sensor data is received in real time from a composite material manufacturing system during manufacturing of an unconsolidated composite material. Initial predictions are generated for a number of characteristics of the unconsolidated composite material in a completed form in real time during manufacturing of the unconsolidated composite material in the composite material manufacturing system using a number of physics-based models and a number of machine learning models trained using data. A final prediction is determined in real time for the number of characteristics based on the initial predictions.

The features and functions can be achieved independently in various examples of the present disclosure or may be combined in yet other examples in which further details can be seen with reference to the following description and drawings.

## BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of illustrative examples of the present disclosure when read in conjunction with the accompanying drawings, wherein:

Figure 1 is a pictorial representation of a network of data processing systems;
Figure 2 is a block diagram of a composite manufacturing environment;
Figure 3 is an illustration of a block diagram of actions that can be taken using predicted properties for portions of an unconsolidated composite material;
Figure 4 is an illustration of a manufacturing process flow for manufacturing unconsolidated composite materials;
Figure 5 is an illustration of a composite material manufacturing system configured for performing filming process;
Figure 6 is an illustration of a composite material manufacturing system configured for performing a prepreg production process;
Figure 7 is an illustration of a block diagram of a sensor location in a composite material manufacturing system;
Figure 8 is an illustration of the side view of a portion of a composite material manufacturing system;
Figure 9 is an illustration of the top view of a portion of a composite material manufacturing system;
Figure 10 is an illustration of a flowchart of a process for identifying quality levels for portions of an unconsolidated composite material;
Figure 11 is an illustration of a flowchart of a process for marking an unconsolidated composite material;
Figure 12 is an illustration of a flowchart of a process for marking an out-of-tolerance portion of an unconsolidated composite material as unusable;
Figure 13 is an illustration of a flowchart of a process for marking an in-tolerance portion of an unconsolidated composite material as usable;
Figure 14 is an illustration of a flowchart of a process for marking a portion of an unconsolidated composite material with a quality level;
Figure 15 is an illustration of a flowchart of a process for recording a quality level for portions of an unconsolidated composite material;
Figure 16 is an illustration of a flowchart of a process for determining predicted properties for a portion of an unconsolidated composite material;
Figure 17 is an illustration of a flowchart of a process for training a machine learning model to predict properties for an unconsolidated composite material prior to completing fabrication of the unconsolidated com-

Figure 18 is an illustration of a flowchart of a process for performing a corrective action for portions of an unconsolidated composite material;

Figure 19 is an illustration of a flowchart of a process for performing a corrective action for out-of-tolerance portions of an unconsolidated composite material;

Figure 20 is an illustration of a flowchart of a process for adjusting parameters for out-of-tolerance portions of an unconsolidated composite material;

Figure 21 is an illustration of a flowchart of a process for adjusting parameters for in-tolerance portions of an unconsolidated composite material;

Figure 22 is an illustration of a flowchart of a process for adjusting parameters such that portions of an unconsolidated composite material are within tolerance;

Figure 23 is an illustration of a flowchart of a process for adjusting parameters for a subsequent portion of an unconsolidated composite material;

Figure 24 is an illustration of a flowchart of a process for changing raw materials;

Figure 25 is an illustration of a flowchart of a process for determining predicted properties of an unconsolidated composite material;

Figure 26 is an illustration of a block diagram of a data processing system;

Figure 27 is an illustration of an aircraft manufacturing and service method;

Figure 28 is an illustration of a block diagram of an aircraft;

Figure 29 is an illustration of a block diagram of a product management system;

Figure 30 is an illustration of a block diagram of a characteristic prediction system;

Figure 31 is an illustration of a block diagram for processing conditions;

Figure 32 is an illustration of a block diagram of sensor data;

Figure 33 is an illustration of a block diagram of machine learning models;

Figure 34 is an illustration of data flow for real time prediction of characteristics for a composite prepreg;

Figure 35 is an illustration of data flow using initial predictions from models to generate real time predictions of characteristics for a composite prepreg;

Figure 36 is an illustration of dataflow for real time thickness prediction;

Figure 37 is an illustration of dataflow for real time fiber area weight;

Figure 38 is an illustration of dataflow for real time fiber area weight prediction;

Figure 39 is an illustration of a flowchart of a process for predicting a number of characteristics of the unconsolidated composite material;

Figure 40 is an illustration of a flowchart of a process for adjusting processing conditions;

Figure 41 is an illustration of a flowchart of a process for determining a final prediction; and

Figure 42 is an illustration of a flowchart of a process for predicting a number of characteristics of the unconsolidated composite material.

## DETAILED DESCRIPTION

The illustrative examples recognize and take into account one or more different considerations as described below. For example, current testing of unconsolidated composite components, such as a prepreg roll manufactured by carbon fiber prepreg coating line, can be performed using a sample from the prepreg roll. If the sample does not meet a desired quality level, the entire prepreg roll is discarded or recycled. However, the entire prepreg roll may not have an undesired quality level. Only a portion of the prepreg roll may not meet tolerances for the desired quality level. Current techniques do not enable identifying which portions of the prepreg roll may have properties that are out of tolerance without testing multiple portions of the entire prepreg roll. Testing multiple portions of the entire prepreg roll is time consuming and inefficient.

Also determining the cause for the prepreg roll to have properties with an undesired quality level cannot currently be performed during the manufacturing process. Instead, an analysis is performed after manufacturing the prepreg roll and testing a sample of the prepreg roll indicates the sample does not have the desired quality level. Further, when the cause can be determined, adjustments to the carbon fiber prepreg coating line can be made to ensure future prepreg rolls have a desired quality level. The time needed for the determination may not be possible before more prepreg rolls have been completed and one or more have been determined to not have a desired quality level. As a result, one solution is to halt manufacturing of prepreg rolls using the carbon fiber prepreg coating line that manufactured the prepreg roll until the cause can be determined and adjustments can be made to the carbon fiber prepreg coating line. This unavailability to the carbon fiber prepreg coating line reduces the capacity to manufacture prepreg rolls.

The illustrative examples further recognize and take into account that it would be desirable to have an ability to determine the characteristics of prepreg materials. The manufacturing process can be at least one of resin mixing, resin filming, a resin bath operation, or other operations performed to produce prepreg during the manufacturing process while the prepreg is being manufactured. The different types of sensor data obtained from different locations in the carbon fiber prepreg coating line in real time can be used to predict the characteristics of the prepreg while the prepreg is still being manufactured. This information can be used to determine which portions of the prepreg roll have characteristics that are in tolerance and other portions of the prepreg roll that are out of tolerance. This type of determination of characteristics for portions of the prepreg being manufactured can be in real time in a manner that allows marking or recording which portions are in tolerance or out of tolerance. As a result, when some portions of the prepreg roll are out of tolerance, the portions recorded or marked to not be used while the other portion of the prepreg rolls can still be used. As a result, the amount of prepreg discarded or recycled can be reduced.

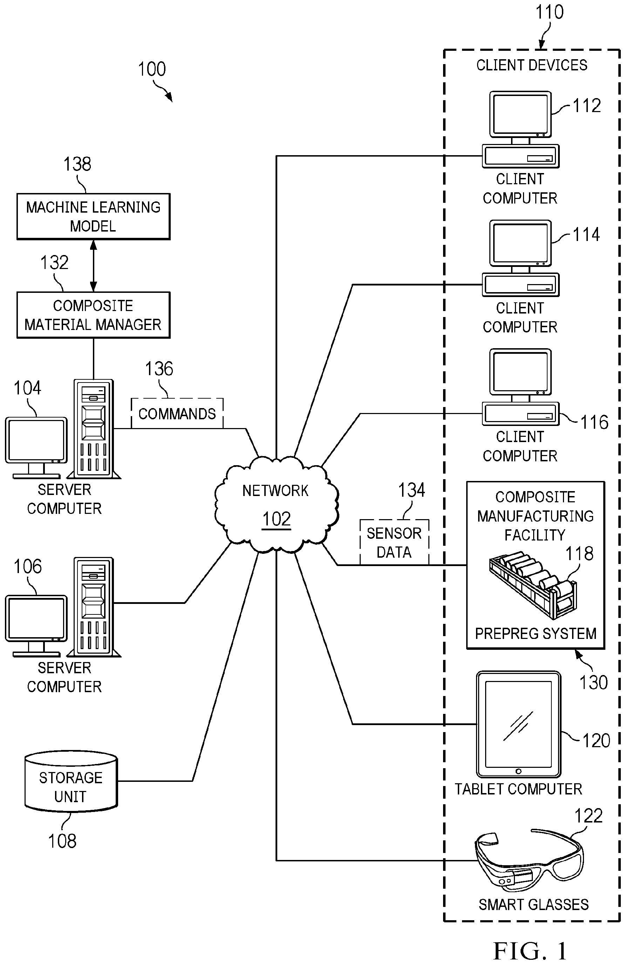

With reference now to the figures and, in particular, with reference to Figure 1, a pictorial representation of a network of data processing systems is depicted in which illustrative examples may be implemented. Network data processing system 100 is a network of computers in which the illustrative examples may be implemented. Network data processing system 100 contains network 102, which is the medium used to provide communications links between various devices and computers connected together within network data processing system 100. Network 102 may include connections, such as wire, wireless communication links, or fiber optic cables.

In some examples, including the depicted example, server computer 104 and server computer 106 connect to network 102 along with storage unit 108. In addition, client devices 110 connect to network 102. As depicted, client devices 110 include client computer 112, client computer 114, and client computer 116. Client devices 110 can be, for example, computers, workstations, or network computers. In some examples, including the depicted example, server computer 104 provides information, such as boot files, operating system images, and applications to client devices 110. Further, client devices 110 can also include other types of client devices such as prepreg system 118, tablet computer 120, and smart glasses 122. In some examples, including this illustrative example, server computer 104, server computer 106, storage unit 108, and client devices 110 are network devices that connect to network 102 in which network 102 is the communications media for these network devices. Some or all of client devices 110 may form an Internet of Things (IoT) in which these physical devices can connect to network 102 and exchange information with each other over network 102.

Client devices 110 are clients to server computer 104 in some examples, including this example. Network data processing system 100 may include additional server computers, client computers, and other devices not shown. Client devices 110 connect to network 102 utilizing at least one of wired, optical fiber, or wireless connections.

Program instructions located in network data processing system 100 can be stored on a computer-recordable storage media and downloaded to a data processing system or other device for use. For example, program instructions can be stored on a computer-recordable storage media on server computer 104 and downloaded to client devices 110 over network 102 for use on client devices 110.

In some examples, including the depicted example, network data processing system 100 is the Internet with network 102 representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system 100 also may be implemented using a number of different types of networks. For example, network 102 can be comprised of at least one of the Internet, an intranet, a local area network (LAN), a metropolitan area network (MAN), or a wide area network (WAN). Figure 1 is intended as an example, and not as an architectural limitation for the different illustrative examples.

As used herein, "a number of" when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

In some examples, including this example, prepreg system 118 is located in composite manufacturing facility 130. This location manufactures unconsolidated composite materials such as prepreg using prepreg system 118. As depicted, composite material manager 132 at server computer 104 can communicate with prepreg system 118 at composite manufacturing facility 130. This communication can include the exchange of information selected from at least one of sensor data 134, commands 136, or other types of information that can be sent over network 102.

In some examples, including this example, composite material manager 132 can receive sensor data 134 from a sensor system for prepreg system 118. The sensor system can be located in at least one of prepreg system 118 or another location in composite manufacturing facility 130.

In some examples, including this illustrative example, sensor data 134 is received in real time from prepreg system 118. In other words, receiving sensor data 134 in real time means that sensor data 134 is received as prepreg system 118 operates to manufacture prepreg. When sensor data 134 is sent in real time, sensor data 134 is sent as quickly as possible without potential delays. In analyzing sensor data 134 in real time, composite material manager 132 can process and analyze sensor data 134 as sensor data 134 is received.

As depicted, sensor data 134 can be analyzed by composite material manager 132 to determine a prediction of properties for the prepreg when manufacturing of the prepreg is completed. This prediction of properties is made while the prepreg is being manufactured by prepreg system 118. The predicted properties are properties for a number of portions of the prepreg being manufactured within prepreg system 118. These properties can include, for example, prepreg thickness, areal weight, and other characteristics of the completed prepreg. In other words, composite material manager 132 can perform real time predicting of characteristics of the prepreg being manufactured by prepreg system 118 before manufacturing of the prepreg has been completed. Based on the predicted properties, composite material manager 132 can identify which of the portions of the prepreg are within a tolerance for use in manufacturing a composite part. Based on the set properties predicted for the prepreg, composite material manager 132 can record one or more portions that are within tolerance as well as portions that may be out of tolerance for use in manufacturing a composite part. Further, composite material manager 132 can determine how long the portions will remain within tolerance. In some cases, the unconsolidated composite material may have a shelf life which may vary depending on the properties predicted for the prepreg.

Additionally, with knowing the predicted properties for a portion of the prepreg, composite material manager 132 performs corrective actions based on the quality level determined for the portion of the unconsolidated composite material from the prediction of the properties of unconsolidated composite materials made prior to manufacturing operations being completed when the portion is completed product in the unconsolidated composite material.

For example, composite material manager 132 can determine what adjustments are needed to prepreg system 118 such that further processing of the portion of the prepreg results in that portion being within tolerance or having a desired quality level. With this determination, composite material manager 132 can send commands 136 to prepreg system 118 to make the adjustments.

Using commands 136, these adjustments can be made by composite material manager 132 while the portion of the prepreg is still being manufactured. These adjustments can be made to portions of prepreg system 118 that have not yet processed the portion of the prepreg. With these adjustments, additional sensor data can be received to determine whether the action performed has changed the portions of the prepreg to have a desired quality level. In this manner, composite material manager 132 can manage the manufacturing of the unconsolidated composite material in a manner that can increase the portions of the unconsolidated composite material that will meet a desired quality level and reduce discarding portions of unconsolidated composite material.

In some examples, including this illustrative example, this prediction can be made using machine learning model 138. In some examples, including this example, machine learning model 138 has been trained using historical sensor data generated from previously manufactured prepreg by prepreg system 118.

Illustration of network data processing system 100 in Figure 1 is not meant to limit the manner in which other illustrative examples can be implemented. For example, composite material manager 132 can be located in another location other than in server computer 104. For example, composite material manager 132 can be located at client computer 112, in prepreg system 118, or another computer located at composite manufacturing facility 130. In other illustrative examples, additional prepreg systems may be located at composite manufacturing facility 130 or other locations that can be managed by composite material manager 132.

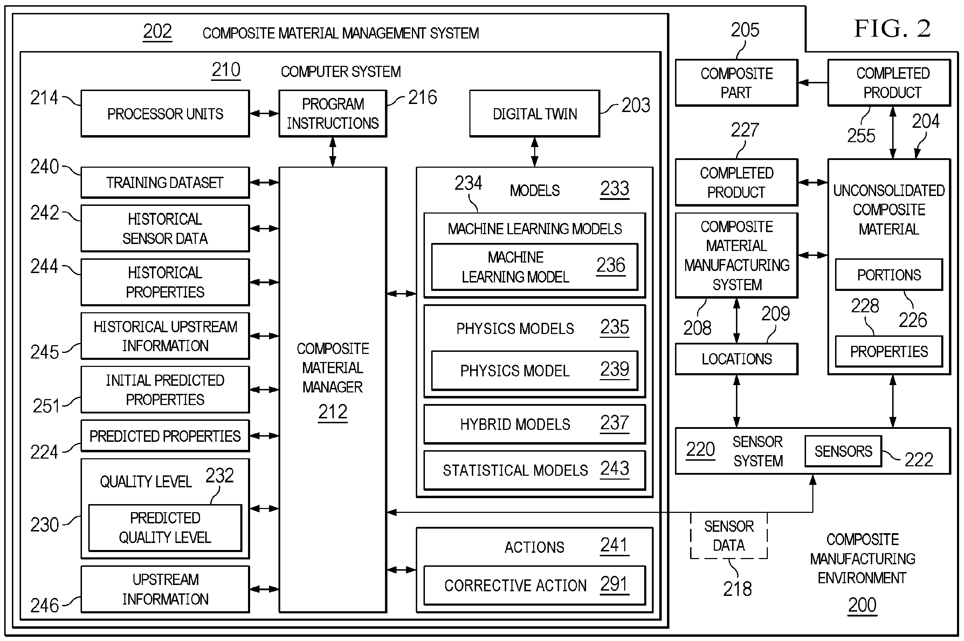

With reference now to Figure 2, a block diagram of a composite manufacturing environment is depicted in accordance with an illustrative example. In some examples, including this illustrative example, composite manufacturing environment 200 includes components that can be implemented in hardware such as the hardware shown in network data processing system 100 in Figure 1.

In some examples, including this illustrative example, composite material management system 202 operates to manage the manufacturing of unconsolidated composite material 204 for use in manufacturing composite part 205.

Unconsolidated composite material 204 is a composite material that has not been processed to form composite part 205. For example, processing such as at least one of pressure, heating, or curing has not been applied to unconsolidated composite material 204. In other words, unconsolidated composite material 204 has not been processed in a manner that forms the final composite part.

Unconsolidated composite material 204 can be selected from at least one of a prepreg, an aerospace-grade prepreg, a thermoset prepreg, a thermoplastic prepreg, a woven fabric prepreg, a fiber tow prepreg, a tow prepreg, unidirectional tape prepreg, a resin coated film, non-crimp fabric, a resin mix, or other suitable unconsolidated composite materials. Fibers in the unconsolidated composite material 204 can take a number of different forms. For example, unconsolidated composite material 204 such as fibers and fabric can be selected from at least one of glass fibers, carbon fibers, Kevlar fibers, para-aramid fibers, hybrid fibers, carbon fabric with a glass yarn, carbon fiber fabric with an interwoven wire, boron silicate fibers, or other suitable type of materials.

Composite part 205 can be, for example, a fuselage section, a skin panel, a wing, a rib, a door, or other suitable types of parts.

In other examples, unconsolidated composite material 204 can be used to manufacture another unconsolidated composite material. For example, unconsolidated composite material 204 can be a filmed paper. This filmed paper can be used to manufacture another unconsolidated composite material such as prepreg.

For example, composite material management system 202 can control the operation of composite material manufacturing system 208 to manufacture unconsolidated composite material 204. As depicted, composite material manufacturing system 208 can take a number of forms. For example, composite material manufacturing system 208 can be selected from at least one of a carbon fiber prepreg coating line, a reinforcing fiber resin impregnation line, a resin mix process system, a resin filming line, a prepreg system, a slitting process system, and other suitable types of composite material manufacturing systems.

As depicted, composite material management system 202 comprises computer system 210 and composite material manager 212. Composite material manager 212 is located in computer system 210.

Composite material manager 212 can be implemented in software, hardware, firmware or a combination thereof. When software is used, the operations performed by composite material manager 212 can be implemented in program instructions configured to run on hardware, such as a processor unit. When firmware is used, the operations performed by composite material manager 212 can be implemented in program instructions and data and stored in persistent memory to run on a processor unit. When hardware is employed, the hardware can include circuits that operate to perform the operations in composite material manager 212.

In some examples, including the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system 210 is a physical hardware system and includes one or more data processing systems. When more than one data processing system is present in computer system 210, those data processing systems are in communication with each other using a communications medium. The communications medium can be a network. The data processing systems can be selected from at least one of a computer, a server computer, a tablet computer, or some other suitable data processing system.

As depicted, computer system 210 includes a number of processor units 214 that are capable of executing program instructions 216 implementing processes in some examples, including the illustrative examples. As used herein a processor unit in the number of processor units 214 is a hardware device and is comprised of hardware circuits such as those on an integrated circuit that respond and process instructions and program code that operate a computer. When a number of processor units 214 execute program instructions 216 for a process, the number of processor units 214 is one or more processor units that can be on the same computer or on different computers. In other words, the process can be distributed between processor units on the same or different computers in a computer system. Further, the number of processor units 214 can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

In some examples, including this illustrative example, composite material manager 212 is configured to receive sensor data 218 from sensor system 220 for composite material manufacturing system 208. Sensor data 218 can take a number of different forms. For example, sensor data 218 can be comprised from at least one of a component temperature, an unconsolidated composite material temperature, an ambient temperature, a humidity, a roller speed, a speed of the unconsolidated composite material, a pressure between a pair of rollers, a gap between the pair of rollers, an unconsolidated composite material thickness, a Fourier transform infrared (FTIR) spectra, Raman spectroscopy data, spectroscopy data, a material width, a fiber web width, a material areal weight, a fiber areal weight, a resin viscosity, an electrical measurement across a dimension of the unconsolidated composite material, a voltage across the dimension of the unconsolidated composite material, an electromagnetic measurement across the dimension of the unconsolidated composite material, an acoustic measurement across the dimension of the unconsolidated composite material, a tension, or an image of a prepreg at a location in the composite material manufacturing system.

In some examples, including this illustrative example, sensor system 220 for composite material manufacturing system 208 can be considered part of composite material management system 202, composite material manufacturing system 208, or both. Sensor system 220 can operate to generate sensor data 218 about at least one of unconsolidated composite material 204 or composite material manufacturing system 208 during the operation of composite material manufacturing system 208. Sensor data 218 can be information about unconsolidated composite material 204 being manufactured by composite material manufacturing system 208. Sensor data 218 is received during manufacturing of unconsolidated composite material 204 by composite material manufacturing system 208. Sensor data 218 is generated by sensor system 220 in real time and is sent to composite material manager 212 in real time.

Sensor system 220 comprises sensors 222. As depicted, sensors 222 are in locations 209 relative to composite material manufacturing system 208. Locations 209 can be on, in, or proximate to composite material manufacturing system 208. In some examples, including this example, sensors 222 can be selected from at least one of a temperature sensor, a camera, infrared camera, a thermal camera, line scan camera, a tension sensor, a density sensor, a drop gauge, an infrared sensor, a noncontact laser distance sensor, a beta gauge, a speed sensor, a Fourier transform infrared (FTIR) spectrometer, Raman spectrometer, a force detector, a linear variable differential transformer (LVDT) sensor, a rotary third differential transformer (RVDT) sensor, a thickness sensor, a gap width sensor, a viscometer, a light reflecting sensor, an electrical conductivity sensor, an electrical resistance sensor, a capacitance sensor, an electromagnetic sensor, an acoustic sensor, a humidity sensor, a laser Doppler sensor, or other suitable sensors.

As depicted, composite material manager 212 determines a set of predicted properties 224 for a number of portions 226 of unconsolidated composite material 204 as completed from manufacturing by composite material manufacturing system 208 using sensor data 218.

The number of portions 226 of unconsolidated composite material 204 can be a part or all of portions 226 of unconsolidated composite material 204. In some examples, including this depicted example, unconsolidated composite material 204 as completed from manufacturing by composite material manufacturing system 208 forms completed product 255, which can be used to manufacture composite part 205. The number of portions 226 can be sections of unconsolidated composite material 204. For example, the number of portions 226 can be pieces or sections of prepreg that form a prepreg roll. These portions can have the same or different lengths.

In some examples, including this example, composite material manager 212 can predict a set of properties 228 that portions 226 of unconsolidated composite material 204 will have when manufacturing of unconsolidated composite material 204 is complete. In other words, this prediction is made while portions 226 of unconsolidated composite material 204 is still being manufactured. Different portions in portions 226 can be in different states or stages of manufacturing in composite material manufacturing system 208.

The set of properties 228 can take a number of different forms. For example, the set of properties 228 comprises at least one of a prepreg fiber areal weight, prepreg resin content, prepreg thickness, prepreg infiltration level, a prepreg tack level, resin film areal weight, resin film thickness, release liner areal weight, release liner thickness, or a laminate structural property.

Composite material manager 212 identifies quality level 230 for the number of portions 226 of unconsolidated composite material 204 based on the set of predicted properties 224 for the number of portions 226 of unconsolidated composite material 204. This identification of quality level 230 is predicted quality level 232. In other words, quality level 230 is determined using predicted properties 224. Actual testing of the number of portions 226 can be performed to determine actual properties for determining the actual quality level.

In some examples, including this illustrative example, the determination of the set of predicted properties 224 can be made by composite material manager 212 using a set of models 233. The set of models 233 can include at least one of a set of machine learning models 234, a set of physics models 235, a set of hybrid models 237, or other suitable type of models. In some examples, including this illustrative example, any combination of models 233 can be used to predict properties 228.

When a set of machine learning models 234 are used, the set of machine learning models 234 can be trained to predict properties 228 for a particular type of unconsolidated composite material 204 using sensor data 218. A machine learning model is a type of artificial intelligence model and is a data driven model that can learn without being explicitly programmed. A machine learning model can learn based on training data input into the machine learning model. The machine learning model can learn using various types of machine learning algorithms. The machine learning algorithms include at least one of a supervised learning, and unsupervised learning, a feature learning, a sparse dictionary learning, an anomaly detection, a reinforcement learning, a recommendation learning, or other types of learning algorithms.

Examples of machine learning models include an artificial neural network, a decision tree, a support vector machine, a random forest machine learning model, a regression machine learning model, a classification machine learning model, a Bayesian network, and other types of models. These machine learning models can be trained using data and process additional data to provide a desired output.

For example, machine learning model 236 can be trained to determine predicted properties 224 for unconsolidated composite material 204 such as prepreg using training dataset 240. Training dataset 240 can be created using historical sensor data 242 received from composite material manufacturing system 208 for manufacturing unconsolidated composite material 204 in the form of a prepreg. Training dataset 240 can include labels in the form of historical properties 244. Historical properties 244 can be determined from measurements made of unconsolidated composite material 204 at different locations in composite material manufacturing system 208. In other words, historical properties 244 can include properties 228 of unconsolidated composite material 204 when manufacturing of unconsolidated composite material 204 has been completed.

Additionally, training dataset 240 can also include historical upstream information 245. Historical upstream information 245 can be associated with historical sensor data 242 generated when manufacturing an unconsolidated composite material in which the manufacturing process includes historical upstream information. Historical upstream information 245 can include information about components or settings used in manufacturing unconsolidated composite materials. For example, historical upstream information 245 can be selected from at least one of reinforcement information, fiber information, reinforcement sizing information, resin information, release liner information, resin film information, or other suitable information that may be measured to generate historical sensor data 242.

Properties 228 of interest can take a number of different forms depending on the type of unconsolidated composite material 204. For example, when unconsolidated composite material 204 is a prepreg, properties 228 can include at least one of thickness, fiber areal weight (FAW), resin weight content (RC), prepreg areal weight (PAW), water pickup, tack, pucker, or other properties of interest for unconsolidated composite material 204 in the form prepreg.

With the use of machine learning model 236 to determine predicted properties 224, composite material manager 212 can predict these properties prior to completing manufacturing of unconsolidated composite material 204. In other words, predicted properties 224 for unconsolidated composite material 204 in a completed or manufactured state can be made during different locations in different times during the manufacturing of unconsolidated composite material 204.

In other examples, a set of physics models 235 can be used to determine predicted properties 224 for unconsolidated composite material 204. In some examples, including this example, physics model 239 in the set of physics models 235 is a mathematical model that contains equations that can describe the effects of actions performed on materials to manufacture unconsolidated composite material based on at least mathematical equations. These actions can be, for example, in response to parameters such as heat, tension, pressure, force, or other parameters in sensor data 218.

The set of physics models 235 can take a number of different forms. For example, the set of physics models can be selected from at least one of a machine dynamics thermal and mechanical model, a resin infiltration model, a Darcy infiltration model including viscosity, a resin flow model, a cure kinetics model, a finite element analysis (FEA) model of infiltration, a finite element analysis (FEA) model of layup and other suitable types of physics based models.

The set of hybrid models 237 are hybrid physics based and data driven models that use both physics components and machine learning components. In some examples, including this example, hybrid models 237 combines physics (real time software) or measured data along with learned/predicted data into a single model such that the distribution/noise for the sensors embedded in the predictions along with other items being evaluated.

Statistical models 243 can also be present in models 233. Statistical models 243 can be selected from at least one of a Kalman filter, an extended Kalman filter, an unscented Kalman filter, or other suitable statistical models. For example, Kalman filters can be used with noisy data to estimate the property of a system that is being measured to increase the accuracy of the estimate of the property being measured.

When determining predicted properties 224 for a number of portions 226 of unconsolidated composite material 204, composite material manager 212 can determine quality level 230 for the number of portions 226 of unconsolidated composite material 204 using the set of predicted properties 224 determined for the number of portions 226 of unconsolidated composite material 204. In some examples, including this illustrative example, different portions in portions 226 can have a different quality level from other portions.

With the identification of quality level 230, composite material manager 212 can perform a number of actions 241. Depending on quality level 230 identified for each portion in the number of portions 226, a different action in actions 241 can be performed for that portion.

Further, other information can be used in addition to sensor data 218 for determining predicted properties 224 for the number of portions of unconsolidated composite material 204. For example, upstream information 246 can be used with sensor data 218 by composite material manager 212 to determine predicted properties 224 for the number of portions 226. Upstream information 246 can be selected from at least one of reinforcement information, fiber information, reinforcement sizing information, resin information, release liner information, resin film information, or other suitable information that can be used with sensor data 218 to determine predicted properties 224 for number of portions 226 of unconsolidated composite material 204.

Models 233 can operate as digital twin 203 and can be used by composite material manager 212 to determine predicted properties 224 for a number of portions 226 of unconsolidated composite material 204. As a result, the placement of sensors 222 in sensor system 220 in locations 209 for composite material manufacturing system 208 can provide sensor data 218 used by models 233 for digital twin 203 to predict a number of properties 228 for a number of portions 226 of unconsolidated composite material 204. Using models 233 as digital twin 203 enables real time inspection and certification of a number of portions 226 of unconsolidated composite material 204 that can identify properties 228 of the number of portions 226 of unconsolidated composite material 204 without having to sample the number of portions 226 of unconsolidated composite material 204. If actual testing is desired, the identification of portions 226 of unconsolidated composite material 204 can be tested to verify the predictions if needed.

Further, any combination of different types of models 233 can be used to provide increased accuracy in predicted properties 224. For example, a first set of initial predicted properties 251 can be determined for a portion of unconsolidated composite material 204 from the machine learning model 236 generated using sensor data 218. A second set of initial predicted properties 251 can be determined for the same portion of unconsolidated composite material 204 from physics model 239 generated using sensor data 218. The set of predicted properties 224 for the portion of unconsolidated composite material 204 can be determined from a fusion of the first set of initial predicted properties and the second set of initial predicted properties.

With the determination of the set of predicted properties, composite material manager 212 can determine quality level 230 for a number of portions 226 of unconsolidated composite material 204 using the set of predicted properties 224. Quality level 230 is predicted quality level 232 that the number of portions 226 of unconsolidated composite material 204 is predicted or expected to have when manufacturing of the number of portions 226 has been completed and the number of portions 226 of unconsolidated composite material 204 forms completed product 227.

Composite material manager 212 can perform a number of actions 241 based on quality level 230 predicted for the number of portions 226 of unconsolidated composite material 204. In some examples, including this example, quality level 230 is determined using the number of predicted properties 224 for the number of portions 226 of unconsolidated composite material 204. For example, the number of actions 241 can include corrective action 291. Composite material manager 212 can perform corrective action 291 based on quality level 230 for a number of portions 226 of unconsolidated composite material 204.

In some examples, including this depicted example, corrective action 291 can be performed prior to completing manufacturing of the number of portions 226 of unconsolidated composite material 204 to form completed product 227. In some examples, including the illustrative example, manufacturing of the number of portions 226 of unconsolidated composite material 204 can be completed prior to or after other portions in portions 226 of unconsolidated composite material 204. In other words, number of portions 226 of unconsolidated composite material 204 can be completed product 227 while other portions are not yet completed product 227 and are still being processed within composite material manufacturing system 208.

As a result, increased number of portions 226 of unconsolidated composite material 204 can be used for manufacturing composite part 205 when corrective action 291 is performed. For example, at least one of discarding, reworking, or recycling the number of portions 226 can be avoided by performing corrective action 291 prior to completing manufacturing a number of portions 226 of unconsolidated composite material 204.

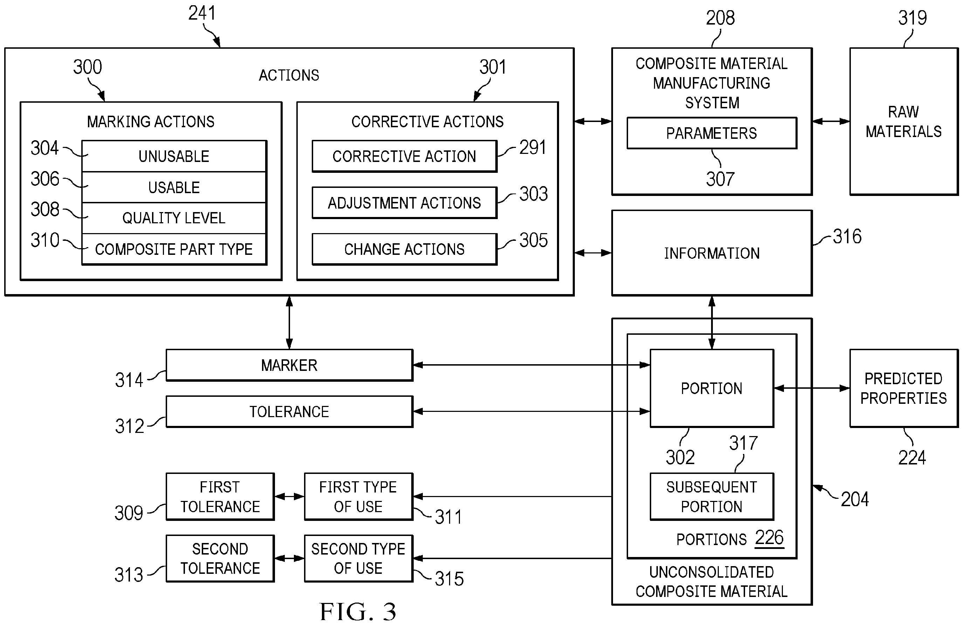

With reference next to Figure 3, an illustration of a block diagram of actions that can be taken using predicted properties for portions of an unconsolidated composite material is depicted in accordance with an illustrative example. In some examples, including the illustrative examples, the same reference numeral may be used in more than one figure. This reuse of a reference numeral in different figures represents the same element in the different figures.

As depicted, actions 241 can take a number of different forms. For example, actions 241 can be performed for the number of portions 226 of unconsolidated composite material 204 as manufacturing of the number of portions 226 are completed.

Actions 241 can include marking actions 300. As depicted, marking actions 300 can include marking portion 302 of unconsolidated composite material 204 in the number of portions 226 as unusable 304, usable 306, quality level 308, and composite part type 310.

In some examples, including this example, unusable 304 is an action in which composite material manager 212 marks portion 302 of unconsolidated composite material 204 in the number of portions 226 of unconsolidated composite material 204 as unusable based on quality level 230 for portion 302 being out of tolerance 312. In some examples, including this example, tolerance 312 can be a range or a threshold for one or more properties 228 of portion 302 that are considered acceptable or tolerable. The property or properties of interest that are in tolerance 312 can be used to determine whether quality level 308 for portion 302 is acceptable.

As depicted, usable 306 is an action in which composite material manager 212 marks portion 302 of unconsolidated composite material 204 in the number of portions 226 of unconsolidated composite material 204 as usable based on quality level 230 for portion 302 being in tolerance 312. Quality level 308 is an action in which composite material manager 212 marks portion 302 of unconsolidated composite material 204 in the number of portions 226 of unconsolidated composite material 204 with the quality level identified for portion 302.

As another example, composite part type is an action in which composite material manager 212 marks portion 302 of unconsolidated composite material 204 in the number of portions 226 of unconsolidated composite material 204 with an identification of the type of composite part that portion 302 can be used to manufacture. For example, the quality level may be such that the portion 302 is unsuitable for use for the intended type of composite part. However, the quality level may be such that portion 302 can be used to manufacture another type of composite part. As a result, portion 302 can still be used rather than discarded or recycled.

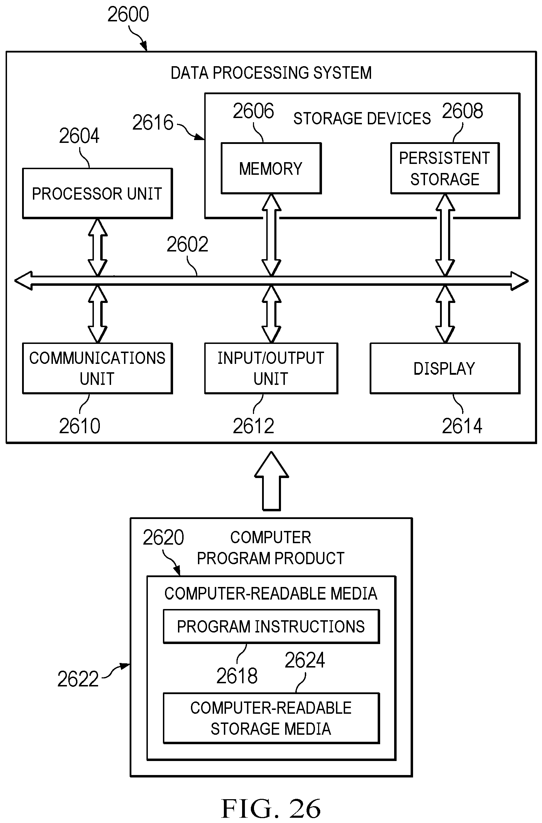

The identification of these actions can be marked on portion 302 using marker 314. Marker 314 can be an identifier such as a radiofrequency (RFID) identifier, a microdot, a set of quantum dots, an ink mark, a barcode, a quick response (QR) code, or some other suitable type of marker. Marker 314 can identify the action. Marking actions 300 can also include recording information 316 about portion 302 using marker 314. For example, the information can include the length of portion 302, location of portion 302 in unconsolidated composite material 204, quality level, predicted properties 224, shelf life, or other information about portion 302. Information 316 can be determined from predicted properties 224 for portion 302. Marker 314 and marking actions 300 also include recording the position on the roll or recording information 316 about portion 302 in a memory 2606 as shown in Figure 26 for later correlation of quality of portion 302 to a position on a roll. One example of this use is to print out position information that designates the quality on the roll at specific positions on the roll. In other words, marking can include at least one of indicating or recording information in a record or log about the quality in addition to or in place of actually marking portion 302 itself. As a result, the result of marking can also be a printout or a thumb drive that accompanies each roll with the "marking".

In some examples, including this illustrative example, actions 241 can also include corrective actions 301. Corrective actions 301 are actions 241 that can be performed on a number of portions 226 including portion 302. In some examples, including this illustrative example, corrective action 291 in the set of corrective actions 301 can be performed by composite material manager 212 in response to the set of predicted properties 224 for the number of portions 226 being out of tolerance 312 specified for unconsolidated composite material 204.

These corrective actions can be performed in an effort to change the set of predicted properties 224 for the number of portions 226 such that the set of predicted properties 224 are within a tolerance 312 for the number of portions 226 when manufacturing of the number of portions 226 of unconsolidated composite material 204 as completed to form completed product 227.

As depicted, corrective actions 301 can take a number of different forms. For example, corrective actions 301 can include at least one of adjustment actions 303, change actions 305, or some other suitable corrective actions.

For example, when corrective action 291 in corrective actions 301 takes the form of adjustment actions 303, composite material manager 212 can adjust a set of parameters 307 in the composite material manufacturing system 208 to change the set of predicted properties for the number of portions of the unconsolidated composite material in response to the set of predicted properties 224 for number of portions 226 being out of tolerance 312 specified for unconsolidated composite material 204.

In some examples, including this depicted example, set of parameters for composite material manufacturing system 208 can take a number of different forms. For example, the set of parameters 307 can be selected from at least one of a speed, a torque, a voltage, a current, a gap, a nip gap, a force, a tension, a thickness at a location, a pressure or other suitable parameters that can be set in composite material manufacturing system 208.

For example, corrective action 291 can be adjusting a set of parameters 307 in composite material manufacturing system 208. Adjustment of the set of parameters 307 can be such that the set of predicted properties 224 for the number of portions 226 of unconsolidated composite material 204 is within tolerance 312 for the unconsolidated composite material 204.

In yet other examples, adjustments may not make the set of predicted properties 224 fall within tolerance 312 for the number of portions 226 of unconsolidated composite material 204 to meet tolerance 312 for the specified use for unconsolidated composite material 204. In some examples, including this depicted example, the set of predicted properties 224 for the number of portions 226 of unconsolidated composite material 204 is outside of first tolerance 309 for a first type of use 311 of unconsolidated composite material 204.

In this case, performing corrective action 291 based on quality level 230 for the number of portions 226 of unconsolidated composite material 204 comprises adjusting a set of parameters 307 in composite material manufacturing system 208 such that the set of predicted properties 224 for the number of portions 226 of unconsolidated composite material 204 is within second tolerance 313 for second type of use 315 of unconsolidated composite material 204.

For example, first type of use 311 can be for using unconsolidated composite material 204 in a skin panel. Second type of use 315 can be for using unconsolidated composite material 204 in a monument within an aircraft.

This type of corrective action 291 can also be performed to create some portions of unconsolidated composite material 204 for second type of use 315 instead of first type of use 311. In other words, this action can also be performed even when a set of predicted properties 224 is within tolerance 312. As a result, when the need arises for unconsolidated composite material 204 for second type of use 315, some of unconsolidated composite material 204 manufactured for first type of use 311 can be diverted for second type of use 315.

In other illustrative examples, corrective action 291 can comprise adjusting a set of parameters 307 in composite material manufacturing system 208 such that the set of predicted properties 224 for subsequent portion 317 to the number of portions 226 of unconsolidated composite material 204 is within second tolerance 313 for unconsolidated composite material 204 in response to the set of predicted properties 224 for the number of portions 226 being out of tolerance 312 specified for unconsolidated composite material 204. This type of corrective action can be performed when changing parameters 307 will not cause the number of portions 226 of unconsolidated composite material 204 to have a set of predicted properties 224 that fall within tolerance 312. However, this corrective action can be used to cause later portions of unconsolidated composite material 204 to have a set of predicted properties 224 that fall within tolerance 312. As a result, a marking action is still performed for the number of portions 226 in some examples, including this example.

In other illustrative examples, corrective action 291 can be a change action in change actions 305. For example, corrective action 291 can change a number of raw materials 319 used to form unconsolidated composite material 204. The change in the number of raw materials 319 is such that the set of predicted properties 224 for subsequent portions can be the number of portions 226 of unconsolidated composite material 204 that is within tolerance 312 for unconsolidated composite material 204 in response to the set of predicted properties 224 for the number of portions 226 being out of tolerance 312 specified for the unconsolidated composite material 204.

With some examples, including this illustrative example, a raw material in raw materials 319 can be any material that is used by composite material manufacturing system 208 to manufacture unconsolidated composite material 204. For example, the number of raw materials 319 can be selected from at least one of a resin, a paper, a film, a fabric, a tow, a spread tow fabric, a fiber type, a tow size, a fiber size, or other material used to manufacture unconsolidated composite material 204.

In some illustrative examples, multiple corrective actions can be taken. For example, both an adjustment action and a change action can be performed.

In some illustrative examples, one or more solutions are present that overcome a problem with an inability to determine properties of unconsolidated composite materials as quickly as desired. One or more illustrative examples can enable predicting properties of different portions of unconsolidated composite materials before manufacturing of those portions have been completed. With this type of prediction, action such as marking different portions or performing other actions may be made more quickly than testing samples after manufacturing of the unconsolidated composite materials has been completed.

Computer system 210 can be configured to perform at least one of the steps, operations, or actions described in the different illustrative examples using software, hardware, firmware or a combination thereof. As a result, computer system 210 operates as a special purpose computer system in which composite material manager 212 in computer system 210 enables predicting properties of an unconsolidated composite material during manufacturing of the unconsolidated composite material before the manufacturing of unconsolidated composite material has completed. The use of real time data about the unconsolidated composite material during manufacturing of the unconsolidated composite material enables determining predicted properties for the unconsolidated composite material during manufacturing of the unconsolidated composite material. Further, using a machine learning model enables determining predicted properties of the unconsolidated composite material before manufacturing of the unconsolidated composite material has been completed. In other words, determination of the predicted properties does not require sampling and testing the unconsolidated composite material after manufacturing of unconsolidated composite material has been completed. Further this determination cannot be performed by a human operator quickly enough to obtain the prediction of the properties for the unconsolidated composite material before manufacturing of unconsolidated composite material has been completed.

In particular, composite material manager 212 transforms computer system 210 into a special purpose computer system as compared to currently available general computer systems that do not have composite material manager 212.

In some examples, including the illustrative example, the use of composite material manager 212 in computer system 210 integrates processes into a practical application for manufacturing an unconsolidated composite material that increases the performance of computer system 210 in predicting properties 228 for portions 226 of unconsolidated composite material 204. In other words, composite material manager 212 in computer system 210 is directed to a practical application of processes integrated into composite material manager 212 in computer system 210 that generate predictions of properties 228 for unconsolidated composite material 204 in real time such that actions 241 can be taken more quickly with respect to unconsolidated composite material 204. This process using composite material manager 212 to generate predicted properties 224 using models 233 from sensor data 218 received in real time can be performed in real time to obtain predicted properties 224 before manufacturing unconsolidated composite material 204 is complete, which is not possible with human operators analyzing sensor data 218 by hand.

In some examples, including this illustrative example, composite material manager 212 in computer system 210 enables predicting properties for unconsolidated composite material such as prepreg or resin coated film, before completing manufacturing of the unconsolidated composite material. As a result, actions can be performed on the portions as the manufacturing of those portions are being completed.

For example, the different portions of the unconsolidated composite material can be marked as different portions are completed to indicate suitability or quality of those portions of the unconsolidated composite material. Composite material manager 212 provides a practical application of managing unconsolidated composite materials as the unconsolidated composite materials are manufactured using sensor data 218 obtained from different locations in locations 209 for composite material manufacturing system 208. Predicted properties 224 can be used to mark portions 226 of unconsolidated composite material 204. The marking can be performed based on predicted quality level 232 using predicted properties 224.

This type of management is in contrast to current techniques that may take a sample of a prepreg material in a role to determine the quality of the entire roll. Composite material manager 212 provides an improvement in which this determination can be made for different portions of the prepreg roll and can be performed as the prepreg roll is being manufactured. As a result, the reduction in amount of time needed to manufacture unconsolidated composite materials is realized using composite material manager 212 to predict quality level portions of unconsolidated composite material.

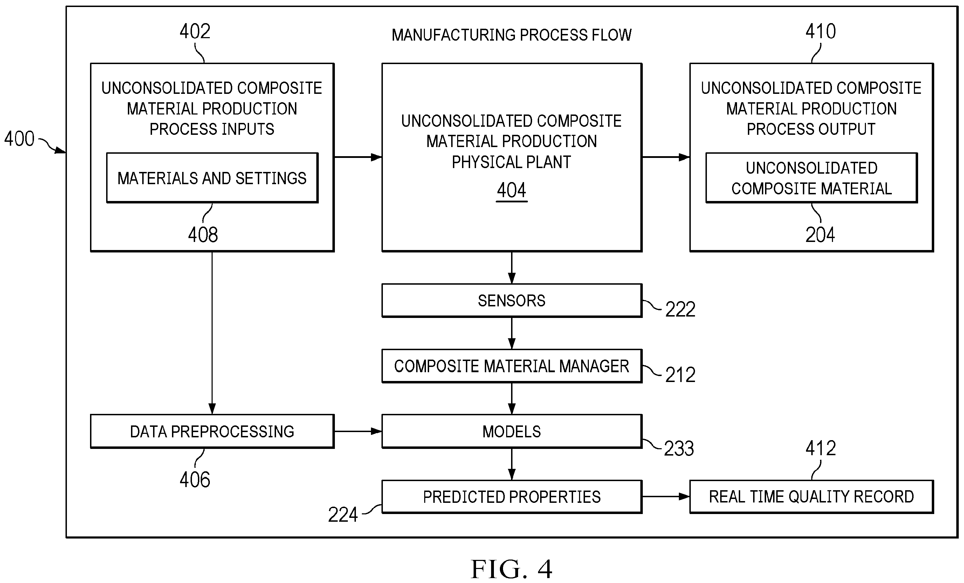

With reference next to Figure 4, an illustration of a manufacturing process flow for manufacturing unconsolidated composite materials is depicted in accordance with an illustrative example. In some examples, including this example, manufacturing process flow 400 begins with unconsolidated composite material production process inputs 402 being made to unconsolidated composite material production physical plant 404 and to data preprocessing 406. These inputs in unconsolidated composite material production process inputs 402 include materials and settings 408. In some examples, including this example, materials and settings 408 are information that identify materials to be used in manufacturing unconsolidated composite material 204. When unconsolidated composite material 204 is prepreg, the materials can be for example, fiber type, fiber size, resin film specifications, reinforcement information, fiber information, reinforcement sizing information, resin information, release liner information, resin film information, or other suitable information about materials used to manufacture the prepreg.

The settings can be information such as temperature, pressure, tension, and other information that can be used for settings or to configure a composite material manufacturing system in unconsolidated composite material production physical plant 404 to manufacture the prepreg. Materials and settings 408 can be part of upstream information 246.

With materials and settings 408 as an input, unconsolidated composite material production physical plant 404 can perform manufacturing operations to generate unconsolidated composite material production process output 410 in the form of unconsolidated composite material 204. These operations can be performed using equipment such as composite material manufacturing systems in the plant. In some examples, including this example, portions of unconsolidated composite material 204 can be output as unconsolidated composite material production process output 410 as manufacturing of portions of unconsolidated composite material 204 are completed.

Data preprocessing 406 can be a component located in computer system 210 that processes unconsolidated composite material production process inputs 402 for use by a number of models 233 to determine predicted properties 224. For example, data preprocessing 406 can process materials and settings 408 to form upstream information 246 that is input into the number of models 233.

Sensors 222 monitors the manufacturing of unconsolidated composite material 204 in real time as unconsolidated composite material 204 is being manufactured and sends sensor data to composite material manager 212 in real time as unconsolidated composite material 204 is being manufactured. Composite material manager 212 acquires sensor data from sensors 222 and sends that sensor data into a number of models 233.

In some examples, including this example, the sensor data can be sent to a single model in models 233 or multiple models in models 233. When the number of models 233 is a single model, the model can be a machine learning model. When the number of models 233 is multiple models, those models can be, for example, two machine learning models, a machine learning model and a physics model, or some combination of models. When more than one model in models 233 is used, the outputs of those models can be compared to identify a best prediction for predicted properties 224 or combined or fused to form predicted properties 224.

Models 233 generate predicted properties 224. This prediction is made in real time prior to the completion of manufacturing of unconsolidated composite material 204. For example, predicted properties 224 can be for a portion of unconsolidated composite material 204 for which manufacturing has not been completed. In other words, predicted properties 224 can be determined for the portion of unconsolidated composite material 204 prior to that portion being output as a completed product. The completed product can be used to manufacture composite part 205.

In some examples, including this example, predicted properties 224 can be used to perform an action in actions 241 in the form of real time quality record 412. This record can be used to track portions of unconsolidated composite material 204 for performing additional manufacturing operations to manufacture other unconsolidated composite materials or composite parts.

The illustration of composite manufacturing environment 200 in Figures 2-4 is not meant to imply physical or architectural limitations to the manner in which an illustrative example can be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, composite material manager 212 can be used to predict properties of one or more unconsolidated composite materials in addition to unconsolidated composite material 204. These other unconsolidated composite materials can be manufactured using other composite material manufacturing systems in addition to composite material manufacturing system 208. Further, the additional unconsolidated composite materials manufactured using composite material manufacturing systems can be different types of unconsolidated composite materials manufactured using different types of composite material manufacturing systems.

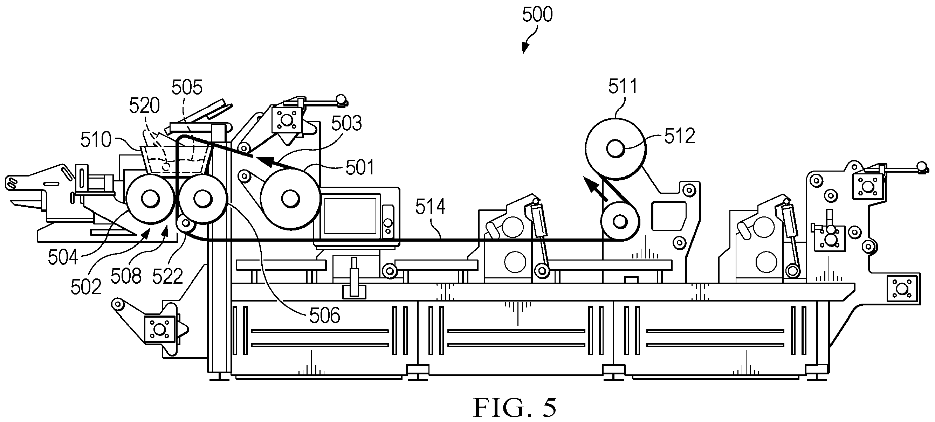

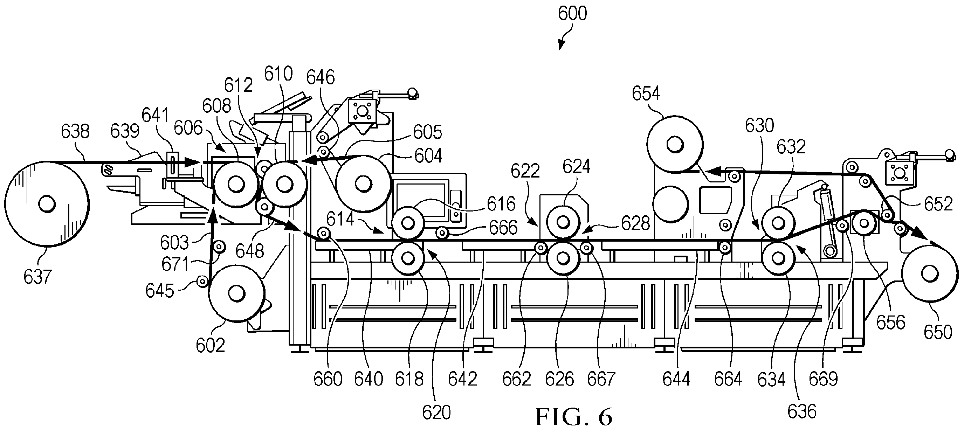

Figure 5 and Figure 6 are examples of composite material manufacturing systems that can be used to implement composite material manufacturing system 208 in Figure 2. A sensor system can be added to these composite material manufacturing systems or existing sensor systems can be augmented to include one or more sensors in configurations that can generate the sensor data needed to predict properties for unconsolidated composite materials as the unconsolidated composite materials are being manufactured by these composite material manufacturing systems.

With reference now to Figure 5, an illustration of a composite material manufacturing system configured for performing a filming process is depicted in accordance with an illustrative example. Composite material manufacturing system 500 is shown in block form in Figure 2.

As depicted, composite material manufacturing system 500 is configured to perform a filming process in which resin is coated onto film paper.

In some examples, including this example, unfilmed paper roll 501 feeds paper 503 into nip 502. A nip comprises a pair of rollers with a gap set between the rollers. As depicted, nip 502 comprises roller 504 and roller 506 with gap 508 between roller 504 and roller 506. The gap can be fixed or changed to provide constant pressure.

Resin 505 is heated and located in resin dams 510 that sit on roller 504 and roller 506. Resin dams 510 feeds resin 505 into gap 508 while paper 503 is pulled through gap 508 and onto filmed paper roll 511 by paper rewinder 512. Paper 503 becomes filmed paper 514 as resin 505 from resin dams 510 coats paper 503 at gap 508. Filmed paper 514 is collected on filmed paper roll 511.

In some examples, including this illustrative example, the properties of filmed paper 514 can be predicted using sensor data generated by a sensor system for composite material manufacturing system 500. For example, the sensor system can measure tension on paper 503, the speed at which paper 503 moves, a gap width of gap 508, resin viscosity of resin 505 in resin dams 510, basis/areal weight, and other parameters. The gap width of gap 508 and resin viscosity of resin in resin dams 510 can affect how much resin is coated onto paper 503 to form filmed paper 514. Resin viscosity is the thickness of the liquid resin and is typically measured in centipoise (cP).

Resin viscosity of resin 505 in resin dams 510 can be measured using a sensor 520 in resin dams 510. Sensor 520 can be a viscometer. The measurement of resin viscosity with the gap width of gap 508 can be used to predict the thickness of resin 505 on filmed paper 514. As another example, resin viscosity can be determined using dielectric measurements. For example, sensor 520 can apply an oscillatory voltage to resin 505 in resin dams 510 and measure the current. This type of measurement can also be made by sensor 522 located just after gap 508 in which sensor 522 applies an oscillatory voltage and measures current. This measurement can be used to predict the amount of resin that will be present on filmed paper 514 that is collected on filmed paper roll 511.

When creating a training dataset, the sensor data can be labeled with actual measurements of resin on filmed paper 514. For example, the paper from each roll can be premeasured at the beginning at unfilmed paper roll 501 and at the end at filmed paper roll 511. The weights of the two rolls can be subtracted to obtain the weight difference to determine the amount of resin. This measurement provides the overall resin on all of filmed paper 514 and not portions of filmed paper 514. Samples for portions can be taken in which a fixed area of paper is cut out and weighed for different portions. The weight of the paper is known and that weight can be subtracted to measure the weight of the sample to determine the weight of the resin. The difference between the paper and resin can be identified to obtain the amount of resin on the sample.

Turning to Figure 6, an illustration of a composite material manufacturing system configured for performing a prepreg production process is depicted in accordance with an illustrative example. In some examples, including this example, composite material manufacturing system 600 is another example of an implementation of composite material manufacturing system 208 shown in block form in Figure 2. Composite material manufacturing system 600 is configured to manufacture an unconsolidated composite material in the form of prepreg. The prepreg can be manufactured using a hot melt prepregging process or a solvent-based prepreg process.

As depicted, composite material manufacturing system 600 has two filmed rolls, filmed roll 1 602 and filmed roll 2 604. The filmed paper on these rolls is paper with resin. For example, filmed roll 1 602 is a source of filmed paper 603 and filmed roll 2 604 is a source of filmed paper 605. These filmed rolls can be manufactured using composite material manufacturing system 500 in Figure 5.

In some examples, including this example, composite material manufacturing system 600 has four nips. Nip1 606 has roller 608 and roller 610 with nip1 gap 612 between these two rollers. Nip2 614 has roller 616 and roller 618 with nip2 gap 620. Nip3 622 has roller 624 and roller 626 with nip3 gap 628. Nip4 630 has roller 632 and roller 634 with nip 1 gap 636. In some examples, including this illustrative example, these nips operate as squeeze points where pressure can be applied to materials traveling through the nips.

As depicted, hotplate 640 and hotplate 642 are present in composite material manufacturing system 600. This system also has cold plate 644.

In some examples, including this illustrative example, nip1 606, nip2 614, nip3 622, nip4 630, hotplate 640, and hotplate 642 are kept at set temperatures. The temperatures of each of these components can be set separately from other components. In other words, the temperature of nip 1 606 can be set to a different temperature from nip2 614.

In some examples, including this illustrative example, fiber creel 637 is a source of fibers 638. These fibers are fed through comb 639 and onto spreader bars 641 before being moved into nip1 606.

As depicted, filmed paper 603 and filmed paper 605 both move into nip1 606 from filmed roll 1 602 and filmed roll 2 604, respectively. Brake 645 on filmed roll 1 602 maintains tension for filmed paper 603, and brake 646 on filmed roll 2 604 maintain tension for filmed paper 605 such that prepreg 648 does not go slack.

The side of filmed paper 603 and the side of filmed paper 605 having resin faces fibers 638. In some examples, including this example, the temperature and pressure are applied by nip 1 606 to cause the resin to infiltrate from filmed paper 603 and filmed paper 605 into fibers 638 at nip1 606.

For example, the width of nip1 gap 612 in nip1 606 is selected to apply pressure to fibers 638 sandwiched between the resin on filmed paper 603 and filmed paper 605. Further, roller 608 and roller 610 for nip 1 606 has a temperature selected to heat fibers 638 and the resin on filmed paper 603 and filmed paper 605. At least one of heat or pressure causes the resin to infiltrate fibers 638 to form prepreg 648 when fibers 638, filmed paper 603, and filmed paper 605 exit nip1 606.

The other nips, nip2 614, nip3 622, and nip4 630, can have nip gaps and roller temperatures set to provide the desired amount of pressure and heating as prepreg 648 travels in composite material manufacturing system 600 to prepreg roll 650. The nip gap and roller temperatures can change the viscosity of the resin and in turn change the speed of the infiltration process. Hotplate 640 is located between nip 1 606 and nip2 614, and hotplate 642 is located between nip2 614 and nip3 622. This hotplate heats prepreg 648 as prepreg 648 travels between nips. Cold plate 644 is located after nip3 622 and before nip4 630. This cold plate can lower the temperature of prepreg 648. Cold plate 644 can reduce the temperature which increases the viscosity of the resin to reduce or stop the infiltration process of resin into the fibers.

The width of prepreg 648 can be set by slitters 656 before filmed paper 605 is removed. At roller 652, filmed paper 605 is removed and wound onto paper roll 654. Prepreg 648 is now comprised of fibers 638 infused with resin on filmed paper 603 and wound onto prepreg roll 650.

In some examples, including this illustrative example, sensors can be located at different locations between points in composite material manufacturing system 600. In some examples, including this illustrative example, these points can be processing points where actions can be performed to manufacture prepreg 648. These processing points can be, for example, nip 1 606, nip2 614, nip3 622, or nip4 630. Other processing points can be hotplate 640, hotplate 642, or cold plate 644 where heat or cold is applied to prepreg 648 to heat or cool prepreg 648.

These processing points can change properties of prepreg 648 as prepreg 648 is manufactured until prepreg 648 is in its final form at prepreg roll 650. Sensors can be located between these points and can be used to predict the properties of prepreg 648 as completed from manufacturing prepreg 648 at prepreg roll 650. In other words, with sensor data from sensors between these processing points, predicted properties can be determined for prepreg 648 at prepreg roll 650 from other locations in composite material manufacturing system 600 prior to prepreg roll 650.

For example, sensor location 660 is located between nip1 606 and nip2 614. As another example, sensor location 662 is located between nip2 614 and nip3 622, and sensor location 664 is located between nip3 622 and hotplate 640. As yet another example, sensor location 666 is located between nip2 614 and hotplate 642. As yet another example, sensor location 667 is located between nip3 622 and cold plate 644.

In some examples, including this example, another sensor location, sensor location 671, can be located between filmed roll 1 602 and nip1 606. In other examples, sensor location 669 is located between nip4 630 and prepreg roll 650. The sensor location is an example of a sensor location that can be used even though the location is not between two processing points. Sensor data about filmed paper 603 can be used in predicting properties of prepreg 648 at prepreg roll 650.

In some examples, including this example, composite material manufacturing system 600 is a hotmelt film prepreg system. This illustrative prepreg system is not meant to limit the types of prepreg systems that can be used. Other examples can encompass those other types of prepreg systems that utilize bath, slurry, spray, or other mechanism to apply resin to the carrier fibers.

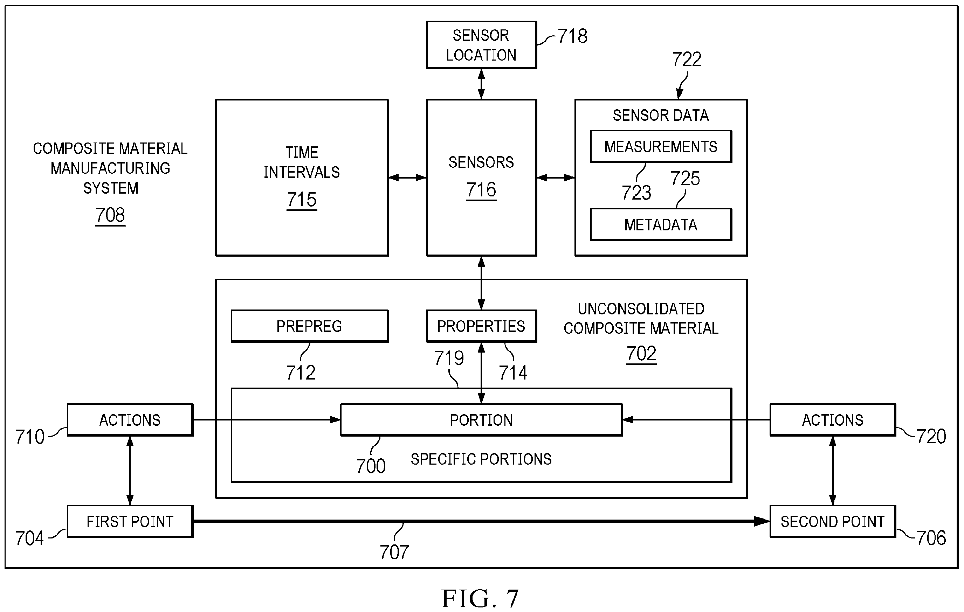

With reference next to Figure 7, an illustration of a block diagram of a sensor location in a composite material manufacturing system is depicted in accordance with an illustrative example. In this illustrative example, portion 700 of unconsolidated composite material 702 travels from first point 704 to second point 706 in the direction of arrow 707 in composite material manufacturing system 708.

In some examples, including this illustrative example, a set of actions 710 can be performed on portion 700 of unconsolidated composite material 702 at first point 704 as portion 700 of unconsolidated composite material 702 passes first point 704. The set of actions 710 can be one or more actions performed in manufacturing unconsolidated composite material 702. In some examples, including this example, the set of actions 710 can be selected from at least one of applying heat, applying pressure, applying a tension, applying a force, applying cold, changing a viscosity, or other suitable action.

For example, when unconsolidated composite material 702 is prepreg 712 and first point 704 is the location component such as a nip having rollers, the set of actions 710 can be to apply pressure and heat to portion 700. The set of actions 710 result in a set of properties 714 being present after first point 704. The set of properties 714 can change from what was present prior to the set of actions 710 being performed on portion 700 at first point 704.

The set of properties 714 for portion 700 can be different from the properties present prior to the set of actions being performed on portion 700 at first point 704. In other words, the set of actions performed at first point 704 can change the set of properties 714 for portion 700 of unconsolidated composite material 702.

The set of properties 714 present after performing the set of actions 710 on portion 700 of unconsolidated composite material 702 can be detected using a set of sensors 716 at sensor location 718. The set of sensors 716 can generate sensor data 722. Sensor data 722 can include measurements 723 and metadata 725. When metadata 725 is present in sensor data 722. Metadata 725 can include, for example, at least one of a timestamp, a sensor location, a sensor identifier, or other suitable information about measurements 723.

When unconsolidated composite material 702 is prepreg 712, the measurements 723 in sensor data 722 can be used to determine the amount of resin present in an area such as portion 700. For example, measurements 723 in sensor data 722 can be aerial weight. The current amount of resin present can be used to predict the amount of resin that will be present before the manufacturing process for portion 700 of unconsolidated composite material 702 is complete.

This sensor data can be used to predict properties 714 that portion 700 of unconsolidated composite material 702 will have when the manufacturing of portion 700 of unconsolidated composite material 702 is completed. The set of sensors 716 can be one or more of sensors 222 in sensor system 220 for composite material manufacturing system 208.

In some examples, including this illustrative example, sensor location 718 is located after first point 704 and prior to second point 706. Sensor location 718 can be selected to be in a specific position in proximity to first point 704 such that changes in properties 714 caused by the performance of actions 710 at first point 704 can be measured by sensors 716 to generate sensor data 722.

In some examples, including this example, second point 706 is a location in composite material manufacturing system 708 at which another set of actions 720 can be performed on portion 700 of unconsolidated composite material 702. The set of actions 720 performed at second point 706 can change properties 714.

As a result, the set of sensors 716 at sensor location 718 between first point 704 and second point 706 can measure properties 714 present after the performance of actions 710 on portion 700 at first point 704. This measurement can be made at time intervals 715. For example, a measurement can be made every second. Knowing the speed at which unconsolidated composite material 702 moves, properties for specific portions 719, such as portion 700, can be identified. The set of sensors 716 can generate sensor data 722 from those measurements of the set of properties 714 for use in determining predicted properties for portion 700 of unconsolidated composite material 702 that will be present when the manufacturing of portion 700 of unconsolidated composite material 702 has been completed.

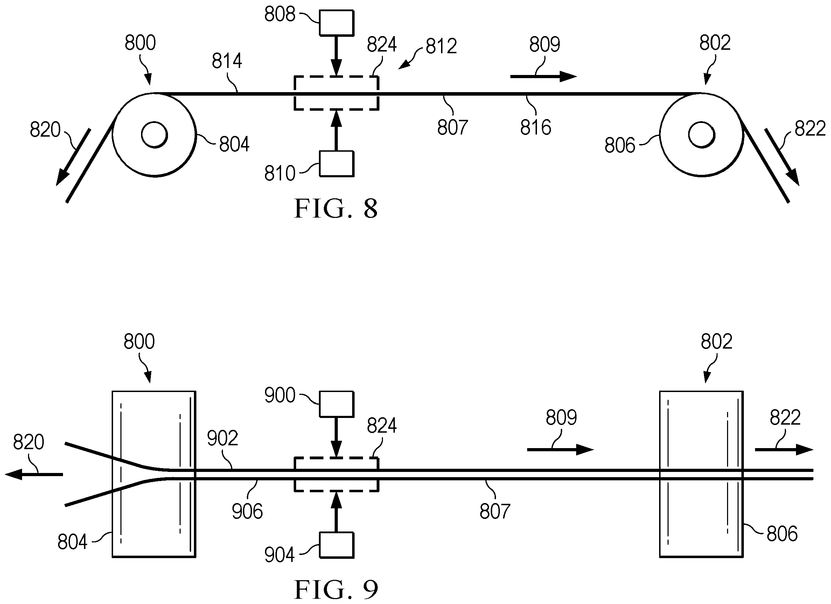

With reference now to Figure 8, an illustration of the side view of a portion of a composite material manufacturing system is depicted in accordance with an illustrative example. In some examples, including this illustrative example, point 1 800 and point 2 802 are examples of first point 704 and second point 706 in Figure 7. Roller 804 is located at point 1 800 and roller 806 is located at point 2 802.

An unconsolidated composite material in the form of prepreg 807 moves in the direction of arrow 809 from point 1 800 to point 2 802. The speed of movement is distance/time, such as feet per second. Knowing the speed that prepreg 807 moves enables knowing the length and location of portion 824 as that portion moves within the composite material manufacturing system.

In some examples, including this example, sensor 808 and sensor 810 are positioned at sensor location 812. At sensor location 812, sensor 808 is positioned on top side 814 of prepreg 807. Sensor 808 is positioned on bottom side 816 of prepreg 807.

In some examples, including this example, tension 820 at point 1 800 and tension 822 at point 2 802 are present. Additionally, roller 804 applies heat and pressure to prepreg 807 as prepreg 807 travels over roller 804. Sensor 808 and sensor 810 can make real time measurements of thickness and reflectance of portion 824 of prepreg 807 at sensor location 812 that results from applying tension, heat, and pressure to prepreg 807 to generate sensor data.

Turning to Figure 9, an illustration of the top view of a portion of a composite material manufacturing system is depicted in accordance with an illustrative example. In this example, a different positioning of sensors is present as compared to the example in Figure 8. As depicted in this top view, sensor 900 is positioned on first side 902 of prepreg 807 at sensor location 812. Sensor 904 is positioned on second side 906 of prepreg 807 at sensor location 812, which is opposite to first side 902.

In this example, tension 820 at point 1 800 and tension 822 at point 2 802 are present. Additionally, roller 804 applies heat and pressure to prepreg 807 as prepreg 807 travels over roller 804.

As depicted, sensor 900 and sensor 904 can make real time measurements of width, conductance, and capacitance of portion 824 of prepreg 807 to generate sensor data. The sensor data of the electrical measurements can be used to determine properties for portion 824 of prepreg 807 such as the amount of resin absorption and width.

With the sensor data from at least one of sensor location 812 or other sensor locations, predictions of the properties for portion 824 of prepreg 807 can be made for portion 824 when the manufacturing of portion 824 of prepreg 807 is complete, such as when portion 824 of prepreg 807 is wound onto a prepreg roll. For example, the sensor data can be used to predict properties that portion 824 of prepreg 807 will have such as fiber areal weight (FAW) and water pickup.

The illustration of the points, sensor location, and sensors are provided as an example of one implementation and not meant to limit the manner in which other illustrative examples can be implemented. In other illustrative examples, only a single sensor may be present, or 3 or more sensors may be present. Further, the additional sensors can be at sensor location 812 or another sensor location between point 1 800 and point 2 802.

In yet other examples, point 1 800 and point 2 802 can be locations for other components that perform actions on prepreg 807 other than roller 804 and roller 806. For example, a collar, a spreader bar, a comb, a collar, a nip, a rewinder, or other component can be at point 1 800 and point 2 802.

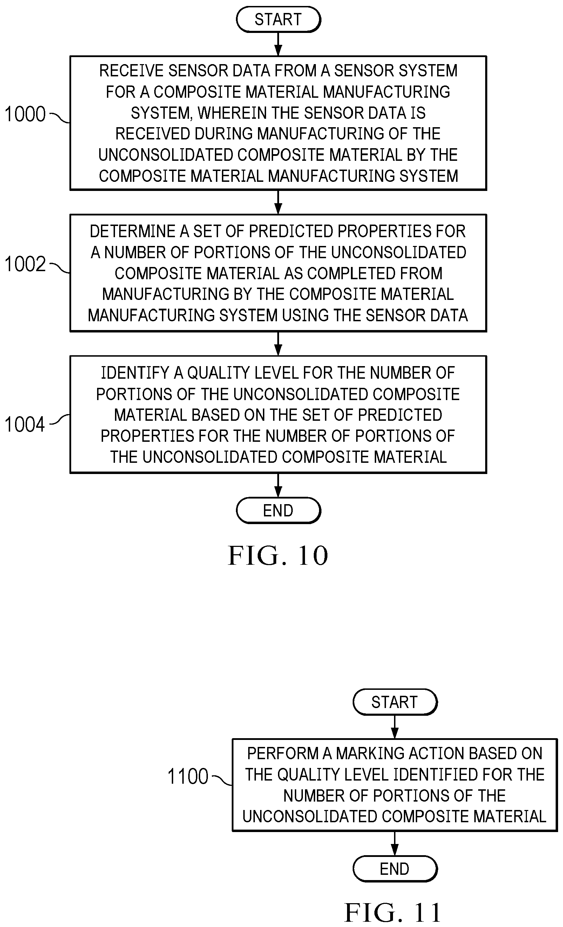

Turning to Figure 10, an illustration of a flowchart of a process for identifying quality levels for portions of an unconsolidated composite material is depicted in accordance with an illustrative example. The process in Figure 10 can be implemented in hardware, software, or both. When implemented in software, the process can take the form of program code that is run by one of more processor units located in one or more hardware devices in one or more computer systems. For example, the process can be implemented in composite material manager 212 in computer system 210 in Figure 2.

As depicted, the process begins by receiving sensor data from a sensor system for a composite material manufacturing system, wherein the sensor data is received during manufacturing of the unconsolidated composite material by the composite material manufacturing system (operation 1000). The process determines a set of predicted properties for a number of portions of the unconsolidated composite material as completed from manufacturing by the composite material manufacturing system using the sensor data (operation 1002). The process identifies a quality level for the number of portions of the unconsolidated composite material based on the set of predicted properties for the number of portions of the unconsolidated composite material (operation 1004). The process terminates thereafter.

Figure 11, an illustration of a flowchart of a process for marking an unconsolidated composite material is depicted in accordance with an illustrative example. The operations in this figure are examples of additional operations that can be used within the operations in the process in Figure 10.

As depicted, the process performs a marking action based on the quality level identified for the number of portions of the unconsolidated composite material (operation 1100). The process terminates thereafter.

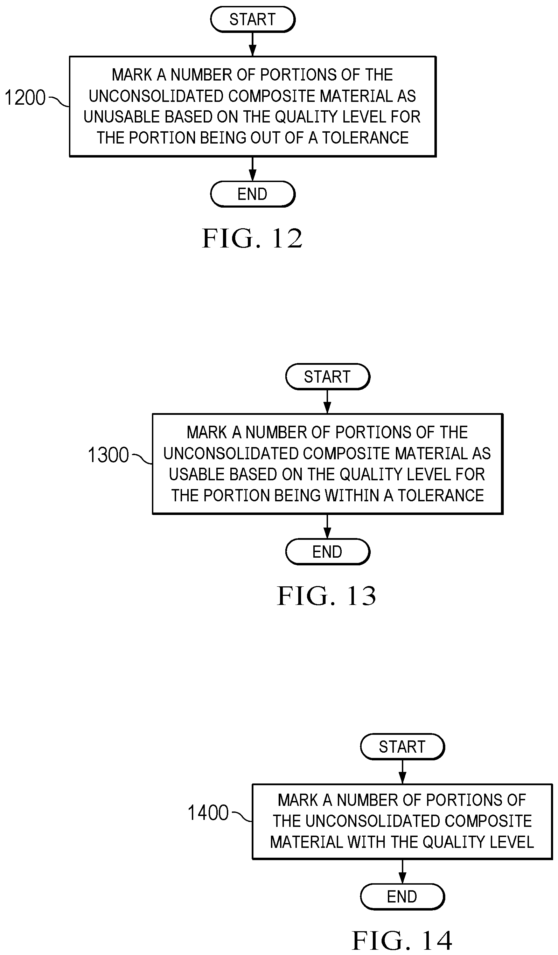

Next in Figure 12, an illustration of a flowchart of a process for marking an out-of-tolerance portion of an unconsolidated composite material as unusable is depicted in accordance with an illustrative example. The operation in this figure is an example of an implementation of operation 1100 in Figure 11.

The process marks a number of portions of the unconsolidated composite material in the number of portions of the unconsolidated composite material as unusable based on the quality level for the portion being out of a tolerance (operation 1200). The process terminates thereafter.

With reference next to Figure 13, an illustration of a flowchart of a process for marking an in-tolerance portion of an unconsolidated composite material as usable is depicted in accordance with an illustrative example. The operation in this figure is an example of an implementation of operation 1100 in Figure 11.

The process marks a number of portions of the unconsolidated composite material in the number of portions of the unconsolidated composite material as usable based on the quality level for the portion being within a tolerance (operation 1300). The process terminates thereafter.

Turning to Figure 14, an illustration of a flowchart of a process for marking a number of portions of an unconsolidated composite material with a quality level is depicted in accordance with an illustrative example. The operation in this figure is an example of an implementation of operation 1100 in Figure 11.

The process marks a portion of the unconsolidated composite material in the number of portions of the unconsolidated composite material with the quality level (operation 1400). The process terminates thereafter.

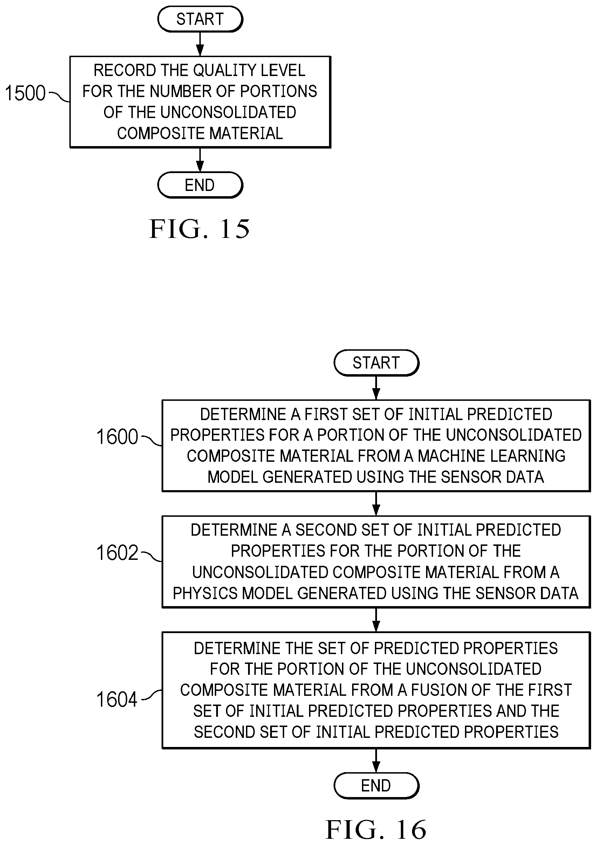

With reference now to Figure 15, an illustration of a flowchart of a process for recording a quality level for portions of an unconsolidated composite material is depicted in accordance with an illustrative example. The operation in this figure is an example of an implementation of operation 1100 in Figure 11.

The process records the quality level for the number of portions of the unconsolidated composite material (operation 1500). The process terminates thereafter.

With reference to Figure 16, an illustration of a flowchart of a process for determining predicted properties for a portion of an unconsolidated composite material is depicted in accordance with an illustrative example. The operations in this figure are an example of one implementation of operation 1002 in Figure 10.

As depicted, the process begins by determining a first set of initial predicted properties for the portion of the unconsolidated composite material from a machine learning model generated using the sensor data (operation 1600). The process determines a second set of initial predicted properties for the portion of the unconsolidated composite material from a physics model generated using the sensor data (operation 1602). The process determines the set of predicted properties for the portion of the unconsolidated composite material from a fusion of the first set of initial predicted properties and the second set of initial predicted properties (operation 1604). The process terminates thereafter.

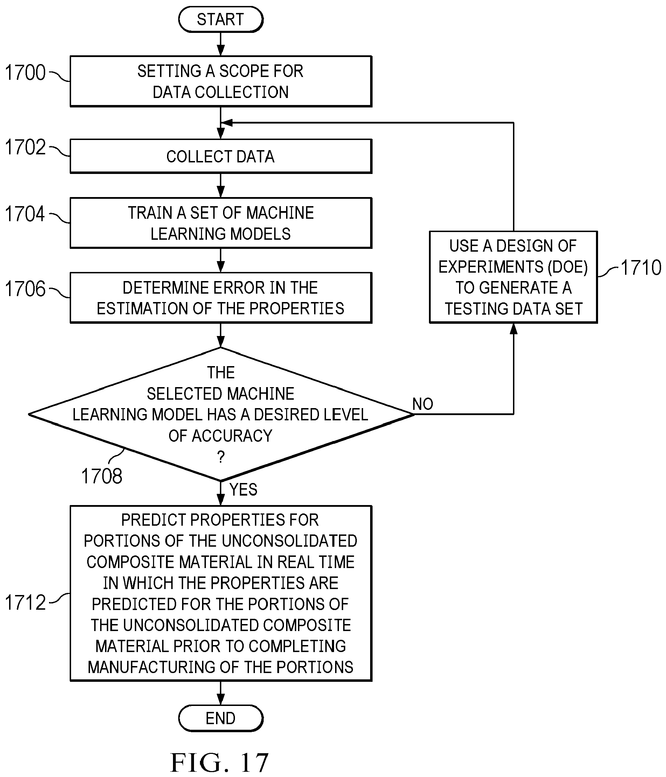

Turning next to Figure 17, an illustration of a flowchart of a process for training a machine learning model to predict properties for an unconsolidated composite material prior to completing fabrication of the unconsolidated composite material is depicted in accordance with an illustrative example. The process in Figure 17 can be implemented in hardware, software, or both. When implemented in software, the process can take the form of program code that is run by one of more processor units located in one or more hardware devices in one or more computer systems. For example, the process can be implemented in composite material manager 212 in computer system 210 in Figure 2.

The process begins by setting a scope for data collection (operation 1700). In operation 1700, the scope is set such that the data is collected with sufficient resolution repetition for training and validating testing models.

The process collects data (operation 1702). In this operation, historical data is collected from the manufacturing of the unconsolidated composite materials. This data can include sensor data, upstream data, and the inspection data. The inspection data is generated by sample testing the manufactured unconsolidated composite material to determine the properties of interest. These properties of interest are used to evaluate the quality of the unconsolidated composite material and whether it is suitable for particular uses.

The process trains a set of machine learning models (operation 1704). In operation 1704, one or more model types can be selected for training. When more than one type of model is selected, an evaluation can be performed to see which machine learning model provides the most accurate predictions.

In operation 1704, properties and parameters are selected for use in training. The properties are properties of unconsolidated composite materials that are of interest in determining the quality and whether the unconsolidated composite material is suitable for use. The parameters are selected as parameters that have a correlation or effect on the properties selected. In other words, when the parameters change, those changes can have an effect on the properties that result for the unconsolidated composite material.

Operation 1704 can also include hyperparameter optimization in which hyperparameters in the model can be set as parameters or variables that are set before actually optimizing the parameters or variables selected for training the model. Hyperparameters can include, for example, model selection.

The process determines error in the estimation of the properties (operation 1706). In operation 1706, the validation data can be used to determine the error occurring in predicting properties.

The process then determines whether the selected machine learning model has a desired level of accuracy (operation 1708). This desired level of accuracy can be tested using a portion of the historical data that is partitioned off as testing data. If the level of accuracy is not present, the process uses a design of experiments (DOE) to generate a testing data set (operation 1710). The process then returns to operation 1702 to collect data using the data generation approach generated by the design of experiments. The design of experiments is a statistical method to guide the execution of experiments to generate training.

With reference again to operation 1708, if the selected machine learning model has a desired level of accuracy, then the process predicts properties for portions of the unconsolidated composite material in real time in which the properties are predicted for the portions of the unconsolidated composite material prior to completing manufacturing of the portions (operation 1712). The process terminates thereafter.

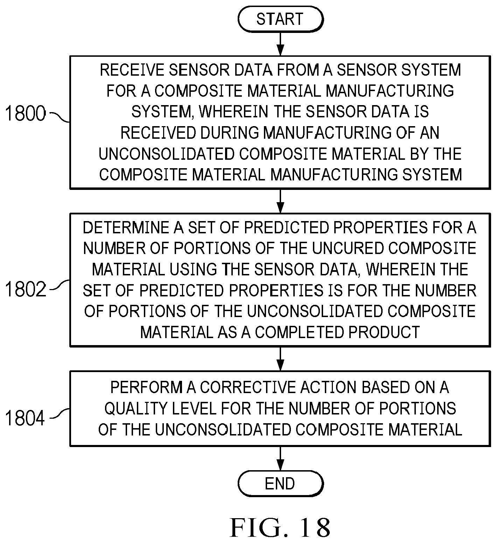

Turning to Figure 18, an illustration of a flowchart of a process for performing a corrective action for portions of an unconsolidated composite material is depicted in accordance with an illustrative example. The process in Figure 18 can be implemented in hardware, software, or both. When implemented in software, the process can take the form of program code that is run by one of more processor units located in one or more hardware devices in one or more computer systems. For example, the process can be implemented in composite material manager 212 in computer system 210 in Figure 2.

As depicted, the process begins by receiving sensor data from a sensor system for a composite material manufacturing system, wherein the sensor data is received during manufacturing of an unconsolidated composite material by the composite material manufacturing system (operation 1800). The process determines a set of predicted properties for a number of portions of the unconsolidated composite material using the sensor data, wherein the set of predicted properties is for the number of portions of the unconsolidated composite material as a completed product (operation 1802). The process performs a corrective action based on a quality level for the number of portions of the unconsolidated composite material (operation 1804). The process terminates thereafter.

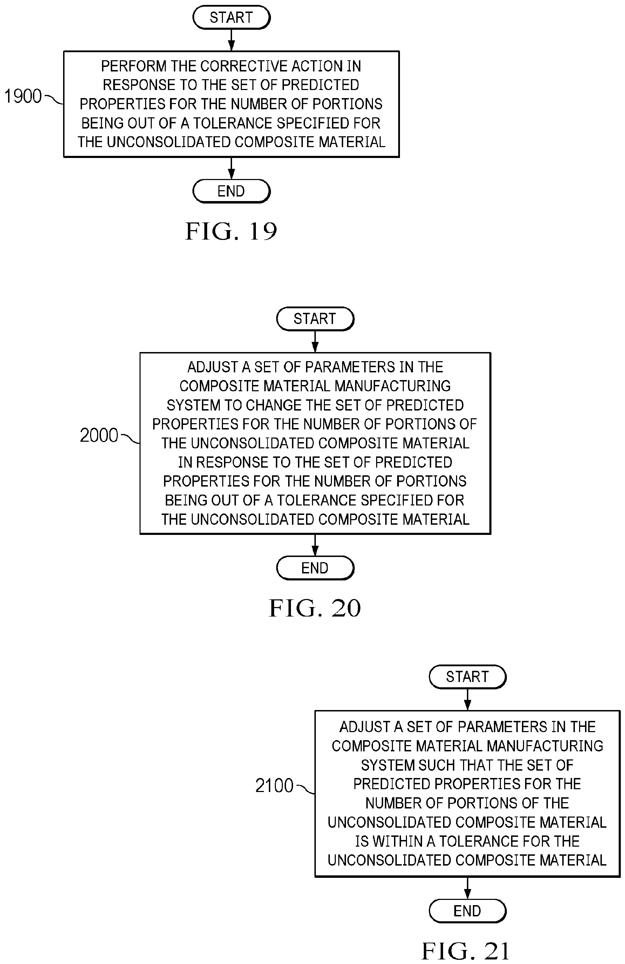

Turning to Figure 19, an illustration of a flowchart of a process for performing a corrective action for out-of-tolerance portions of an unconsolidated composite material is depicted in accordance with an illustrative example. The operation in this figure is an example of an implementation of operation 1804 in Figure 18.

As depicted, the process performs the corrective action in response to the set of predicted properties for the number of portions being out of a tolerance specified for the unconsolidated composite material (operation 1900). The process terminates thereafter.

Turning next to Figure 20, an illustration of a flowchart of a process for adjusting parameters for out-of-tolerance portions of an unconsolidated composite material is depicted in accordance with an illustrative example. The operation in this figure is an example of an implementation of operation 1804 in Figure 18.

As depicted, the process adjusts a set of parameters in the composite material manufacturing system to change the set of predicted properties for the number of portions of the unconsolidated composite material in response to the set of predicted properties for the number of portions being out of a tolerance specified for the unconsolidated composite material (operation 2000). The process terminates thereafter.

With reference to Figure 21, an illustration of a flowchart of a process for adjusting parameters for in-tolerance portions of an unconsolidated composite material is depicted in accordance with an illustrative example. The operation in this figure is an example of an implementation of operation 1804 in Figure 18.

As depicted, the process adjusts a set of parameters in the composite material manufacturing system such that the set of predicted properties for the number of portions of the unconsolidated composite material is within a tolerance for the unconsolidated composite material (operation 2100). The process terminates thereafter.

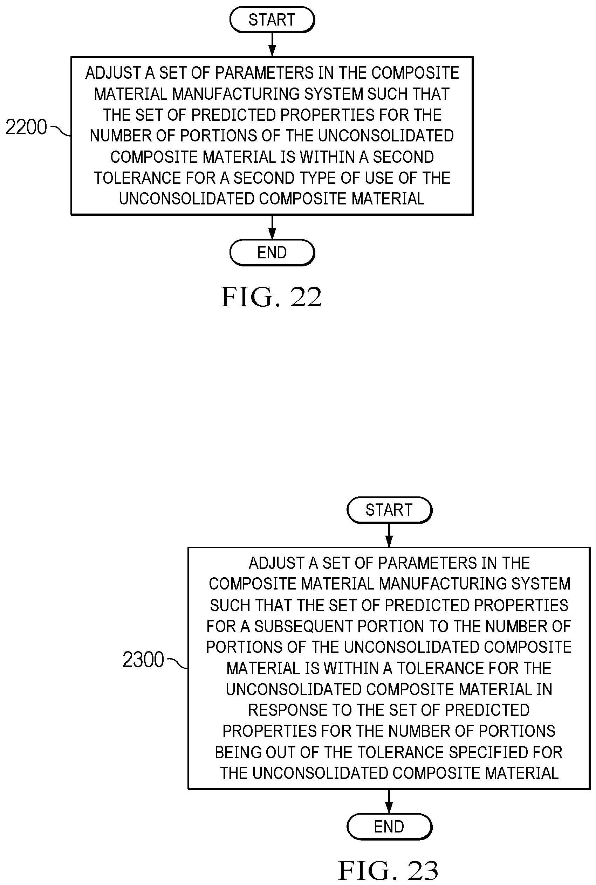

Turning next to Figure 22, an illustration of a flowchart of a process for adjusting parameters such that portions of an unconsolidated composite material are within tolerance is depicted in accordance with an illustrative example. The operation in this figure is an example of an implementation of operation 1804 in Figure 18.

As depicted, the process adjusts a set of parameters in the composite material manufacturing system such that the set of predicted properties for the number of portions of the unconsolidated composite material is within a second tolerance for a second type of use of the unconsolidated composite material (operation 2200). The process terminates thereafter.

With reference to Figure 23, an illustration of a flowchart of a process for adjusting parameters for a subsequent portion of an unconsolidated composite material is depicted in accordance with an illustrative example. The operation in this figure is an example of an implementation of operation 1804 in Figure 18.

As depicted, the process adjusts a set of parameters in the composite material manufacturing system such that the set of predicted properties for a subsequent portion to the number of portions of the unconsolidated composite material is within a tolerance for the unconsolidated composite material in response to the set of predicted properties for the number of portions being out of the tolerance specified for the unconsolidated composite material (operation 2300). The process terminates thereafter.

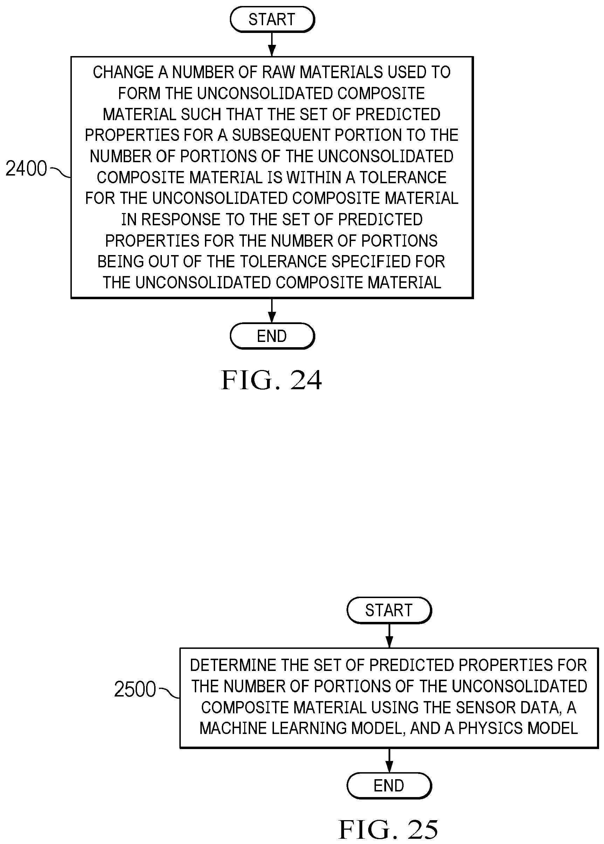

Turning to Figure 24, an illustration of a flowchart of a process for changing raw materials is depicted in accordance with an illustrative example. The operation in this figure is an example of an implementation of operation 1804 in Figure 18.

As depicted, the process changes a number of raw materials used to form the unconsolidated composite material such that the set of predicted properties for a subsequent portion to the number of portions of the unconsolidated composite material is within a tolerance for the unconsolidated composite material in response to the set of predicted properties for the number of portions being out of the tolerance specified for the unconsolidated composite material (operation 2400). The process terminates thereafter.

Turning next to Figure 25, an illustration of a flowchart of a process for determining predicted properties of an unconsolidated composite material is depicted in accordance with an illustrative example. The operations in this figure are examples of additional operations that can be used within the operations in the process in Figure 18.

As depicted, the process determines the set of predicted properties for the number of portions of the unconsolidated composite material using the sensor data, a machine learning model, and a physics model (operation 2500). The process terminates thereafter.

The flowcharts and block diagrams in the different depicted examples illustrate the architecture, functionality, and operation of some possible example of apparatuses and methods in an illustrative example. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.

In some alternative implementations of an illustrative example, the function or functions noted in the blocks may occur out of the order noted in the figures. For example, in some cases, two blocks shown in succession may be performed concurrently or substantially concurrently, or the blocks may sometimes be performed in the reverse order, depending upon the functionality involved. Also, other blocks may be added in addition to the illustrated blocks in a flowchart or block diagram.

Turning now to Figure 26, an illustration of a block diagram of a data processing system is depicted in accordance with an illustrative example. Data processing system 2600 can be used to implement server computer 104, server computer 106, or client devices 110 in Figure 1. Data processing system 2600 can also be used to implement computer system 210 in Figure 2. In some examples, including this illustrative example, data processing system 2600 includes communications framework 2602, which provides communications between processor unit 2604, memory 2606, persistent storage 2608, communications unit 2610, input/output (I/O) unit 2612, and display 2614. In some examples, including this example, communications framework 2602 takes the form of a bus system.

Processor unit 2604 serves to execute instructions for software that can be loaded into memory 2606. Processor unit 2604 includes one or more processors. For example, processor unit 2604 can be selected from at least one of a multicore processor, a central processing unit (CPU), a graphics processing unit (GPU), a physics processing unit (PPU), a digital signal processor (DSP), a network processor, or some other suitable type of processor. Further, processor unit 2604 can be implemented using one or more heterogeneous processor systems in which a main processor is present with secondary processors on a single chip. As another illustrative example, processor unit 2604 can be a symmetric multi-processor system containing multiple processors of the same type on a single chip.

Memory 2606 and persistent storage 2608 are examples of storage devices 2616. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices 2616 may also be referred to as computer-readable storage devices in these illustrative examples. Memory 2606, in these examples, can be, for example, a random-access memory or any other suitable volatile or non-volatile storage device. Persistent storage 2608 can take various forms, depending on the particular implementation.

For example, persistent storage 2608 may contain one or more components or devices. For example, persistent storage 2608 can be a hard drive, a solid-state drive (SSD), a flash memory, a rewritable optical disk, a rewritable magnetic tape, or some combination of the above. The media used by persistent storage 2608 also can be removable. For example, a removable hard drive can be used for persistent storage 2608.

Communications unit 2610, in these illustrative examples, can provide for communications with other data processing systems or devices. In at least some of these illustrative examples, communications unit 2610 is a network interface card.

Input/output unit 2612 allows for input and output of data with other devices that can be connected to data processing system 2600. For example, input/output unit 2612 can provide a connection for user input through at least one of a keyboard, a mouse, or some other suitable input device. Further, input/output unit 2612 can send output to a printer. Display 2614 provides a mechanism to display information to a user.

Instructions for at least one of the operating system, applications, or programs can be located in storage devices 2616, which are in communication with processor unit 2604 through communications framework 2602. The processes of the different examples can be performed by processor unit 2604 using computer-implemented instructions, which can be located in a memory, such as memory 2606.

These instructions are program instructions and are also referred to as program code, computer usable program code, or computer-readable program code that can be read and executed by a processor in processor unit 2604. The program code in the different examples can be embodied on different physical or computer-readable storage media, such as memory 2606 or persistent storage 2608.

Program instructions 2618 is located in a functional form on computer-readable media 2620 that is selectively removable and can be loaded onto or transferred to data processing system 2600 for execution by processor unit 2604. Program instructions 2618 and computer-readable media 2620 form computer program product 2622 in some examples, including these illustrative examples. In some examples, including the illustrative example, computer-readable media 2620 is computer-readable storage media 2624.

Computer-readable storage media 2624 is a physical or tangible storage device used to store program instructions 2618 rather than a media that propagates or transmits program instructions 2618. Computer-readable storage media 2624, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program instructions 2618 can be transferred to data processing system 2600 using a computer-readable signal media. The computer-readable signal media are signals and can be, for example, a propagated data signal containing program instructions 2618. For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media 2620" can be singular or plural. For example, program instructions 2618 can be located in computer-readable media 2620 in the form of a single storage device or system. In other examples, program instructions 2618 can be located in computer-readable media 2620 that is distributed in multiple data processing systems. In other words, some instructions in program instructions 2618 can be located in one data processing system while other instructions in program instructions 2618 can be located in multiple data processing systems. For example, a portion of program instructions 2618 can be located in computer-readable media 2620 in a server computer while another portion of program instructions 2618 can be located in computer-readable media 2620 located in a set of client computers.

The different components illustrated for data processing system 2600 are not meant to provide architectural limitations to the manner in which different examples can be implemented. In some illustrative examples, one or more of the components may be incorporated in or otherwise form a portion of, another component. For example, memory 2606, or portions thereof, can be incorporated in processor unit 2604 in some illustrative examples. The different illustrative examples can be implemented in a data processing system including components in addition to or in place of those illustrated for data processing system 2600. Other components shown in Figure 26 can be varied from the illustrative examples shown. The different examples can be implemented using any hardware device or system capable of running program instructions 2618.

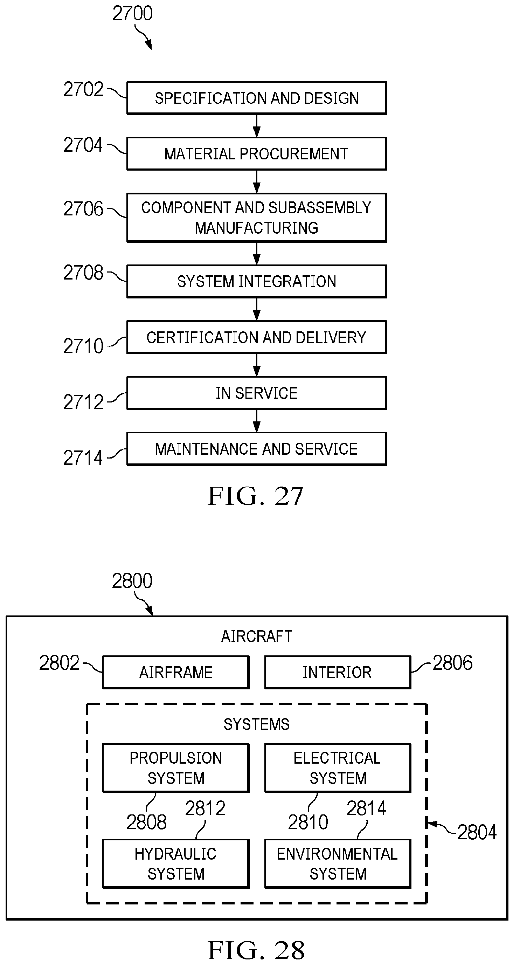

Illustrative examples of the disclosure may be described in the context of aircraft manufacturing and service method 2700 as shown in Figure 27 and aircraft 2800 as shown in Figure 28. Turning first to Figure 27, an illustration of an aircraft manufacturing and service method is depicted in accordance with an illustrative example. During pre-production, aircraft manufacturing and service method 2700 may include specification and design 2702 of aircraft 2800 in Figure 28 and material procurement 2704.

During production, component and subassembly manufacturing 2706 and system integration 2708 of aircraft 2800 in Figure 28 takes place. Thereafter, aircraft 2800 in Figure 28 can go through certification and delivery 2710 in order to be placed in service 2712. While in service 2712 by a customer, aircraft 2800 in Figure 28 is scheduled for routine maintenance and service 2714, which may include modification, reconfiguration, refurbishment, and other maintenance or service.

Each of the processes of aircraft manufacturing and service method 2700 may be performed or carried out by a system integrator, a third party, an operator, or some combination thereof. In some examples, including these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to Figure 28, an illustration of an aircraft is depicted in which an illustrative example may be implemented. In some examples, including this example, aircraft 2800 is produced by aircraft manufacturing and service method 2700 in Figure 27 and may include airframe 2802 with plurality of systems 2804 and interior 2806. Examples of systems 2804 include one or more of propulsion system 2808, electrical system 2810, hydraulic system 2812, and environmental system 2814. Any number of other systems may be included. Although an aerospace example is shown, different illustrative examples may be applied to other industries, such as the automotive industry.

Apparatuses and methods embodied herein may be employed during at least one of the stages of aircraft manufacturing and service method 2700 in Figure 27.

In some illustrative examples, components or subassemblies produced in component and subassembly manufacturing 2706 in Figure 27 can be fabricated or manufactured in a manner similar to components or subassemblies produced while aircraft 2800 is in service 2712 in Figure 27. As yet another example, one or more apparatus examples, method examples, or a combination thereof can be utilized during production stages, such as component and subassembly manufacturing 2706 and system integration 2708 in Figure 27. One or more apparatus examples, method examples, or a combination thereof may be utilized while aircraft 2800 is in service 2712, during maintenance and service 2714 in Figure 27, or both. The use of a number of the different illustrative examples may expedite or substantially expedite the assembly of aircraft 2800, reduce the cost of aircraft 2800, or both expedite the assembly of aircraft 2800 and reduce the cost of aircraft 2800. Increased quality in manufacturing unconsolidated composite materials during at least one of component and subassembly manufacturing 2706 or maintenance and service 2714 can at least one of reduce the amount of time needed or cost in manufacturing unconsolidated composite materials. With the ability to determine which portions of unconsolidated composite materials meet desired quality levels, less discarding or rework of unconsolidated composite materials can occur.

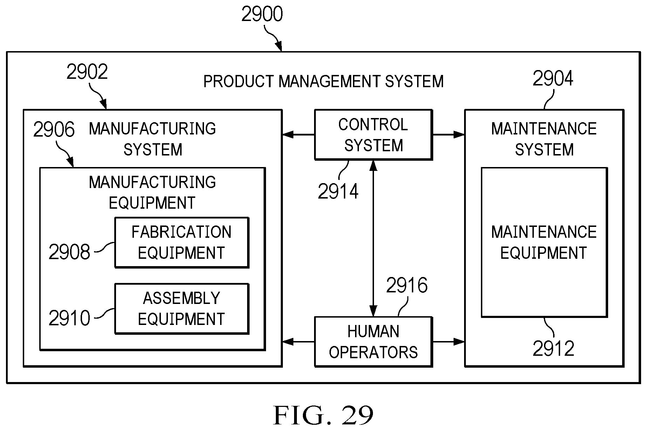

Turning now to Figure 29, an illustration of a block diagram of a product management system is depicted in accordance with an illustrative example. Product management system 2900 is a physical hardware system. In some examples, including this illustrative example, product management system 2900 includes at least one of manufacturing system 2902 or maintenance system 2904.

Manufacturing system 2902 is configured to manufacture products, such as aircraft 2800 in Figure 28. As depicted, manufacturing system 2902 includes manufacturing equipment 2906. Manufacturing equipment 2906 includes at least one of fabrication equipment 2908 or assembly equipment 2910.

Fabrication equipment 2908 is equipment that is used to fabricate components for parts used to form aircraft 2800 in Figure 28. For example, fabrication equipment 2908 can include machines and tools. These machines and tools can be at least one of a drill, a hydraulic press, a furnace, an autoclave, a mold, a composite tape laying machine, an automated fiber placement (AFP) machine, a vacuum system, a robotic pick and place system, a flatbed cutting machine, a laser cutter, a computer numerical control (CNC) cutting machine, a lathe, or other suitable types of equipment. Fabrication equipment 2908 can be used to fabricate at least one of metal parts, composite parts, semiconductors, circuits, fasteners, ribs, skin panels, spars, antennas, or other suitable types of parts.

Assembly equipment 2910 is equipment used to assemble parts to form aircraft 2800 in Figure 28. In particular, assembly equipment 2910 is used to assemble components and parts to form aircraft 2800 in Figure 28. Assembly equipment 2910 also can include machines and tools. These machines and tools may be at least one of a robotic arm, a crawler, a faster installation system, a rail-based drilling system, or a robot. Assembly equipment 2910 can be used to assemble parts such as seats, horizontal stabilizers, wings, engines, engine housings, landing gear systems, and other parts for aircraft 2800 in Figure 28.

In some examples, including this illustrative example, maintenance system 2904 includes maintenance equipment 2912. Maintenance equipment 2912 can include any equipment needed to perform maintenance on aircraft 2800 in Figure 28. Maintenance equipment 2912 may include tools for performing different operations on parts on aircraft 2800 in Figure 28. These operations can include at least one of disassembling parts, refurbishing parts, inspecting parts, reworking parts, manufacturing replacement parts, or other operations for performing maintenance on aircraft 2800 in Figure 28. These operations can be for routine maintenance, inspections, upgrades, refurbishment, or other types of maintenance operations.

In some examples, including the illustrative example, maintenance equipment 2912 may include ultrasonic inspection devices, x-ray imaging systems, vision systems, drills, crawlers, and other suitable devices. In some cases, maintenance equipment 2912 can include fabrication equipment 2908, assembly equipment 2910, or both to produce and assemble parts that are needed for maintenance.

Product management system 2900 also includes control system 2914. Control system 2914 is a hardware system and may also include software or other types of components. Control system 2914 is configured to control the operation of at least one of manufacturing system 2902 or maintenance system 2904. In particular, control system 2914 can control the operation of at least one of fabrication equipment 2908, assembly equipment 2910, or maintenance equipment 2912.

The hardware in control system 2914 can be implemented using hardware that may include computers, circuits, networks, and other types of equipment. The control may take the form of direct control of manufacturing equipment 2906. For example, robots, computer-controlled machines, and other equipment can be controlled by control system 2914. In other illustrative examples, control system 2914 can manage operations performed by human operators 2916 in manufacturing or performing maintenance on aircraft 2800. For example, control system 2914 can assign tasks, provide instructions, display models, or perform other operations to manage operations performed by human operators 2916. In these illustrative examples, composite material manager 212 in Figure 2 can be implemented in control system 2914 to manage manufacturing of unconsolidated composite materials for use in at least one of the manufacturing or maintenance of aircraft 2800 in Figure 28. These unconsolidated composite materials can be used to manufacture composite parts or to rework composite parts in at least one of least one of the manufacturing or maintenance of aircraft 2800 in Figure 28.

In the different illustrative examples, human operators 2916 can operate or interact with at least one of manufacturing equipment 2906, maintenance equipment 2912, or control system 2914. This interaction can occur to manufacture aircraft 2800 in Figure 28.

Of course, product management system 2900 may be configured to manage other products other than aircraft 2800 in Figure 28. Although product management system 2900 has been described with respect to manufacturing in the aerospace industry, product management system 2900 can be configured to manage products for other industries. For example, product management system 2900 can be configured to manufacture products for the automotive industry as well as any other suitable industries.

Some features of the illustrative examples are described in the following clauses. These clauses are examples of features and are not intended to limit other illustrative examples.

Clause 1. A composite material management system comprising: a computer system; a composite material manager in the computer system, wherein the composite material manager is configured to: receive sensor data from a sensor system for a composite material manufacturing system, wherein the sensor data is received during manufacturing of an unconsolidated composite material by the composite material manufacturing system; determine a set of predicted properties for a number of portions of the unconsolidated composite material as completed from manufacturing by the composite material manufacturing system using the sensor data; and identify a quality level for the number of portions of the unconsolidated composite material based on the set of predicted properties for the number of portions of the unconsolidated composite material.

Clause 2. The composite material management system according to clause 1, wherein the composite material manager is configured to: perform a marking action based on the quality level identified for the number of portions of the unconsolidated composite material.

Clause 3. The composite material management system according to clause 2, wherein performing the marking action based on the quality level identified for the number of portions of the unconsolidated composite material, the composite material manager is configured to: mark the number of portions of the unconsolidated composite material as unusable based on the quality level for the portion being out of a tolerance.

Clause 4. The composite material management system according to clause 2 or 3, wherein performing the marking action based on the quality level identified for the number of portions of the unconsolidated composite material, the composite material manager is configured to: mark the number of portions of the unconsolidated composite material as usable based on the quality level for the portion being within a tolerance.

Clause 5. The composite material management system according to any of clauses 2 to 4, wherein performing the marking action based on the quality level identified for the number of portions of the unconsolidated composite material, the composite material manager is configured to: mark the number of portions of the unconsolidated composite material with the quality level.

Clause 6. The composite material management system according to any of clauses 2 to 5, wherein performing the marking action based on the quality level identified for the number of portions of the unconsolidated composite material, the composite material manager is configured to: record at least one of the quality level for the number of portions of the unconsolidated composite material.

Clause 7. The composite material management system according to any of clauses 1 to 6 further comprising: the composite material manufacturing system.

Clause 8. The composite material management system according to any of clauses 3 to 7, wherein the composite material manufacturing system is one of a carbon fiber prepreg coating line, a reinforcing fiber resin impregnation line, a resin mix process system, a resin filming line, a prepreg system, and a slitting process system.

Clause 9. The composite material management system according to any of clauses 1 to 8, wherein a set of sensors in the sensor system is at a sensor location located between a first point and a second point in the composite material manufacturing system and wherein the first point is a point at which a set of actions is performed on a portion of the unconsolidated composite material as the portion of the unconsolidated composite material passes the first point.

Clause 10. The composite material management system according to any of clauses 1 to 9 further comprising: a machine learning model, wherein the composite material manager determines the set of predicted properties for the portion of the unconsolidated composite material using the sensor data and the machine learning model.

Clause 11. The composite material management system according to any of clauses 1 to 10 further comprising: a machine learning model; and a physics model, wherein the composite material manager determines the set of predicted properties for a portion of the unconsolidated composite material using the sensor data, the machine learning model, and the physics model.

Clause 12. The composite material management system according to clause 11, wherein in determining the set of predicted properties for the portion of the unconsolidated composite material, the composite material manager is configured to: determine a first set of initial predicted properties for the portion of the unconsolidated composite material from the machine learning model generated using the sensor data; determine a second set of initial predicted properties for the portion of the unconsolidated composite material from the physics model generated using the sensor data; and determine the set of predicted properties for the portion of the unconsolidated composite material from a fusion of the first set of initial predicted properties and the second set of initial predicted properties.

Clause 13. The composite material management system according to any of clauses 1 to 12, wherein the unconsolidated composite material is selected from at least one of a prepreg, an aerospace-grade prepreg, a thermoset prepreg, a thermoplastic prepreg, a woven fabric prepreg, a fiber tow prepreg, a tow prepreg, unidirectional tape prepreg, a resin coated film, non-crimp fabric, or a resin mix.

Clause 14. The composite material management system according to any of clauses 1 to 13, wherein the sensor data comprises at least one of a component temperature, an unconsolidated composite material temperature, an ambient temperature, a humidity, a roller speed, a speed of the unconsolidated composite material, a pressure between a pair of rollers, a gap between the pair of rollers, an unconsolidated composite material thickness, a Fourier transform infrared (FTIR) spectra, spectroscopy data, a material width, a fiber web width, a material areal weight, a fiber areal weight, a resin viscosity, an electrical measurement across a dimension of the unconsolidated composite material, a voltage across the dimension of the unconsolidated composite material, an electromagnetic measurement across the dimension of the unconsolidated composite material, an acoustic measurement across the dimension of the unconsolidated composite material, a tension, or an image of a prepreg at a location in the composite material manufacturing system.

Clause 15. The composite material management system according to any of clauses 1 to 14, wherein the composite material manager is configured to receive upstream information selected from at least one of reinforcement information, fiber information, reinforcement sizing information, resin information, release liner information, or resin film information.

Clause 16. The composite material management system according to any of clauses 1 to 15, wherein the set of properties comprises at least one of a prepreg fiber areal weight, prepreg resin content, prepreg thickness, prepreg infiltration level, a prepreg tack level, resin film areal weight, resin film thickness, release liner areal weight, release liner thickness, or a laminate structural property.

Clause 17. A composite material management system comprising: a carbon fiber prepreg coating line that operates to manufacture length of prepreg from fibers and a resin coated film; a sensor system, wherein the sensor system is operatable to generate sensor data for carbon fiber prepreg coating line during operation of the carbon fiber prepreg coating line; a composite material manager configured to: receive the sensor data from the sensor system for a composite material manufacturing system, wherein the sensor data is received during manufacturing of an unconsolidated composite material by the composite material manufacturing system; determine a set of predicted properties for a number of portions of the prepreg as completed from manufacturing by the composite material manufacturing system using the sensor data; and identify a quality level for the number of portions of the prepreg based on the set of predicted properties for the number of portions of the unconsolidated composite material.

Clause 18. The composite material management system according to clause 17, wherein in identifying the quality level for the number of portions of the prepreg based on the set of predicted properties for the number of portions of the unconsolidated composite material, the composite material manager is configured to: mark a portion of the prepreg in the number of portions of the prepreg as unusable based on the quality level for the portion being out of a tolerance.

Clause 19. The composite material management system according to clause 17 or 18, wherein in identifying the quality level for the number of portions of the unconsolidated composite material based on the set of predicted properties for the number of portions of the unconsolidated composite material, the composite material manager is configured to: mark the number of portions of the prepreg as usable based on the quality level for the portion being within a tolerance.

Clause 20. The composite material management system according to any of clauses 17 to 19, wherein in identifying the quality level for the number of portions of the prepreg based on the set of predicted properties for the number of portions of the prepreg, the composite material manager is configured to: mark a portion of the prepreg in the number of portions of the prepreg with the quality level.

Clause 21. The composite material management system according to any of clauses 17 to 20, wherein the fibers are in a form selected from a tow, a tape, and a woven fabric and wherein the resin coated film is a resin coated paper.

Clause 22. A method for manufacturing an unconsolidated composite material, the method comprising: receiving sensor data from a sensor system for a composite material manufacturing system, wherein the sensor data is received during manufacturing of the unconsolidated composite material by the composite material manufacturing system; determining a set of predicted properties for a number of portions of the unconsolidated composite material as completed from manufacturing by the composite material manufacturing system using the sensor data; and identifying a quality level for the number of portions of the unconsolidated composite material based on the set of predicted properties for the number of portions of the unconsolidated composite material.

Clause 23. The method according to clause 22 further comprising: performing a marking action based on the quality level identified for the number of portions of the unconsolidated composite material.

Clause 24. The method according to clause 23, wherein the performing the marking action based on the quality level identified for the number of portions of the unconsolidated composite material comprises: marking a portion of the unconsolidated composite material in the number of portions of the unconsolidated composite material as unusable based on the quality level for the portion being out of a tolerance.

Clause 25. The method according to clause 23 or 24, wherein the performing the marking action based on the quality level identified for the number of portions of the unconsolidated composite material comprises: marking a portion of the unconsolidated composite material in the number of portions of the unconsolidated composite material as unusable based on the quality level for the portion being within a tolerance.

Clause 26. The method according to any of clauses 23 to 25, wherein the performing the marking action based on the quality level identified for the number of portions of the unconsolidated composite material comprises: marking a portion of the unconsolidated composite material in the number of portions of the unconsolidated composite material with the quality level.

Clause 27. The method according to any of clauses 23 to 26, wherein the performing the marking action based on the quality level identified for the number of portions of the unconsolidated composite material comprises: recording at least one of the quality level for the number of portions of the unconsolidated composite material.

Clause 28. The method according to any of clauses 22 to 27, wherein the set of predicted properties for a portion of the unconsolidated composite material is determined using the sensor data, a machine learning model, and a physics model.

Clause 29. The method according to any of clauses 22 to 28, wherein determining the set of predicted properties for the number of portions of the unconsolidated composite material comprises: determining a first set of initial predicted properties for a portion of the unconsolidated composite material from a machine learning model generated using the sensor data; determining a second set of initial predicted properties for the portion of the unconsolidated composite material from a physics model generated using the sensor data; and determining the set of predicted properties for the portion of the unconsolidated composite material from a fusion of the first set of initial predicted properties and the second set of initial predicted properties.

Clause 30. The method according to any of clauses 22 to 29, wherein the set of predicted properties for a portion of the unconsolidated composite material is determined using sensor data and a machine learning model.

Clause 31. The method according to any of clauses 22 to 30, wherein the composite material manufacturing system is a carbon fiber prepreg coating line.

Clause 32. The method according to any of clauses 22 to 31, wherein the unconsolidated composite material is selected from at least one of a prepreg, a thermoset prepreg, a woven fabric prepreg, a fiber tow prepreg, unidirectional tape prepreg, or a resin coated film.

Clause 33. The method according to any of clauses 22 to 32, wherein the sensor data comprises at least one of a component temperature, an unconsolidated composite material temperature, an ambient temperature, a humidity, a roller speed, a speed of the unconsolidated composite material, a gap between a pair of rollers, an unconsolidated composite material thickness, a Fourier transform infrared (FTIR) spectra, a fiber web width, a fiber areal weight, a resin viscosity, a voltage across a dimension of the unconsolidated composite material, an electrical measurement across the dimension of the unconsolidated composite material, an electromagnetic measurement across the dimension of the unconsolidated composite material, an acoustic measurement across the dimension of the unconsolidated composite material, a tension, or an image of a prepreg at a location in the composite material manufacturing system.

Clause 34. A computer program product for manufacturing an unconsolidated composite material, the computer program product comprising a computer-readable storage medium having program instructions embodied therewith, the program instructions executable by a computer system to cause the computer system to perform a method of: receiving sensor data from a sensor system for a composite material manufacturing system, wherein the sensor data is received during manufacturing of the unconsolidated composite material by the composite material manufacturing system; determining a set of predicted properties for a number of portions of the unconsolidated composite material as completed from manufacturing by the composite material manufacturing system using the sensor data; and identifying a quality level for the number of portions of the unconsolidated composite material based on the set of predicted properties for the number of portions of the unconsolidated composite material.

Thus, the illustrative examples provide a method, apparatus, system, and computer program product for predicting properties that unconsolidated composite materials will have upon completion of manufacturing the unconsolidated composite materials while the manufacturing process occurs. Further, the illustrative examples can also perform corrective actions using these predictions to change the properties that the unconsolidated composite materials will have as completed from manufacturing to form a completed product.

In the different illustrative examples, a composite material manager performs operations to determine a set of predicted properties for a number of portions of the unconsolidated composite material has completed from manufacturing. In other words, the prediction is for the portions of the uncured composite material when the manufacturing of the number of portions of uncured composite materials is completed to form a completed product.

As a result, a reduction in at least one of expense or the amount of time needed to manufacture unconsolidated composite materials can be realized using composite material manager 212 to predict quality level portions of unconsolidated composite material. Further the reduction in the can occur by performing corrective actions during manufacturing of the unconsolidated composite material such that the additional amounts of unconsolidated material that are in tolerance occur. As a result, additional manufacturing, reworking, or discarding of unconsolidated composite material can be reduced.

In one illustration, composite material manufacturing system 208 can be managed by composite material management system 202 with greater efficiency through improvements in real time prediction of one or more characteristics for an unconsolidated composite material such as a prepreg. By predicting characteristics in real time, while prepreg is still being manufactured or processed in composite material manufacturing system 208, adjustments can be made to composite material manufacturing system 208 such that other portions of the prepreg being manufactured are not out of tolerance. As a result, the amount of prepreg discarded or recycled can be reduced by predicting one or more characteristics of the unconsolidated composite material in real time.

In these examples, data can be received in real time from composite material manufacturing system 208. In other words, receiving sensor data in real time means that the sensor data is received as composite material manufacturing system 208 operates to manufacture an unconsolidated composite material. The sensor data is sent in real time as quickly as possible without intentional delays. In analyzing the sensor data in real time, this data is processed as quickly as possible as the sensor data is received.

This prediction of the characteristic can be made using a characteristic prediction system. This characteristic prediction system can be implemented in composite material management system 202 for use by composite material manager 212. The characteristic predicted by this system can also be referred to as a property of the unconsolidated composite material, such as properties 228. This characteristic can be selected from at least one of a prepreg fiber areal weight, prepreg resin content, a material thickness, prepreg thickness, prepreg infiltration level, a prepreg tack level, resin film areal weight, resin film thickness, release liner areal weight, release liner thickness, a laminate structural property, or other characteristic.

In some examples, including this illustrative example, the prediction of a number of characteristics of the unconsolidated composite material can be made in real time.

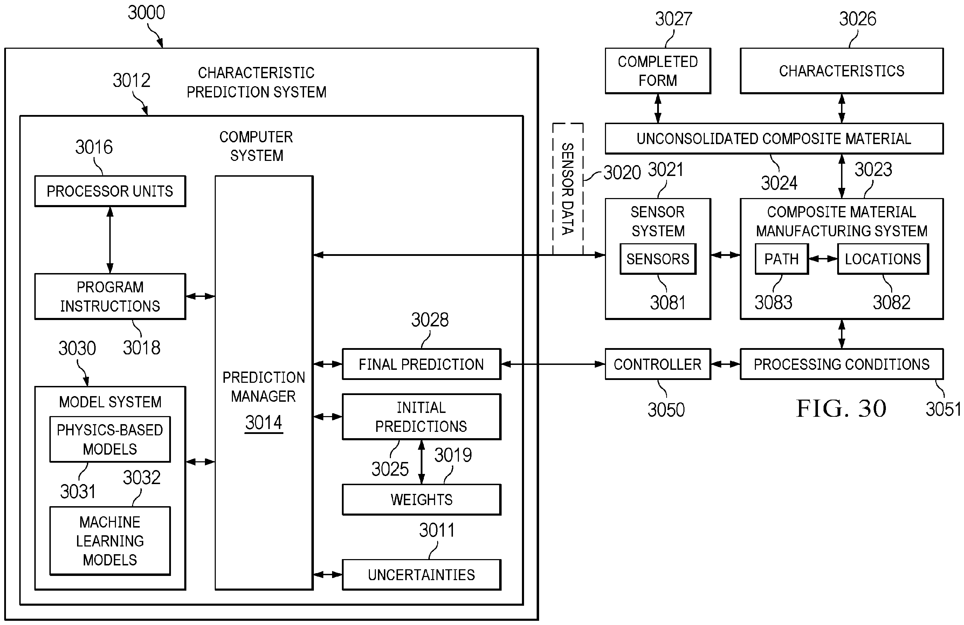

With reference now to Figure 30, an illustration of a block diagram of a characteristic prediction system is depicted in accordance with an illustrative example. In some examples, including this example, characteristic prediction system 3000 can be used to predict a number of characteristics 3026 of unconsolidated composite material 3024 in completed form 3027 during manufacturing of unconsolidated composite material 3024 using composite material manufacturing system 3023. In other words, a number of characteristics 3026 is predicted for unconsolidated composite material 3024 prior to the completion of manufacturing unconsolidated composite material 3024. In some illustrative examples, composite material manufacturing system 3023 is an example of composite material manufacturing system 208 in Figure 2 and can be, for example, a carbon fiber prepreg coating line, a reinforcing fiber resin impregnation line, a resin mix process system, a resin filming line, a prepreg system, a slitting process system, and other suitable composite material manufacturing systems.

In some examples, including this example, characteristic prediction system 3000 comprises computer system 3012 and prediction manager 3014.

As depicted, prediction manager 3014 is located in computer system 3012. Prediction manager 3014 can be implemented in software, hardware, firmware or a combination thereof. When software is used, the operations performed by prediction manager 3014 can be implemented in program instructions configured to run on hardware, such as a processor unit. When firmware is used, the operations performed by prediction manager 3014 can be implemented in program instructions and data can be stored in persistent memory to run on a processor unit. When hardware is employed, the hardware can include circuits that operate to perform the operations in prediction manager 3014.

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

As used herein, "a number of" when used with reference to items, means one or more items. For example, "a number of operations" is one or more operations.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Computer system 3012 is a physical hardware system and includes one or more data processing systems. When more than one data processing system is present in computer system 3012, those data processing systems are in communication with each other using a communications medium. The communications medium can be a network. The data processing systems can be selected from at least one of a computer, a server computer, a tablet computer, or some other suitable data processing system.

As depicted, computer system 3012 includes a number of processor units 3016 that are capable of executing program instructions 3018 implementing processes in the illustrative examples. In other words, program instructions 3018 are computer-readable program instructions.

As used herein, a processor unit in the number of processor units 3016 is a hardware device and is comprised of hardware circuits such as those on an integrated circuit that respond to and process instructions and program code that operate a computer. When the number of processor units 3016 executes program instructions 3018 for a process, the number of processor units 3016 can be one or more processor units that are in the same computer or in different computers. In other words, the process can be distributed between processor units 3016 on the same or different computers in computer system 3012.

Further, the number of processor units 3016 can be of the same type or different types of processor units. For example, the number of processor units 3016 can be selected from at least one of a single core processor, a dual-core processor, a multi-processor core, a general-purpose central processing unit (CPU), a graphics processing unit (GPU), a digital signal processor (DSP), or some other type of processor unit.

In some examples, including this illustrative example, prediction manager 3014 receives sensor data 3020 in real time from sensors 3081 in sensor system 3021 for composite material manufacturing system 3023 during manufacturing of unconsolidated composite material 3024 by composite material manufacturing system 3023.

In these examples, sensor system 3021 can include a number of different types of sensors 3081. For example, sensor system 3021 can comprise sensors selected from at least one of a beta gauge sensor, a thickness sensor, a width sensor, a temperature sensor, a speed sensor, a gap sensor, an optical sensor, a Fourier transform infrared (FTIR) spectrometer, a tension sensor, a camera, a thermal camera, an optical sensor, a weight sensor, a chemical spectroscopy sensor, or other suitable types of sensors. Sensors 3081 can be selected from at least one of sensors integrated into composite material manufacturing system 3023 or sensors that are located relative to composite material manufacturing system 3023.

Sensors 3081 are in locations 3082 in composite material manufacturing system 3023. For example, sensors 3081 can be positioned in locations 3082 along path 3083. In some examples, including this example, path 3083 is the route that input material takes within composite material manufacturing system 3023 for processing to manufacture unconsolidated composite material 3024 in completed form 3027.

In some examples, including this example, unconsolidated composite material manufacturing systems can be an example of composite material manufacturing system 208 in Figure 2, unconsolidated composite material production physical plant 404 in Figure 4, composite material manufacturing system 500 configured to perform a filming process in which resin is coated onto film paper in Figure 5, and composite material manufacturing system 600 configured to manufacture an unconsolidated composite material in the form of prepreg in Figure 6, or other types of composite material manufacturing systems.

Prediction manager 3014 generates initial predictions 3025 for a number of characteristics 3026 of unconsolidated composite material 3024 in completed form 3027 in real time during manufacturing of the unconsolidated composite material 3024 in composite material manufacturing system 3023 using model system 3030. In some examples, including this example, model system 3030 comprises a number of physics-based models 3031 and a number of machine learning models 3032 trained using historical sensor data.

The number of characteristics 3026 is one or more characteristics of unconsolidated composite material 3024. In some illustrative examples, the number of characteristics 3026 are characteristics or attributes of unconsolidated composite material 3024 that are of interest in evaluating unconsolidated composite material 3024. These characteristics can be used to determine whether unconsolidated composite material 3024 meets criteria or standards for use in manufacturing composite components. Depending on the level characteristics, unconsolidated composite material 3024 may be suitable or unsuitable for use. Additionally, depending on the level for value of a number of characteristics 3026, unconsolidated composite material 3024 may be suitable for different uses or manufacturing different composite components.

Further in the illustrative examples, the number of characteristics 3026 can be determined at different times or locations in composite material manufacturing system 3023 during the manufacturing of unconsolidated composite material 3024. In other words, these characteristics are not limited to unconsolidated composite material 3024 in completed form 3027.

In some examples, including this illustrative example, the number of physics-based models 3031 can be selected from at least one of thermal model, an infiltration model, a rheological model, a permeability model that calculates a level of resin filtration, a thickness model that calculates a reduction in a thickness of a composite prepreg, or a resin infiltration model that calculates the level of resin filtration.

Prediction manager 3014 determines final prediction 3028 in real time for the number of characteristics 3026 based on initial predictions 3025. With the real time generation of final prediction 3028 during manufacturing of unconsolidated composite material 3024, controller 3050 can adjust a number of processing conditions 3051 for composite material manufacturing system 3023 based on final prediction 3028. In some examples, including this illustrative example, controller 3050 can take a number of different forms. For example, controller 3050 can be composite material in composite material manager 212 in Figure 2.

In other illustrative examples, prediction manager 3014 generates initial predictions 3025 for the number of characteristics 3026 of unconsolidated composite material 3024 in completed form 3027 in real time during manufacturing of unconsolidated composite material 3024 in composite material manufacturing system 3023 using sensor data 3020 received in real time from sensor system 3021 for composite material manufacturing system 3023, a number of physics-based models 3031, and a number of machine learning models 3032. In this example, machine learning models 3032 is trained using historical sensor data to generate a number of the initial predictions 3025.

Additionally, prediction manager 3014 determines uncertainties 3011 for initial predictions 3025 for the number of characteristics 3026 of unconsolidated composite material 3024 in completed form 3027 from the number of physics-based models 3031 and the number of machine learning models 3032 trained using historical sensor data in real time during manufacturing of unconsolidated composite material 3024. In other words, uncertainties 3011 can be determined in real time in response to receiving sensor data 3020 in real time.

In these illustrative examples, uncertainties 3011 have a number of different sources. For example, uncertainties 3011 can be uncertainties in initial predictions 3025 generated by machine learning models 3032. These machine learning models can include a probability that an initial prediction is accurate. This probability indicates the level of certainty in the initial prediction. As another example, physics-based models 3031 can also have uncertainties. For example, physics based models for permeability can have a range of different values that may provide different thicknesses. This distribution can be used to identify an uncertainty in the initial predictions 3025 generated by physics-based models 3031.

As another example, uncertainties can be present in sensor data 3020. For example, a thickness sensor can generate a range of measurements for the same thickness of the material. This range can be used to identify uncertainties 3011 in initial predictions 3025.

Uncertainties 3011 can be from different sources. For example, uncertainties 3011 can be caused by at least one of the model, sensor data used by the model, or input material. A model may not predict a characteristic that matches the characteristic of the unconsolidated composite material. This prediction is different from the prediction to the actual measurement of the characteristic and the difference can be used to determine the uncertainty of the prediction made by the model.

In other examples, the model may be accurate in predicting the characteristic, but the sensor data used by the model may have uncertainty. For example, a temperature sensor may generate a range of values for temperature measurements that vary from the actual temperature. This variance is an uncertainty that can cause the prediction of the characteristic made by the model to not match the characteristic of the unconsolidated composite material even though the model itself is accurate.

Additionally, the input material may also have uncertainties from the specified values. For example, roll weights for input material in the form of fiber can have uncertainty. For example, uncertainties can be present in at least one of the paper weight or resin weight for the input material.

With uncertainties 3011, prediction manager 3014 associates weights 3019 with initial predictions 3025 for the number of characteristics 3026 using uncertainties 3011. With this example, prediction manager 3014 determines final prediction 3028 for the number of characteristics 3026 based on initial predictions 3025 and weights 3019 associated with initial predictions 3025. For example, final prediction 3028 for the number of characteristics 3026 can be determined by prediction manager 3014 based on determining initial predictions 3025 and weights 3019 associated with the initial predictions using at least one of a voting regression, a stacking regression, a bagging estimator, or other canopy for fusing or selecting a final candidate or choice from multiple candidates.

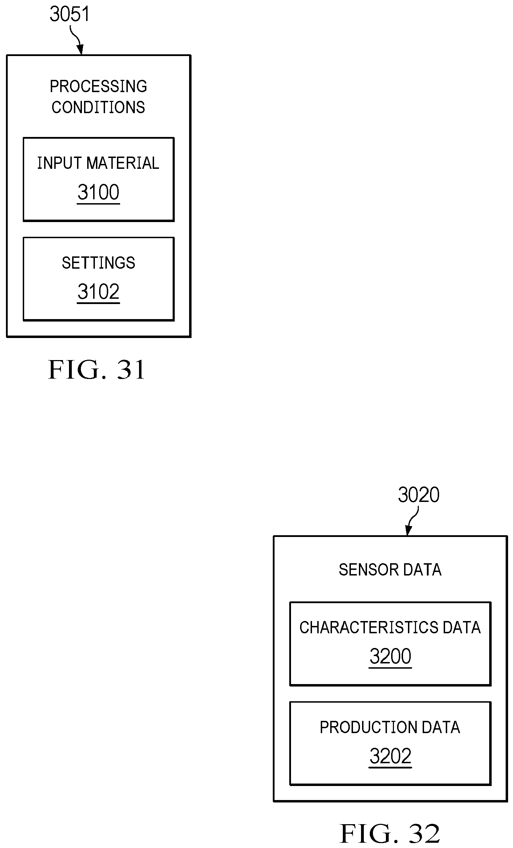

Turning next to Figure 31, an illustration of a block diagram for processing conditions is depicted in accordance with an illustrative environment. In the illustrative examples, the same reference numeral may be used in more than one figure. This reuse of a reference numeral in different figures represents the same element in the different figures.

In some examples, including his illustrative example, the number of processing conditions 3051 and parameters that are set for selection before manufacturing of unconsolidated composite material 3024 begins. These processing conditions can also be referred to as preset conditions.

In some examples, including this example, the number of processing conditions 3051 can take a number of different forms. For example, processing conditions 3051 can include at least one of input material 3100 to composite material manufacturing system 3023 or settings 3102 for composite material manufacturing system 3023.

In some examples, including these examples, input material 3100 comprises different types of materials that can be used as inputs to composite material manufacturing system 3023 to manufacture unconsolidated composite material 3024. Input material 3100 can include at least one of a resin, a type of fiber, a film, a number of tows, or some other material that can be input into composite material manufacturing system 3023 for use in manufacturing unconsolidated composite material 3024.

The type of fiber used to manufacture a prepreg can affect characteristics 3026 such as fiber areal weight. For example, fiber with high yield (grams per meter) yields higher fiber areal weight (FAW) compared to a fiber with lower yield if all the other conditions are fixed. As another example, increasing the tows means more fibers are present in a unit area. This increase can change characteristics 3026 such as thickness, fiber areal weight, and resin content in the manufactured prepreg.

Further, in some examples including this example, settings 3102 can include at least one of a temperature, a resin pool temperature, a speed, an ambient temperature, a nip gap, and initial nip gap between nip rollers, a pressure, an ambient humidity, a fiber comb angle, or some other setting that can be made to composite material manufacturing system 3023.

In some examples, including this example, fiber comb angle is an example of settings 3102 that determines how close fiber tows are to each other before processing begins. As the fiber tows become closer, more fibers are present in a unit area. This increase in fibers in a unit area can result in a higher fiber areal weight. Settings 3102, temperatures, can be set at nip rollers. Nip rollers are pairs of rollers that apply pressure on the prepreg for infiltration of resin through the fibers. These nip rollers are heated from the inside and the temperature is set before the run to manufacture the prepreg. In these examples, this temperature is fixed throughout the run.

Also, in some examples including this example, temperatures are set at heating and chilling plates. For example, two heating plates can be used to keep the temperature of the prepreg at a level such that the infiltration of resin becomes easier. Chilling plates can be located after the last nip rollers. Thees plates cool down the prepreg to room temperature before rolling the prepreg to final product.

Another setting is a line running speed, which can be set in conjunction with the setting of the set temperatures for the nip roller and plate. Speed is a measure of how fast material moves within the composite material manufacturing system and is typically constant during a run. Line tension can be set for the film setoff and rewinder. Ambient temperature and humidity can also be set for the run.

With reference now to Figure 32, an illustration of a block diagram of sensor data is depicted in accordance with an illustrative example. As depicted, sensor data 3020 generated by sensor system 3021 can take a number of different forms. For example, sensor data 3020 can be at least one of characteristics data 3200 or production data 3202. In some illustrative examples, the number of characteristics data is data for a number of characteristics 3026 that are of interest in evaluating unconsolidated composite material 3024.

In some examples, including this example, characteristics data 3200 is information about unconsolidated composite material 3024 as it is being manufactured. This characteristics data can include materials used to manufacture unconsolidated composite material 3024 in completed form 3027. For example, characteristics data 3200 can include at least one of an aerial weight, a prepreg fiber areal weight (FAW), a prepreg resin content, resin viscosity of resin material, a prepreg thickness, a prepreg infiltration level, a prepreg tack level, a resin film areal weight, a resin film thickness, a release liner areal weight, a release liner thickness, or other characteristic of the unconsolidated composite material 3024 during the different stages of manufacturing unconsolidated composite material 3024. For example, characteristics data 3200 can be for unconsolidated composite material 3024 at different locations within composite material manufacturing system 3023 in addition to completed form 3027. These characteristics can be used to evaluate unconsolidated composite material 3024. This evaluation can be performed to identify the suitability for using unconsolidated composite material 3024 in manufacturing composite parts or for other uses.

Production data 3202 is information about the processes used to process materials to form unconsolidated composite material 3024 in completed form 3027. For example, production data 3202 can include at least one of a temperature, a tension, a pressure, a force, a thickness of the unconsolidated composite material, a speed, a gap width, a resin viscosity of resin used as inputs. In some examples, including this example, production data 3202 can be different from settings 3102 in Figure 31. Settings 3102 are the settings made used to configure or set processing conditions in composite material manufacturing system 3023. Production data 3202 can be measurements of the parameters based upon settings 3102. In other words, production data 3202 may differ from settings 3102.

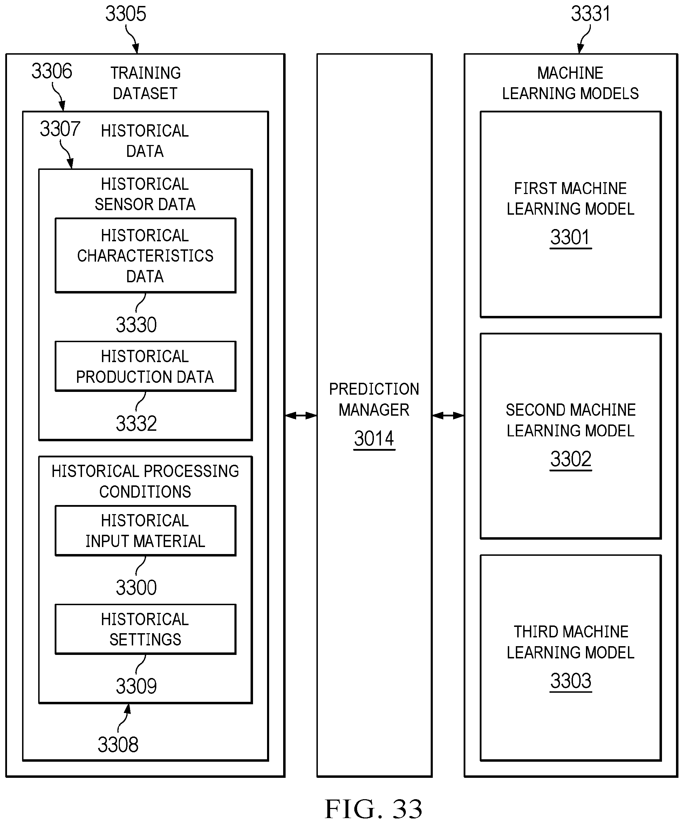

With reference next to Figure 33, an illustration of a block diagram of machine learning models is depicted in accordance with an illustrative example. Machine learning models 3331 can include first machine learning model 3301, second machine learning model 3302, and third machine learning model 3303. These machine learning models can be trained by prediction manager 3014 using different combinations of data in training dataset 3305.

As depicted, training dataset 3305 includes historical data 3306 such as historical sensor data 3307 and historical processing conditions 3308. In some examples, including this example, historical sensor data 3307 is data generated or collected from previous manufacturing operations performed to manufacture unconsolidated composite materials. For example, historical data 3307 can be from a number of composite material manufacturing systems during manufacturing of unconsolidated composite materials. The number of composite material manufacturing systems can include the composite material manufacturing system for which addictions are to be made using the trained machine learning model models.

In this illustrative example, historical sensor data 3307 includes historical characteristics data 3330 and historical production data 3332, which can be characteristics data 3200 and production data 3202 in sensor data 3020 in Figure 32 generated from previous manufacturing of an unconsolidated composite material. Historical processing conditions 3308 can be historical input material 3300 and historical settings 3309 such as input material 3100 and settings 3102 in processing conditions 3051 in Figure 31 generated from previous manufacturing of an unconsolidated composite material.

In these examples, historical data 3306 can be for the same type of composite manufacturing system. When training machine learning models 3331 to predict characteristics for deposit prepreg manufactured by a hot melt prepreg machine, historical data 3306 can be obtained from other hot melt prepreg machines of the same type as the hot melt prepreg machine for which predictions of characteristics are to be made. In other words, historical data 3306 may not include historical data from a solvent-based prepreg machine or other systems that utilize bath, slurry, spray, or other mechanisms to apply resin to the carrier fibers.

This data can be from at least one of the actual hot melt prepreg machine in which predictions of the characteristics are to be made for other hot melt prepreg machines of the same type. By the same type means the other machines may be from the same manufacturer, model, or type of manufacturing process.

In some examples, including this illustrative example, first machine learning model 3301 is trained using historical sensor data 3307. Second machine learning model 3302 is trained using historical sensor data 3307 and historical processing conditions 3308. Further in some examples including this example, third machine learning model 3303 is trained using historical processing conditions 3308 and historical characteristics data 3330. In these examples, historical processing conditions 3308 can include at least one of historical input material 3300 for historical settings 3309. In other words, one or both of these types of both of these processing conditions can be used for training.

Historical characteristics data 3330 indicates a number of historical characteristics that were present from using historical processing conditions 3308. In some illustrative examples, the training uses historical processing conditions 3308 and a number of historical characteristics resulting from those historical processing conditions. In other words, the training data used to train third machine learning model 3303 includes historical processing conditions 3308 and historical characteristics that result from using those processing conditions.

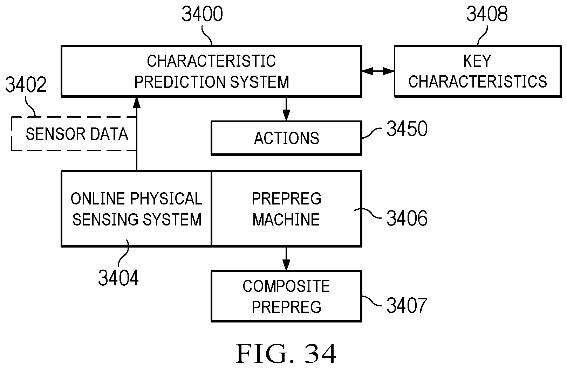

With reference now to Figure 34, an illustration of data flow for real time prediction of characteristics for a composite prepreg is depicted in accordance with an illustrative example. In some examples, including this example, in this data flow, characteristic prediction system 3400 can be implemented using characteristic prediction system 3000 in Figure 30.

In some examples, including this example, characteristic prediction system 3400 receives sensor data 3402 from online physical sensing system 3404. Online physical sensing system 3404 comprises the collection of sensors that generate sensor data 3402 from monitoring prepreg machine 3406. In some examples, including this example, online physical sensing system 3404 is an example of an implementation for sensor system 3021 in Figure 30.

Online physical sensing system 3404 can be integrated on or in prepreg machine 3406. This system can include, for example, beta gauge sensors, thickness sensors, width sensors, temperature sensors, speed sensors, gap sensors, optical sensors, Fourier transform infrared (FTIR) spectrometers, tension sensors, and other suitable types of sensors. These sensors generate sensor data 3402 in real time data about the physical state of composite prepreg 3407 as this material is being manufactured and also includes data about prepreg machine 3406.

Prepreg machine 3406 is a system that manufactures composite prepreg 3407 and is an example of an implementation for composite material manufacturing system 3023 in Figure 30. Composite prepreg 3407 is an example of unconsolidated composite material 3024 in Figure 30.

In response to receiving sensor data 3402, characteristic prediction system 3400 predicts a number of key characteristics 3408 for composite prepreg 3407 in real time. In some examples, including this example, the number of key characteristics 3408 is an example of number of characteristics 3026 in Figure 30. Further, in some examples including this example, a key characteristic is a characteristic that is selected as being relevant or used in evaluating composite prepreg 3407. In some examples, including this example, the number of key characteristics 3408 can be used for automated non-destructive evaluation of composite prepreg 3407. In some examples, including this illustrative example, the number of key characteristics 3408 can be selected from at least one of fiber areal weight (FAW), resin content (RC), thickness, level of infiltration, or other characteristic relating to composite prepreg 3407 that is of interest in evaluating this material.

With the prediction of the number of key characteristics 3408, the operation of prepreg machine 3406 can be adjusted in real time while composite prepreg 3407 is being manufactured. In some examples, including this example, characteristic prediction system 3400 can perform a number of actions 3450. In some examples, including this example, the number of actions 3450 can include at least one of sending instructions to prepreg machine 3406 to adjust the operation of prepreg machine 3406, issuing a warning, halting the manufacturing process performed by prepreg machine 3406, or perform some other suitable action.

As a result, the portions of composite prepreg 3407 that meet desired characteristics for key characteristics 3408 can be increased by making these adjustments in real time as composite prepreg 3407 is being manufactured.

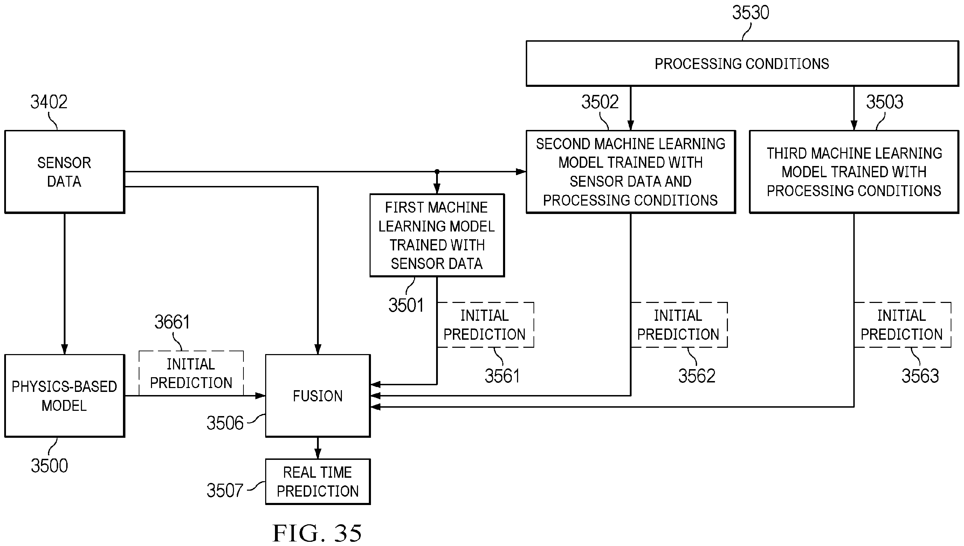

With reference next to Figure 35, an illustration of data flow using initial predictions from models to generate real time predictions of characteristics for a composite prepreg is depicted in accordance with an illustrative example. In some examples, including this example, this data flow can be implemented in characteristic prediction system 3400 to generate real time predictions of key characteristics 3408.

In some examples, including this example, models include physics-based model 3500, first machine learning model trained with sensor data 3402, second machine learning model trained with sensor data and processing conditions 3502, and third machine learning model trained with processing conditions 3530. As depicted, first machine learning model trained with sensor data 3501 is an example of first machine learning model 3301 in Figure 33, second machine learning model trained with sensor data and processing conditions 3502 is an example of second machine learning model 3302 in Figure 33, and third machine learning model trained with processing conditions 3403 is an example of third machine learning model 3303 in Figure 33.

In some examples, including this example, sensor data 3402 is input into physics-based model 3500, first machine learning model trained with sensor data 3501, second machine learning model trained with sensor data and processing conditions 3502. In some examples, including this example, processing conditions 3530 are input into second machine learning model trained with sensor data and processing conditions 3502 and third machine learning model trained with processing conditions 3530.

In some examples, including this example, processing conditions 3530 can be preset conditions reflecting the overall settings for prepreg machine 3406. These conditions can be set before manufacturing of composite prepreg 3407 begins. These settings can be set or adjusted during the manufacturing of composite prepreg 3407 by prepreg machine 3406. In some examples, including this example, these settings can be, for example, settings such as a temperature of the resin pool, initial gaps between the nip rollers, an ambient temperature, an ambient humidity, and an angle of the fiber comb. These processing conditions are usually fixed for a specific prepreg production run. These settings can significantly influence key characteristics 3408 for composite prepreg 3407 such as a higher comb angle value and can yield a higher fiber areal weight.

Processing conditions 3530 do not need to be tracked with sensors. These processing conditions do not typically change during the manufacturing of a composite prepreg. Processing conditions 3530 can be, for example, input material or settings for a prepreg machine.

In these examples, data collected from multiple runs from manufacturing a composite prepreg can be used in which a number of different processing conditions are present. This data can be for key characteristics resulting from the number of processing conditions. The key characteristics detected for the composite and the number of processing conditions can form a training dataset for use to train third machine learning model trained with processing conditions 3530.

For example, fiber areal weight of composite prepreg resulting from runs using different numbers of fiber tows can be used in training third machine learning model trained with processing conditions 3530. In some examples, including this example, the number of tows and the fiber areal weight of the composite prepreg resulting from runs form a training dataset. For example, a fiber areal weight of the composite prepreg resulting from using 34 fiber tows, 32 fiber tows, and 40 fiber tows in different runs can be collected as training data in a training dataset that is used to train this machine learning model.

In other examples, training data can be collected for the characteristics of the composite prepreg resulting from runs using different fiber comb angles. For example, characteristics of composite prepreg can be determined from runs manufacturing the composite prepreg using a 0 degree fiber comb angle and a 31 degree fiber comb. Further, third machine learning model trained with processing conditions 3530 resulting from being trained with these training datasets can receive processing conditions as an input and output a prediction of the characteristics based on the processing condition or conditions that are input.

With these inputs, models generate initial predictions. For example, physics-based model 3500 outputs initial prediction 3561; first machine learning model trained with sensor data 3402 outputs initial prediction 3561, second machine learning model trained with sensor data and processing conditions 3502 outputs initial prediction 3562, and third machine learning model trained with processing conditions 3403 outputs initial prediction 3563.

Physics-based model 3500 does not rely on data from previous runs for manufacturing of a composite prepreg. For example, physics-based model 3500 can implement a permeability equation. This equation is used to calculate the level of infiltration or the reduction in the thickness of composite prepreg as initial prediction 3561. The level of infiltration provides the compaction or reduction in thickness of the prepreg. The level of infiltration is an amount resin that has infiltrated into the dry fiber. This characteristic of thickness can be defined as a distance or a percentage of the thickness. This type of model uses real time sensor data and a differential equation that governs the infiltration phenomenon.

In some examples, including this example, a first machine learning model trained with sensor data 3501 has been trained using a history of sensor data collected during previous composite prepreg production runs. For example, this machine learning model is being trained using basis weight sensor history collected during previous prepreg runs and fiber areal weight (FAW) values obtained from analyzing the prior composite prepregs. Once trained, this model can receive basis weight values from a beta gauge sensor in prepreg machine 3406 in real time and output fiber areal weight prediction as initial prediction 3562 in real time.

Further, in some examples including this illustrative example, a second machine learning model trained with sensor data and processing conditions 3502 is trained using both sensor data and preset conditions from previously run composite prepreg runs. For example, this machine learning model can be trained on both fiber comb angle and a slitting preset condition and historical sensor data of the basis weight. With this training, the machine learning model can output initial prediction 3562 of fiber areal weights in real time with the preset condition of fiber comb angle and the real time sensor data of basis weight as inputs.

Further in these examples, third machine learning model trained with processing conditions 3530 can be training using processing conditions and historical key characteristics that are to be predicted. For example, previous measurements of fiber areal weight from previously run composite prepreg productions can be used with the different fiber comb angles from those runs to train this machine learning model.

This machine learning model outputs initial prediction 3563 of fiber areal weight for a selected fiber comb angle.

These initial predictions are sent fusion 3506. Fusion 3506 can be implemented in characteristic prediction system 3400. This component can merge, fuse, combine, or otherwise use these initial predictions to generate real time prediction 3507. This real time prediction is an example of final prediction 3028 in Figure 30.

In some examples, including this example, fusion 3506 can use any combination of two or more initial predictions from the different models. In other words, fusion 3506 can use all or some combination of initial predictions from these models to generate real time prediction 3507.

For example, the real time prediction fiber areal weight and resin content may be the characteristics desired. With some examples, including this example, sensor data 3402 is the output of a beta gauge sensor. The beta gauge sensor data is used in physics-based model 3500 along with paper and resin weight used in the prepreg process to obtain a real time source of fiber areal weight and resin content. Further in some examples including this example, a third machine learning model trained with processing conditions 3530 can be built between end-item inspection fiber areal weight and fiber comb angles of previously performed prepreg runs. The initial predictions of fiber areal weight prediction obtained from this machine learning model is based on fiber comb angle and fiber areal weight. The resin content prediction obtained from physics-based model 3500 based on basis weight sensor data. These predictions are is fused together at this stage to obtain real time prediction of fiber areal weight and resin content.

Fusion 3506 implements a number of different techniques to generate real time prediction 3507 from these initial predictions. For example, without limitation, a fusion operation can generate real time prediction 3507 from multiple models and can involve several different fusion methods.

For example, an average of the initial predictions for values of a key characteristic form different models in the form. For example, with two machine learning models and one physics-based model, initial predictions of which fiber areal weight can be obtained. These predictions can be referred to as FAW_(ML_1 ), FAW_(ML_2 ), and FAW_PB. The fusion operation can be FAW_final=(FAW_(ML_1 )+FAW_(ML_2 )+FAW_PB )/ 3. Fusion is the operation of combining different predictions from different models into single prediction.

Further, each prediction can be weighted to give different predictions different levels and influence in generating real time prediction 3507. This becomes useful when initial prediction of one model is considered more accurate and trustworthy than initial predictions from other models. These weights can be determined in a number of ways. For example, weighting can be based upon user experience or uncertainties calculated from the models. For example, Bayesian machine learning models, such as Bayesian Linear Regression and Gaussian process regression do not only provide a prediction but also the uncertainty associated with prediction.

These uncertainties can be used in weighting the predictions. For example, inverse variance weighting can use these uncertainties in the fusion of multiple model predictions. Inverse variance weighting weights each model's prediction inversely proportional to its uncertainty. The higher the uncertainty for a prediction from a model is, means that a lower weighting is given to the predictions from that model.

For a fusion of two model predictions, if the first model's uncertainty is lower than the second, the result of the fusion will be closer to the result of the first model. Also, the fusion of results from different models does not have to happen in a single operation. Different fusion operations can happen successively and each fusion operation can use a different algorithm.

For example, if the initial predictions of fiber areal weight are from two machine learning models and a physics based model, one can use inverse-variance weighting to fuse the results of machine learning models into a single fiber areal weight prediction. Then, this prediction can be fused with the fiber areal weight prediction from the physics-based model using a Kalman Filter.

In other words, fusion is the operation of bringing predictions from different models together to obtain a final prediction. Thus, the predictions by fusion 3506 can include at least one of averaging, inverse variance weighting, Kalman Filter, voting regressor, bagging regressor, stacking regressor, or other suitable techniques. Further in some examples, including this example, a selected fusion technique implemented by fusion 3506 can be applied to the predictions of all of the models, or multiple types of fusion techniques can be applied to a subset of models in a successive manner.

Illustrations of a data flow in Figures 34 and 35 are presented as one example of data flows that can be implemented in a characteristic prediction system and not meant to limit the manner in which dataflow can be implemented in other examples. For example, fusion 3506 can fuse sensor data 3402 with one of the initial predictions made by one of the models. For example, real time prediction 3507 of thickness can be obtained by fusing raw thickness in sensor data 3402 with physics-based model 3500 of permeability that predicts the reduction in thickness.

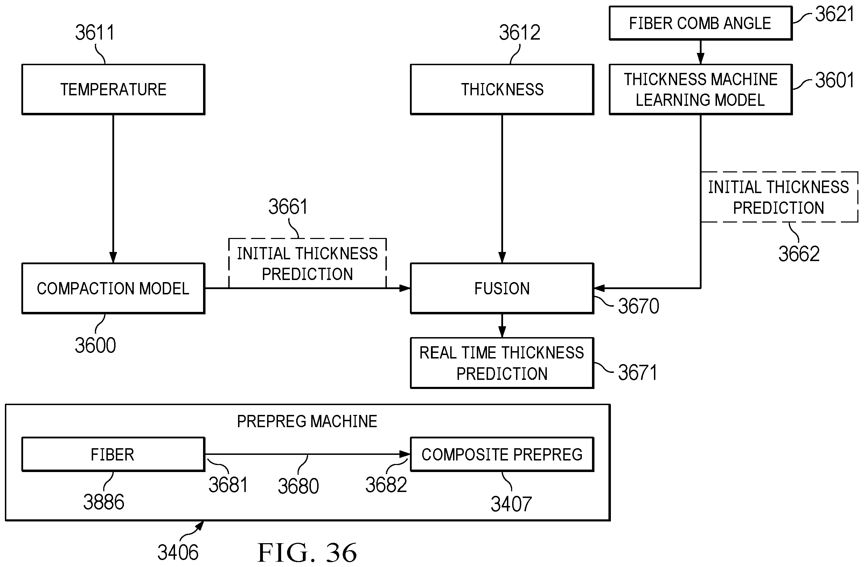

With reference next to Figure 36, an illustration of dataflow for real time thickness prediction is depicted in accordance with an illustrative example. In some examples, including this example, compaction model 3600 is a physics-based model and thickness machine learning model 3601 is a machine learning model trained using historical processing conditions.

Compaction model 3600 outputs initial thickness prediction 3661 using sensor data in the form of temperature 3611. Thickness machine learning model 3601 is a machine learning model trained using a processing condition in the form of fiber comb angle 3621. Thickness machine learning model 3601 outputs initial thickness prediction 3662 with fiber comb angle 3621 as an input.

In some examples, including this example, these initial thickness predictions are sent to fusion 3670 for processing to generate real time thickness prediction 3671.

Further, sensor data such as temperature 3611 used to generate initial thickness prediction 3661 can be made by temperature sensors at different locations between beginning 3681 and end 3682 of path 3680 in prepreg machine 3406. In some examples, including this example, fiber 3886 is introduced at beginning 3681 of path 3680 and composite prepreg 3407 is output at end 3682 of path 3680.

By measuring temperature 3611 at different locations along path 3680, compaction model 3600 can generate initial thickness predictions fiber for those locations along path 3680.

For example, compaction model 3600 can generate initial thickness prediction 3661 for different locations along the path 3680 in prepreg machine 3406. These different predictions can be fused with different measurements of the thickness by sensors that may be located in the locations along the path to success.

In some examples, including this example, depending on the locations at which temperature 3611 is measured along path 3680, different amounts uncertainty can be present in initial thickness prediction 3661 generated by compaction model 3600. For example, uncertainty can decrease as measurements used by a model are taken closer to end 3682 of path 3680 when the fibers being processed are closer to becoming the completed form of composite prepreg 3407.

In some examples, including this example, thickness 3612 can be used by fusion 3670 to determine the certainty in initial thickness prediction 3661 made by compaction model 3600. For example, thickness sensors are used to generate measurements of thickness 3612 at one or more locations corresponding to the locations at which temperature 3611 was measured. These thicknesses can be compared to the initial thickness predictions generated by compaction model 3600 by fusion 3670 to determine the uncertainty of those initial predictions.

As another example, uncertainty can also be changed as the accuracy of measurements made by different sensors along path 3680 change. In other words, different sensors along path 3680 can have different levels of accuracy resulting in different levels of uncertainty in sensor data generated by the sensors. In some examples, including this example, a sensor that is operating out of tolerance will result in initial predictions having a higher level of uncertainty as compared to initial predictions generated using sensor data that is operating within tolerance.

Further, thickness machine learning model 3601 can also output the probability that initial thickness prediction 3662 is correct. This probability can also be used as the uncertainty for that prediction. As a result, fusion 3670 can use the uncertainty in initial thickness prediction 3661 and initial thickness prediction 3662 in fusing these predictions to form real time thickness prediction 3671.

Thus, real time thickness prediction 3671 is generated by fusion 3670 through fusing initial thickness prediction 3661 and initial thickness prediction 3662. In these examples, fusion of these predictions can take into account uncertainties in the predictions. In these examples, uncertainties in the predictions can affect at least one of uncertainties caused by the model or certainties in sensor data used in the predictions.

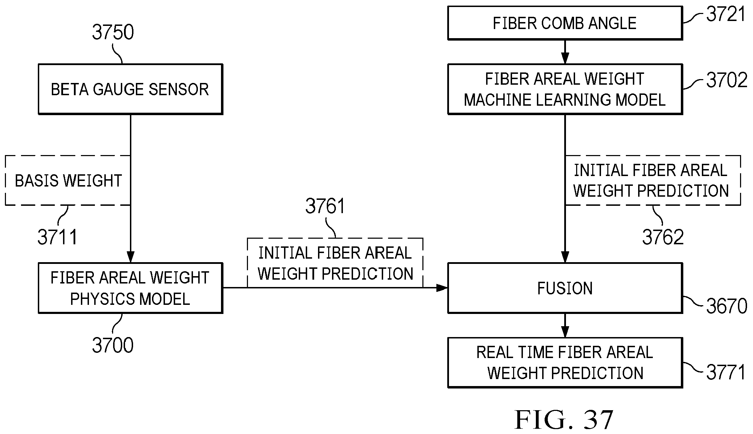

Turning now to Figure 37, an illustration of dataflow for real time fiber areal weight prediction is depicted in accordance with an illustrative example. In some examples, including this example, fiber areal weight physics model 3700 is a physics-based model and fiber areal weight machine learning model 3702 is a machine learning model trained using historical processing conditions in the form of fiber comb angles.

In some examples, including this example, fiber areal weight physics model 3700 outputs initial fiber areal weight prediction 3761 in real time in response to receiving basis weight 3711 from beta gauge sensor 3750. This model subtracts resin and paper weights from basis weight 3711 to generate initial fiber areal weight prediction.

Fiber areal weight machine learning model 3702 has been trained using fiber comb angles and the resulting fiber angle weight measured from using those angles. Fiber areal weight machine learning model 3702 outputs initial fiber areal weight prediction 3762 in response to receiving and a processing condition in the form of fiber comb angle 3721 as an input.

These initial weight predictions are received by fusion 3670. This fusion component uses these initial predictions to generate real time fiber areal weight prediction 3771.

In some examples, including this example, beta gauge sensor readings have an uncertainty. The reading and uncertainty of the beta gauge sensor are represented by /3 and $\sigma_\beta^2$, respectively. The film roll weights ($RW_1$, $RW_2$) include paper weights and resin weights. These film roll weights can also have uncertainties. The prediction of fiber aerial weight by the physics model ($FAW_{M1}$) and uncertainty, $\sigma_{M1}^2$ of the physics-based model is as follows:

$$FAW_{M1} = \beta - RW_1 - RW_2$$

$$\sigma_{M1}^2 = \sigma_\beta^2 + \sigma_{RW_1}^2 + \sigma_{RW_2}^2$$

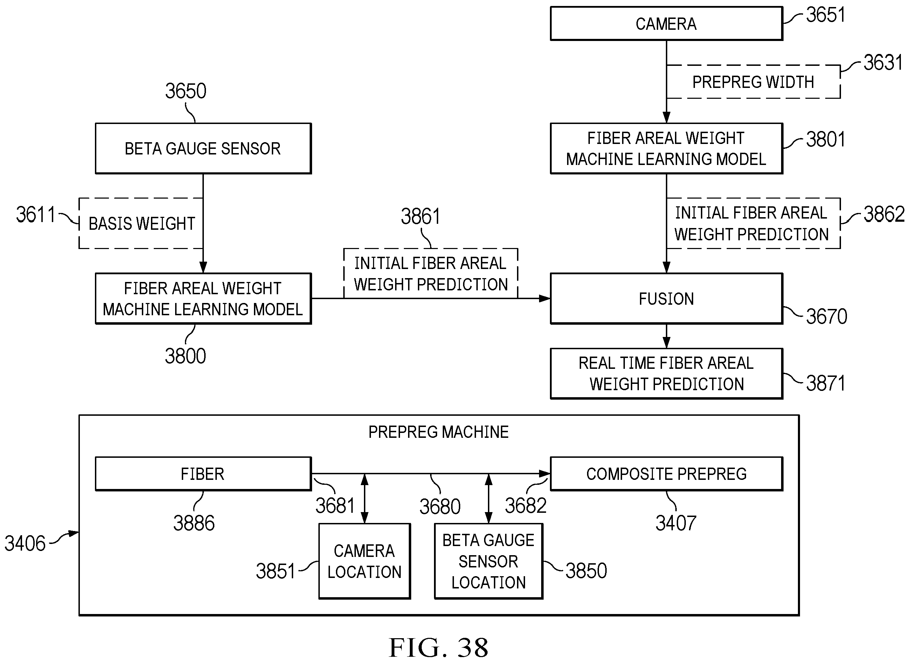

With reference next to Figure 38, an illustration of dataflow for real time fiber areal weight prediction is depicted in accordance with an illustrative example. In some examples, including this example, fiber areal weight machine learning model 3800 and fiber areal weight machine learning model 3801 are used to generate initial fiber areal weight predictions.

As depicted, fiber areal weight machine learning model 3800 has been trained to output initial fiber areal weight prediction 3861 in response to receiving basis weight 3711 as an input. Basis weight 3711 is received from beta gauge sensor 3650 in real time. In some examples, including this example, fiber areal weight machine learning model 3801 has been trained to output initial fiber areal weight prediction 3862 response to receiving prepreg width 3616 from camera 3651 in real time.

These initial predictions are sent to fusion 3670. This component generates real-time fiber areal weight prediction 3871 using these initial predictions.

In this example, beta gauge sensor 3650 and camera 3651 can be in different locations along path 3680 prepreg machine 3406. In this example, beta gauge sensor 3650 is in beta gauge sensor location 3850 and camera 3651 is in camera location 3851 along path 3680. In some examples, including this example, camera 3651 is located earlier in path 3680 than beta gauge sensor 3650.

In some examples, including this example, the initial predictions are made in real time by these models and can be correlated to each other using timestamps. For example, with the speed that the resin travels along path 3680, a location of a particular portion of path 3680 can be tracked. As a result, initial prediction for the fiber in the portion of the resin made by fiber areal weight machine learning model 3800 and fiber areal weight machine learning model 3801 for that particular portion of the fiber can be correlated to each other. As a result, fusion of the initial predictions made by fusion 3670 to form real time fiber areal weight prediction 3871 are made for the same portion of fiber.

The illustration of dataflow for machine learning models in Figures 36-38 are examples of some combinations of bottles that can be used to generate real time predictions of characteristics such as thickness and fiber areal wedge. These illustrations are not meant to limit the manner in which other illustrative examples can be implemented.

For example, combinations of models can be used and other types of characteristics can be predicted. For example, two physics models and a machine learning model can be used to predict a key characteristic. In another example, four physics-based models and two machine learning models can be used to predict a key characteristic.

In yet other illustrative examples, models can predict two or more key characteristics. Further, other types of key characteristics can be predicted in addition to or in place of fiber areal weight and thickness including resin viscosity and resin content.

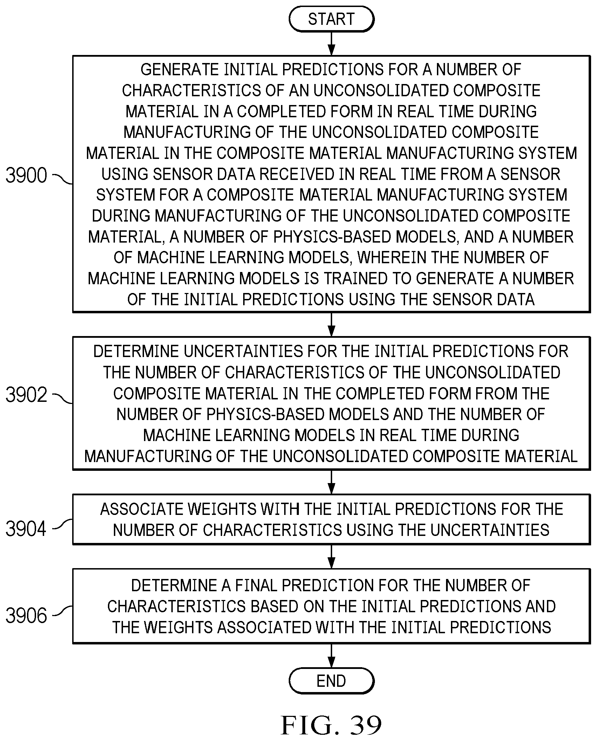

Turning to Figure 39, an illustration of a flowchart of a process for predicting a number of characteristics of the unconsolidated composite material is depicted in accordance with an illustrative example. The process in Figure 39 can be implemented in hardware, software, or both. When implemented in software, the process can take the form of program code that is run by one of more processor units located in one or more hardware devices in one or more computer systems. For example, the process can be implemented in prediction manager 3014 in computer system 3012 in Figure 30.

The process generates initial predictions for a number of characteristics of an unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained to generate a number of the initial predictions using the sensor data (operation 3900). The process determines uncertainties for the initial predictions for the number of characteristics of the unconsolidated composite material in the completed form from the number of physics-based models and the number of machine learning models in real time during manufacturing of the unconsolidated composite material (operation 3902).

The process associates weights with the initial predictions for the number of characteristics using the uncertainties (operation 3904). The process determines a final prediction for the number of characteristics based on the initial predictions and the weights associated with the initial predictions (operation 3906). The process terminates thereafter.

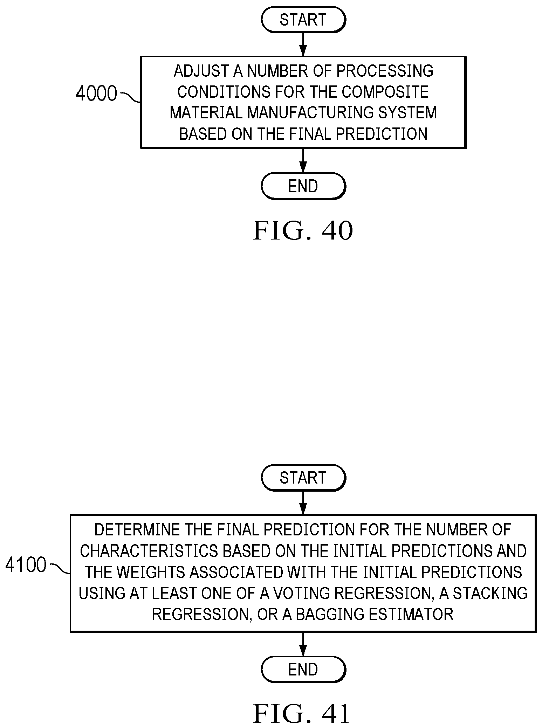

With reference next to Figure 40, an illustration of a flowchart of a process for adjusting processing conditions is depicted in accordance with an illustrative example. The process illustrated in this figure is an example of an additional operation that can be performed with the operations in Figure 39.

The process adjusts a number of processing conditions for the composite material manufacturing system based on the final prediction (operation 4000). The process terminates thereafter. In operation 4000, the number of processing conditions can be selected from at least one of a material input to the composite material manufacturing system, a setting for the composite material manufacturing system.

With reference to Figure 41, an illustration of a flowchart of a process for determining a final prediction is depicted in accordance with an illustrative example. The process in this figure is an example of an implementation for operation 3906 in Figure 39.

The process determines the final prediction for the number of characteristics based on the initial predictions and the weights associated with the initial predictions using at least one of a voting regression, a stacking regression, or a bagging estimator (operation 4100). The process terminates thereafter.

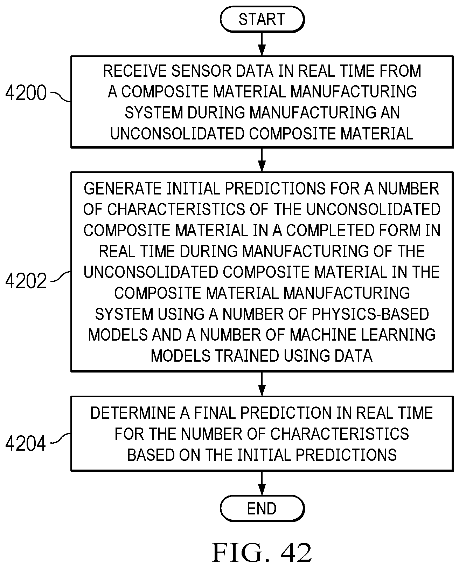

Turning next to Figure 42, an illustration of a flowchart of a process for predicting a number of characteristics of the unconsolidated composite material is depicted in accordance with an illustrative example. The process in Figure 42 can be implemented in hardware, software, or both. When implemented in software, the process can take the form of program code that is run by one of more processor units located in one or more hardware devices in one or more computer systems. For example, the process can be implemented in prediction manager 3014 in computer system 3012 in Figure 30.

The process receives sensor data in real time from a composite material manufacturing system during manufacturing of an unconsolidated composite material (operation 4200). The process generates initial predictions for a number of characteristics of the unconsolidated composite material in a completed form in real time during manufacturing of the unconsolidated composite material in the composite material manufacturing system using a number of physics-based models and a number of machine learning models trained using data (operation 4202).

The process determines a final prediction in real time for the number of characteristics based on the initial predictions (operation 4204). The process terminates thereafter.

Some features of the illustrative examples are described in the following clauses. These clauses are examples of features and are not intended to limit other illustrative examples.

Clause A1. A characteristic prediction system comprising: a computer system; and prediction manager located in the computer system, wherein the prediction manager is configured to: generate initial predictions for a number of characteristics of an unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained sensor data to generate a number of the initial predictions using the sensor data; determine uncertainties for the initial predictions for the number of characteristics of the unconsolidated composite material in the completed form from the number of physics-based models and the number of machine learning models in real time during manufacturing of the unconsolidated composite material; associate weights with the initial predictions for the number of characteristics using the uncertainties; and determine a final prediction for the number of characteristics based on the initial predictions and the weights associated with the initial predictions.

Clause A2. The characteristic prediction system according to clause A1 further comprising: a controller that is configured to adjust a number of processing conditions for the composite material manufacturing system based on the final prediction.

Clause A3. The characteristic prediction system according to clause A2, wherein the number of processing conditions is selected from at least one of a material input to the composite material manufacturing system, a setting for the composite material manufacturing system.

Clause A4. The characteristic prediction system according to any of clauses A1 to A3, wherein the number of physics-based models is selected from at least one of thermal model, an infiltration model, a rheological model, a permeability model that calculates a level of resin filtration, a thickness model that calculates a reduction of a thickness of a composite prepreg, or a resin infiltration model that calculates the level of resin filtration.

Clause A5. The characteristic prediction system according to any of clauses A1 to A4, wherein the number of machine learning models is selected from at least one of a first machine learning model trained using historical sensor data from a number of composite material manufacturing systems during manufacturing of unconsolidated composite materials, a second machine learning model trained using the historical sensor data and historical processing conditions, or a third machine learning model trained using the historical processing conditions and a number of historical characteristics.

Clause A6. The characteristic prediction system according to any of clauses A1 to A5, wherein the uncertainties are generated by the number of machine learning models as part of generating the initial predictions.

Clause A7. The characteristic prediction system according to any of clauses A1 to A6, in determining the final prediction, the prediction manager is configured to: determine the final prediction for the number of characteristics based on the initial predictions and the weights associated with the initial predictions using at least one of a voting regression, a stacking regression, or a bagging estimator.

Clause A8. The characteristic prediction system according to any of clauses A1 to A7, wherein the number of characteristics is selected from at least one of a fiber areal weight, a resin content, a prepreg thickness, a prepreg infiltration level, a prepreg tack level, a prepreg fiber areal weight, a resin film areal weight, a resin film thickness, a release liner areal weight, a release liner thickness, or a laminate structural property.

Clause A9. The characteristic prediction system according to any of clauses A1 to A8, wherein the sensor data comprises characteristics data and production data.

Clause A10. The characteristic prediction system according to any of clauses A1 to A9, wherein the composite material manufacturing system is one of a carbon fiber prepreg coating line, carbon fiber prepreg coating line, a reinforcing fiber resin impregnation line, a resin mix process system, a resin filming line, a prepreg system, and a slitting process system.

Clause A11. A characteristic prediction system comprising: a computer system; and prediction manager located in the computer system, wherein the prediction manager is configured to: receive sensor data in real time from a sensor system for a composite material manufacturing system during manufacturing of an unconsolidated composite material; generate initial predictions for a number of characteristics of the unconsolidated composite material in a completed form in real time during manufacturing of the unconsolidated composite material in the composite material manufacturing system using a number of physics-based models and a number of machine learning models to generate the initial predictions using the sensor data; and determine a final prediction in real time for the number of characteristics based on the initial predictions.

Clause A12. The characteristic prediction system according to clause A11, wherein the prediction manager is configured to: receive uncertainties for the initial predictions for the number of characteristics of the unconsolidated composite material from the number of physics-based models and the number of machine learning models in real time during manufacturing of the unconsolidated composite material; and associate weights with the initial predictions for the number of characteristics using the uncertainties, wherein in determining the final prediction, the prediction manager is configured to: determine the final prediction for the number of characteristics based on the initial predictions and the weights associated with the initial predictions.

Clause A13. The characteristic prediction system according to clause A11 or A12, wherein the number of physics-based models is selected from at least one of thermal model, an infiltration model, a rheological model, a permeability model that calculates a level of resin filtration, a thickness model that calculates a reduction of a thickness of a composite prepreg, or a resin infiltration model that calculates the level of resin filtration.

Clause A14. The characteristic prediction system according to any of clauses A11 to A13, wherein the number of machine learning models is selected from at least one of a first machine learning model trained using historical sensor data from a number of composite material manufacturing systems during manufacturing of unconsolidated composite materials, a second machine learning model trained using the historical sensor data and historical processing conditions, or a third machine learning model trained using the historical processing conditions and a number of historical characteristics.

Clause A15. A method for predicting a number of characteristics of an unconsolidated composite material, the method comprising: generating initial predictions for a number of characteristics of the unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained using historical sensor data to generate a number of the initial predictions using the sensor data; determining uncertainties for the initial predictions for the number of characteristics of the unconsolidated composite material in the completed form from the number of physics-based models and the number of machine learning models in real time during manufacturing of the unconsolidated composite material; associating weights with the initial predictions for the number of characteristics using the uncertainties; and determining a final prediction for the number of characteristics based on the initial predictions and the weights associated with the initial predictions.

Clause A16. The method according to clause A15 further comprising: adjusting a number of processing conditions for the composite material manufacturing system based on the final prediction.

Clause A17. The method according to clause A16, wherein the number of processing conditions is selected from at least one of a material input to the composite material manufacturing system, a setting for the composite material manufacturing system.

Clause A18. The method according to any of clauses A15 to A17, wherein the number of physics-based models is selected from at least one of thermal model, an infiltration model, a rheological model, a permeability model that calculates a level of resin filtration, a thickness model that calculates a reduction of a thickness of a composite prepreg, or a resin infiltration model that calculates the level of resin filtration.

Clause A19. The method according to any of clauses A15 to A18, wherein the number of machine learning models is selected from at least one of a first machine learning model trained using historical sensor data, a second machine learning model trained using the historical sensor data and historical processing conditions, or a third machine learning model trained using the historical processing conditions and number of historical characteristics.

Clause A20. The method according to clause A19, wherein the historical sensor data comprises historical data and production data.

Clause A21. The method according to any of clauses A15 to A20, wherein the uncertainties are generated by the number of machine learning models as part of generating the initial predictions.

Clause A22. The method according to any of clauses A15 to A21, wherein determining the final prediction comprises: determining the final prediction for the number of characteristics based on the initial predictions and the weights associated with the initial predictions using at least one of a voting regression, a stacking regression, or a bagging estimator.

Clause A23. The method according to any of clauses A15 to A22, wherein the number of characteristics is selected from at least one of a fiber areal weight, a resin content, a prepreg thickness, a prepreg infiltration level, a prepreg tack level, a prepreg fiber areal weight, a resin film areal weight, a resin film thickness, a release liner areal weight, a release liner thickness, or a laminate structural property.

Clause A24. The method according to any of clauses A15 to A23, wherein the sensor data comprises characteristics data and production data.

Clause A25. The method according to any of clauses A15 to A24, wherein the composite material manufacturing system is a carbon fiber prepreg coating line, a reinforcing fiber resin impregnation line, a resin mix process system, a resin filming line, a prepreg system, and a slitting process system.

Clause A26. A method for predicting a number of characteristics of an unconsolidated composite material, the method comprising: receiving sensor data in real time from a composite material manufacturing system during manufacturing of an unconsolidated composite material; generating initial predictions for a number of characteristics of the unconsolidated composite material in a completed form in real time during manufacturing of the unconsolidated composite material in the composite material manufacturing system using a number of physics-based models and a number of machine learning models trained using data; and determining a final prediction in real time for the number of characteristics based on the initial predictions.

Clause A27. A computer program comprising computer program instructions that, when executed by one or more computer processors, cause the one or more computer processors to perform the method of any of clauses A15 to A26, or a computer readable medium having stored thereon such a computer program.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative examples may provide different features as compared to other desirable examples. The example or examples selected are chosen and described in order to best explain the principles of the disclosure, the practical application, and to enable others of ordinary skill in the art to understand the disclosure for various examples with various modifications as are suited to the particular use contemplated.

**Claims**

1. A characteristic prediction system comprising:

   a computer system; and
   prediction manager located in the computer system, wherein the prediction manager is configured to:

generate initial predictions for a number of characteristics of an unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained to generate a number of the initial predictions using the sensor data; determine uncertainties for the initial predictions for the number of characteristics of the unconsolidated composite material in the completed form from the number of physics-based models and the number of machine learning models in real time during manufacturing of the unconsolidated composite material; associate weights with the initial predictions for the number of characteristics using the uncertainties; and determine a final prediction for the number of characteristics based on the initial predictions and the weights associated with the initial predictions.

2. The characteristic prediction system of claim 1 further comprising:
a controller that is configured to adjust a number of processing conditions for the composite material manufacturing system based on the final prediction and, optionally, wherein the number of processing conditions is selected from at least one of a material input to the composite material manufacturing system, a setting for the composite material manufacturing system.

3. The characteristic prediction system of claim 1 or 2, wherein the number of physics-based models is selected from at least one of thermal model, an infiltration model, a rheological model, a permeability model that calculates a level of resin filtration, a thickness model that calculates a reduction of a thickness of a composite prepreg, or a resin infiltration model that calculates the level of resin filtration.

4. The characteristic prediction system of any preceding claim, wherein the number of machine learning models is selected from at least one of a first machine learning model trained using historical sensor data from a number of composite material manufacturing systems during manufacturing of unconsolidated composite materials, a second machine learning model trained using the historical sensor data and historical processing conditions, or a third machine learning model trained using the historical processing conditions and a number of historical characteristics.

5. The characteristic prediction system of any preceding claim, in determining the final prediction, the prediction manager is configured to:
determine the final prediction for the number of characteristics based on the initial predictions and the weights associated with the initial predictions using at least one of a voting regression, a stacking regression, or a bagging estimator.

6. The characteristic prediction system of any preceding claim, wherein:

the number of characteristics is selected from at least one of a fiber areal weight, a resin content, a prepreg thickness, a prepreg infiltration level, a prepreg tack level, a prepreg fiber areal weight, a resin film areal weight, a resin film thickness, a release liner areal weight, a release liner thickness, or a laminate structural property; and/or
the composite material manufacturing system is one of a carbon fiber prepreg coating line, carbon fiber prepreg coating line, a reinforcing fiber resin impregnation line, a resin mix process system, a resin filming line, a prepreg system, and a slitting process system.

7. The characteristic prediction system of any preceding claim , wherein:

the uncertainties are generated by the number of machine learning models as part of generating the initial predictions; and/or
the sensor data comprises characteristics data and production data.

8. A method for predicting a number of characteristics of an unconsolidated composite material, the method comprising:

generating initial predictions for a number of characteristics of the unconsolidated composite material in a completed form in real time during manufacturing of the unconsolidated composite material in the composite material manufacturing system using sensor data received in real time from a sensor system for a composite material manufacturing system during manufacturing of the unconsolidated composite material, a number of physics-based models, and a number of machine learning models, wherein the number of machine learning models is trained to generate a number of the initial predictions using the sensor data;

determining uncertainties for the initial predictions for the number of characteristics of the unconsolidated composite material in the completed form from the number of physics-based models and the number of machine learning models in real time during manufacturing of the unconsolidated composite material;

associating weights with the initial predictions for the number of characteristics using the uncertainties; and

determining a final prediction for the number of characteristics based on the initial predictions and the weights associated with the initial predictions.

9. The method of claim 8 further comprising:
adjusting a number of processing conditions for the composite material manufacturing system based on the final prediction and, optionally, wherein the number of processing conditions is selected from at least one of a material input to the composite material manufacturing system, a setting for the composite material manufacturing system.

10. The method of claim 8 or 9, wherein the number of physics-based models is selected from at least one of thermal model, an infiltration model, a rheological model, a permeability model that calculates a level of resin filtration, a thickness model that calculates a reduction of a thickness of a composite prepreg, or a resin infiltration model that calculates the level of resin filtration.

11. The method of any of claims 8 to 10, wherein the number of machine learning models is selected from at least one of a first machine learning model trained using historical sensor data, a second machine learning model trained using the historical sensor data and historical processing conditions, or a third machine learning model trained using the historical processing conditions and a number of historical characteristics and, optionally the historical sensor data comprises historical data and production data.

12. The method of any of claims 8 to 11, wherein:

the uncertainties are generated by the number of machine learning models as part of generating the initial predictions; and/or
the sensor data comprises characteristics data and production data.

13. The method of any of claims 8 to 12, wherein determining the final prediction comprises:
determining the final prediction for the number of characteristics based on the initial predictions and the weights associated with the initial predictions using at least one of a voting regression, a stacking regression, or a bagging estimator.

14. The method of any of claims 8 to 13, wherein:

the number of characteristics is selected from at least one of a fiber areal weight, a resin content, a prepreg thickness, a prepreg infiltration level, a prepreg tack level, a prepreg fiber areal weight, a resin film areal weight, a resin film thickness, a release liner areal weight, a release liner thickness, or a laminate structural property; and/or
the composite material manufacturing system is a carbon fiber prepreg coating line, a reinforcing fiber resin impregnation line, a resin mix process system, a resin filming line, a prepreg system, and a slitting process system.

15. A computer program comprising computer program instructions that, when executed by one or more computer processors, cause the one or more computer processors to perform the method of any of claims 8 to 14, or a computer readable medium having stored thereon such a computer program.

FIG. 1

FIG. 2

COMPOSITE MANUFACTURING ENVIRONMENT 200

COMPLETED PRODUCT 204

UNCONSOLIDATED COMPOSITE MATERIAL 255

PORTIONS 226

PROPERTIES 228

SENSORS 222

205 COMPOSITE PART

227 COMPLETED PRODUCT

COMPOSITE MATERIAL MANUFACTURING SYSTEM

209 LOCATIONS

208 SENSOR SYSTEM 220

SENSOR DATA 218

202 COMPOSITE MATERIAL MANAGEMENT SYSTEM

210 COMPUTER SYSTEM

216 PROGRAM INSTRUCTIONS

203 DIGITAL TWIN

233 MODELS 234

MACHINE LEARNING MODELS
MACHINE LEARNING MODEL 236

PHYSICS MODELS 235
PHYSICS MODEL 239

HYBRID MODELS 237

STATISTICAL MODELS 243

ACTIONS 241
CORRECTIVE ACTION 291

COMPOSITE MATERIAL MANAGER 212

214 PROCESSOR UNITS

240 TRAINING DATASET

242 HISTORICAL SENSOR DATA

244 HISTORICAL PROPERTIES

245 HISTORICAL UPSTREAM INFORMATION

251 INITIAL PREDICTED PROPERTIES

224 PREDICTED PROPERTIES

232 QUALITY LEVEL
230 PREDICTED QUALITY LEVEL

246 UPSTREAM INFORMATION

FIG. 3

EP 4 439 211 A1

MANUFACTURING PROCESS FLOW

*400*

*402*
UNCONSOLIDATED COMPOSITE MATERIAL PRODUCTION PROCESS INPUTS

MATERIALS AND SETTINGS

*408*

UNCONSOLIDATED COMPOSITE MATERIAL PRODUCTION PHYSICAL PLANT
*404*

*410*
UNCONSOLIDATED COMPOSITE MATERIAL PRODUCTION PROCESS OUTPUT

UNCONSOLIDATED COMPOSITE MATERIAL

*204*

SENSORS — *222*

COMPOSITE MATERIAL MANAGER — *212*

DATA PREPROCESSING

*406*

MODELS — *233*

PREDICTED PROPERTIES

*224*

*412*
REAL TIME QUALITY RECORD

FIG. 4

EP 4 439 211 A1

EP 4 439 211 A1

**FIG. 5**

FIG. 6

FIG. 7

EP 4 439 211 A1

FIG. 8

FIG. 9

START

1000 ~ | RECEIVE SENSOR DATA FROM A SENSOR SYSTEM FOR A COMPOSITE MATERIAL MANUFACTURING SYSTEM, WHEREIN THE SENSOR DATA IS RECEIVED DURING MANUFACTURING OF THE UNCONSOLIDATED COMPOSITE MATERIAL BY THE COMPOSITE MATERIAL MANUFACTURING SYSTEM

1002 ~ | DETERMINE A SET OF PREDICTED PROPERTIES FOR A NUMBER OF PORTIONS OF THE UNCONSOLIDATED COMPOSITE MATERIAL AS COMPLETED FROM MANUFACTURING BY THE COMPOSITE MATERIAL MANUFACTURING SYSTEM USING THE SENSOR DATA

1004 ~ | IDENTIFY A QUALITY LEVEL FOR THE NUMBER OF PORTIONS OF THE UNCONSOLIDATED COMPOSITE MATERIAL BASED ON THE SET OF PREDICTED PROPERTIES FOR THE NUMBER OF PORTIONS OF THE UNCONSOLIDATED COMPOSITE MATERIAL

END

FIG. 10

START

1100 ~ | PERFORM A MARKING ACTION BASED ON THE QUALITY LEVEL IDENTIFIED FOR THE NUMBER OF PORTIONS OF THE UNCONSOLIDATED COMPOSITE MATERIAL

END

FIG. 11

START

1200 — MARK A NUMBER OF PORTIONS OF THE UNCONSOLIDATED COMPOSITE MATERIAL AS UNUSABLE BASED ON THE QUALITY LEVEL FOR THE PORTION BEING OUT OF A TOLERANCE

END

## FIG. 12

START

1300 — MARK A NUMBER OF PORTIONS OF THE UNCONSOLIDATED COMPOSITE MATERIAL AS USABLE BASED ON THE QUALITY LEVEL FOR THE PORTION BEING WITHIN A TOLERANCE

END

## FIG. 13

START

1400 — MARK A NUMBER OF PORTIONS OF THE UNCONSOLIDATED COMPOSITE MATERIAL WITH THE QUALITY LEVEL

END

## FIG. 14

START

1500 ⟶ RECORD THE QUALITY LEVEL
FOR THE NUMBER OF PORTIONS
OF THE UNCONSOLIDATED
COMPOSITE MATERIAL

END

FIG. 15

START

1600 ⟶ DETERMINE A FIRST SET OF INITIAL PREDICTED
PROPERTIES FOR A PORTION OF THE UNCONSOLIDATED
COMPOSITE MATERIAL FROM A MACHINE LEARNING
MODEL GENERATED USING THE SENSOR DATA

1602 ⟶ DETERMINE A SECOND SET OF INITIAL PREDICTED
PROPERTIES FOR THE PORTION OF THE
UNCONSOLIDATED COMPOSITE MATERIAL FROM A
PHYSICS MODEL GENERATED USING THE SENSOR DATA

1604 ⟶ DETERMINE THE SET OF PREDICTED PROPERTIES
FOR THE PORTION OF THE UNCONSOLIDATED
COMPOSITE MATERIAL FROM A FUSION OF THE FIRST
SET OF INITIAL PREDICTED PROPERTIES AND THE
SECOND SET OF INITIAL PREDICTED PROPERTIES

END

FIG. 16

START

1700 — SETTING A SCOPE FOR
DATA COLLECTION

1702 — COLLECT DATA

1704 — TRAIN A SET OF MACHINE
LEARNING MODELS

1706 — DETERMINE ERROR IN THE
ESTIMATION OF THE PROPERTIES

1708 — THE
SELECTED MACHINE
LEARNING MODEL HAS A DESIRED LEVEL
OF ACCURACY
?

NO

USE A DESIGN OF
EXPERIMENTS (DOE)
TO GENERATE A
TESTING DATA SET
— 1710

YES

1712 — PREDICT PROPERTIES FOR
PORTIONS OF THE UNCONSOLIDATED
COMPOSITE MATERIAL IN REAL TIME
IN WHICH THE PROPERTIES ARE
PREDICTED FOR THE PORTIONS OF
THE UNCONSOLIDATED COMPOSITE
MATERIAL PRIOR TO COMPLETING
MANUFACTURING OF THE PORTIONS

END

FIG. 17

START

1800 ⌐ RECEIVE SENSOR DATA FROM A SENSOR SYSTEM FOR A COMPOSITE MATERIAL MANUFACTURING SYSTEM, WHEREIN THE SENSOR DATA IS RECEIVED DURING MANUFACTURING OF AN UNCONSOLIDATED COMPOSITE MATERIAL BY THE COMPOSITE MATERIAL MANUFACTURING SYSTEM

1802 ⌐ DETERMINE A SET OF PREDICTED PROPERTIES FOR A NUMBER OF PORTIONS OF THE UNCURED COMPOSITE MATERIAL USING THE SENSOR DATA, WHEREIN THE SET OF PREDICTED PROPERTIES IS FOR THE NUMBER OF PORTIONS OF THE UNCONSOLIDATED COMPOSITE MATERIAL AS A COMPLETED PRODUCT

1804 ⌐ PERFORM A CORRECTIVE ACTION BASED ON A QUALITY LEVEL FOR THE NUMBER OF PORTIONS OF THE UNCONSOLIDATED COMPOSITE MATERIAL

END

FIG. 18

START

PERFORM THE CORRECTIVE ACTION IN RESPONSE TO THE SET OF PREDICTED PROPERTIES FOR THE NUMBER OF PORTIONS BEING OUT OF A TOLERANCE SPECIFIED FOR THE UNCONSOLIDATED COMPOSITE MATERIAL

1900

END

FIG. 19

START

ADJUST A SET OF PARAMETERS IN THE COMPOSITE MATERIAL MANUFACTURING SYSTEM TO CHANGE THE SET OF PREDICTED PROPERTIES FOR THE NUMBER OF PORTIONS OF THE UNCONSOLIDATED COMPOSITE MATERIAL IN RESPONSE TO THE SET OF PREDICTED PROPERTIES FOR THE NUMBER OF PORTIONS BEING OUT OF A TOLERANCE SPECIFIED FOR THE UNCONSOLIDATED COMPOSITE MATERIAL

2000

END

FIG. 20

START

ADJUST A SET OF PARAMETERS IN THE COMPOSITE MATERIAL MANUFACTURING SYSTEM SUCH THAT THE SET OF PREDICTED PROPERTIES FOR THE NUMBER OF PORTIONS OF THE UNCONSOLIDATED COMPOSITE MATERIAL IS WITHIN A TOLERANCE FOR THE UNCONSOLIDATED COMPOSITE MATERIAL

2100

END

FIG. 21

START

2200 — ADJUST A SET OF PARAMETERS IN THE COMPOSITE MATERIAL MANUFACTURING SYSTEM SUCH THAT THE SET OF PREDICTED PROPERTIES FOR THE NUMBER OF PORTIONS OF THE UNCONSOLIDATED COMPOSITE MATERIAL IS WITHIN A SECOND TOLERANCE FOR A SECOND TYPE OF USE OF THE UNCONSOLIDATED COMPOSITE MATERIAL

END

FIG. 22

START

2300 — ADJUST A SET OF PARAMETERS IN THE COMPOSITE MATERIAL MANUFACTURING SYSTEM SUCH THAT THE SET OF PREDICTED PROPERTIES FOR A SUBSEQUENT PORTION TO THE NUMBER OF PORTIONS OF THE UNCONSOLIDATED COMPOSITE MATERIAL IS WITHIN A TOLERANCE FOR THE UNCONSOLIDATED COMPOSITE MATERIAL IN RESPONSE TO THE SET OF PREDICTED PROPERTIES FOR THE NUMBER OF PORTIONS BEING OUT OF THE TOLERANCE SPECIFIED FOR THE UNCONSOLIDATED COMPOSITE MATERIAL

END

FIG. 23

START

2400 ~

CHANGE A NUMBER OF RAW MATERIALS USED TO FORM THE UNCONSOLIDATED COMPOSITE MATERIAL SUCH THAT THE SET OF PREDICTED PROPERTIES FOR A SUBSEQUENT PORTION TO THE NUMBER OF PORTIONS OF THE UNCONSOLIDATED COMPOSITE MATERIAL IS WITHIN A TOLERANCE FOR THE UNCONSOLIDATED COMPOSITE MATERIAL IN RESPONSE TO THE SET OF PREDICTED PROPERTIES FOR THE NUMBER OF PORTIONS BEING OUT OF THE TOLERANCE SPECIFIED FOR THE UNCONSOLIDATED COMPOSITE MATERIAL

END

FIG. 24

START

2500 ~

DETERMINE THE SET OF PREDICTED PROPERTIES FOR THE NUMBER OF PORTIONS OF THE UNCONSOLIDATED COMPOSITE MATERIAL USING THE SENSOR DATA, A MACHINE LEARNING MODEL, AND A PHYSICS MODEL

END

FIG. 25

2600

DATA PROCESSING SYSTEM

2616

STORAGE DEVICES

2606
MEMORY

2608
PERSISTENT STORAGE

2604
PROCESSOR UNIT

2602

COMMUNICATIONS UNIT

INPUT/OUTPUT UNIT

DISPLAY

2610

2612

2614

2620
COMPUTER PROGRAM PRODUCT

COMPUTER-READABLE MEDIA

PROGRAM INSTRUCTIONS

2618

2624

2622

COMPUTER-READABLE STORAGE MEDIA

FIG. 26

EP 4 439 211 A1

2700

```
2702 ─ SPECIFICATION AND DESIGN
           │
2704 ─ MATERIAL PROCUREMENT
           │
2706 ─ COMPONENT AND SUBASSEMBLY
         MANUFACTURING
           │
2708 ─ SYSTEM INTEGRATION
           │
2710 ─ CERTIFICATION AND DELIVERY
           │
2712 ─ IN SERVICE
           │
2714 ─ MAINTENANCE AND SERVICE
```

FIG. 27

2800

AIRCRAFT

2802 ─ AIRFRAME          INTERIOR ─ 2806

SYSTEMS

PROPULSION SYSTEM          ELECTRICAL SYSTEM

2808          2812          2810          2814

HYDRAULIC SYSTEM          ENVIRONMENTAL SYSTEM

2804

FIG. 28

FIG. 29

FIG. 30

EP 4 439 211 A1

3051

PROCESSING
CONDITIONS

INPUT MATERIAL
3100

SETTINGS
3102

FIG. 31

3020

SENSOR DATA

CHARACTERISTICS DATA
3200

PRODUCTION DATA
3202

FIG. 32

3305

3306 TRAINING
DATASET

3307 HISTORICAL
DATA

HISTORICAL
SENSOR DATA

HISTORICAL
CHARACTERISTICS
DATA

3330

HISTORICAL
PRODUCTION DATA

3332

HISTORICAL PROCESSING
CONDITIONS

HISTORICAL
INPUT MATERIAL

3300

HISTORICAL
SETTINGS

3309

3308

PREDICTION
MANAGER
3014

3331

MACHINE
LEARNING MODELS

FIRST MACHINE
LEARNING MODEL
3301

SECOND MACHINE
LEARNING MODEL
3302

THIRD MACHINE
LEARNING MODEL
3303

FIG. 33

3400

3408

| CHARACTERISTIC PREDICTION SYSTEM | ←→ | KEY CHARACTERISTICS |

3402

SENSOR DATA

ACTIONS  3450

| ONLINE PHYSICAL SENSING SYSTEM | PREPREG MACHINE | 3406 |

3404

COMPOSITE PREPREG  3407

FIG. 34

FIG. 35

FIG. 36

EP 4 439 211 A1

FIG. 37

FIG. 38

EP 4 439 211 A1

START

3900 — GENERATE INITIAL PREDICTIONS FOR A NUMBER OF CHARACTERISTICS OF AN UNCONSOLIDATED COMPOSITE MATERIAL IN A COMPLETED FORM IN REAL TIME DURING MANUFACTURING OF THE UNCONSOLIDATED COMPOSITE MATERIAL IN THE COMPOSITE MATERIAL MANUFACTURING SYSTEM USING SENSOR DATA RECEIVED IN REAL TIME FROM A SENSOR SYSTEM FOR A COMPOSITE MATERIAL MANUFACTURING SYSTEM DURING MANUFACTURING OF THE UNCONSOLIDATED COMPOSITE MATERIAL, A NUMBER OF PHYSICS-BASED MODELS, AND A NUMBER OF MACHINE LEARNING MODELS, WHEREIN THE NUMBER OF MACHINE LEARNING MODELS IS TRAINED TO GENERATE A NUMBER OF THE INITIAL PREDICTIONS USING THE SENSOR DATA

3902 — DETERMINE UNCERTAINTIES FOR THE INITIAL PREDICTIONS FOR THE NUMBER OF CHARACTERISTICS OF THE UNCONSOLIDATED COMPOSITE MATERIAL IN THE COMPLETED FORM FROM THE NUMBER OF PHYSICS-BASED MODELS AND THE NUMBER OF MACHINE LEARNING MODELS IN REAL TIME DURING MANUFACTURING OF THE UNCONSOLIDATED COMPOSITE MATERIAL

3904 — ASSOCIATE WEIGHTS WITH THE INITIAL PREDICTIONS FOR THE NUMBER OF CHARACTERISTICS USING THE UNCERTAINTIES

3906 — DETERMINE A FINAL PREDICTION FOR THE NUMBER OF CHARACTERISTICS BASED ON THE INITIAL PREDICTIONS AND THE WEIGHTS ASSOCIATED WITH THE INITIAL PREDICTIONS

END

FIG. 39

START

4000 ~ ADJUST A NUMBER OF PROCESSING
CONDITIONS FOR THE COMPOSITE
MATERIAL MANUFACTURING SYSTEM
BASED ON THE FINAL PREDICTION

END

FIG. 40

START

4100 ~ DETERMINE THE FINAL PREDICTION FOR THE NUMBER OF
CHARACTERISTICS BASED ON THE INITIAL PREDICTIONS AND
THE WEIGHTS ASSOCIATED WITH THE INITIAL PREDICTIONS
USING AT LEAST ONE OF A VOTING REGRESSION, A STACKING
REGRESSION, OR A BAGGING ESTIMATOR

END

FIG. 41

START

4200 — RECEIVE SENSOR DATA IN REAL TIME FROM A COMPOSITE MATERIAL MANUFACTURING SYSTEM DURING MANUFACTURING AN UNCONSOLIDATED COMPOSITE MATERIAL

4202 — GENERATE INITIAL PREDICTIONS FOR A NUMBER OF CHARACTERISTICS OF THE UNCONSOLIDATED COMPOSITE MATERIAL IN A COMPLETED FORM IN REAL TIME DURING MANUFACTURING OF THE UNCONSOLIDATED COMPOSITE MATERIAL IN THE COMPOSITE MATERIAL MANUFACTURING SYSTEM USING A NUMBER OF PHYSICS-BASED MODELS AND A NUMBER OF MACHINE LEARNING MODELS TRAINED USING DATA

4204 — DETERMINE A FINAL PREDICTION IN REAL TIME FOR THE NUMBER OF CHARACTERISTICS BASED ON THE INITIAL PREDICTIONS

END

FIG. 42

Europäisches
Patentamt

European
Patent Office

Office européen
des brevets

# EUROPEAN SEARCH REPORT

**Application Number**

EP 24 16 7298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 303 678 A1 (BOEING CO [US]) 10 January 2024 (2024-01-10) * the whole document * | 1-15 | INV. G05B19/418 B29C70/54 |
| X,P | EP 4 303 677 A1 (BOEING CO [US]) 10 January 2024 (2024-01-10) * the whole document * | 1-15 | ADD. G05B13/02 G05B13/04 |
| X | BRASINGTON ALEX ET AL: "A review and framework for modeling methodologies to advance automated fiber placement", COMPOSITES PART C: OPEN ACCESS, vol. 10, 1 March 2023 (2023-03-01), page 100347, XP093133036, ISSN: 2666-6820, DOI: 10.1016/j.jcomc.2023.100347 * the whole document * | 1-15 | |
| A | ISLAM FAISAL ET AL: "An approach for process optimisation of the Automated Fibre Placement (AFP) based thermoplastic composites manufacturing using Machine Learning, photonic sensing and thermo-mechanics modelling", MANUFACTURING LETTERS, vol. 32, 1 April 2022 (2022-04-01), pages 10-14, XP093193172, NL ISSN: 2213-8463, DOI: 10.1016/j.mfglet.2022.01.002 Retrieved from the Internet: URL:https://www.sciencedirect.com/science/article/pii/S2213846322000025/pdfft?md5=a25c697bcf46b439d2f22c547e40b7e8&pid=1-s2.0-S2213846322000025-main.pdf> * the whole document * | 1-15 | |

**TECHNICAL FIELDS SEARCHED (IPC)**

G05B
B29C
B29B

-/--

The present search report has been drawn up for all claims

| Place of search | Date of completion of the search | Examiner |
|---|---|---|
| The Hague | 6 August 2024 | Itoafa, Alex |

EPO FORM 1503 03.82 (P04C01)

Europäisches
Patentamt

European
Patent Office

Office européen
des brevets

# EUROPEAN SEARCH REPORT

Application Number

EP 24 16 7298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/009596 A1 (UNIV NAT CORP EHIME UNIV [JP]; TEIJIN LTD [JP]) 13 January 2022 (2022-01-13) * the whole document * | 1-15 | |
| A | US 2016/299085 A1 (FISSET EMILIE [GB] ET AL) 13 October 2016 (2016-10-13) * the whole document * | 1-15 | |
| A | US 2021/252744 A1 (FUJIKI KOEI [JP]) 19 August 2021 (2021-08-19) * paragraphs [0033] - [0034], [0040] - [0041]; claims 1-16; figures 1-3 * | 1-15 | |
| A | WO 2016/044415 A1 (LEARJET INC [US]; RODRIGUEZ ALEJANDRO [US] ET AL.) 24 March 2016 (2016-03-24) * paragraphs [0002], [0005], [0009], [0011]; claims 1-21; figure 6 * | 1-15 | |
| A | US 2006/071668 A1 (SENIBI SIMON D [US] ET AL) 6 April 2006 (2006-04-06) * paragraphs [0047] - [0048] * | 1-15 | TECHNICAL FIELDS SEARCHED (IPC) |
| A | EP 3 751 367 A1 (GEN ELECTRIC [US]) 16 December 2020 (2020-12-16) * paragraphs [0006], [0011], [0013] * | 1-15 | |
| A | US 2020/264335 A1 (BHATIA SIDHARTH [US] ET AL) 20 August 2020 (2020-08-20) * paragraphs [0003], [0005], [0028] - [0029] * | 1-15 | |

The present search report has been drawn up for all claims

| Place of search | Date of completion of the search | Examiner |
|---|---|---|
| The Hague | 6 August 2024 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 7298

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | | Publication date | Patent family member(s) | | Publication date |
|---|---|---|---|---|---|
| EP 4303678 | A1 | 10-01-2024 | CN | 117371116 A | 09-01-2024 |
| | | | EP | 4303678 A1 | 10-01-2024 |
| | | | JP | 2024008841 A | 19-01-2024 |
| | | | US | 11731317 B1 | 22-08-2023 |
| EP 4303677 | A1 | 10-01-2024 | CN | 117373568 A | 09-01-2024 |
| | | | EP | 4303677 A1 | 10-01-2024 |
| | | | JP | 2024009751 A | 23-01-2024 |
| | | | US | 2024012399 A1 | 11-01-2024 |
| WO 2022009596 | A1 | 13-01-2022 | JP | 2023120457 A | 30-08-2023 |
| | | | WO | 2022009596 A1 | 13-01-2022 |
| US 2016299085 | A1 | 13-10-2016 | EP | 3071960 A1 | 28-09-2016 |
| | | | GB | 2522115 A | 15-07-2015 |
| | | | US | 2016299085 A1 | 13-10-2016 |
| | | | WO | 2015075147 A1 | 28-05-2015 |
| US 2021252744 | A1 | 19-08-2021 | CN | 113263660 A | 17-08-2021 |
| | | | JP | 7421944 B2 | 25-01-2024 |
| | | | JP | 2021126864 A | 02-09-2021 |
| | | | US | 2021252744 A1 | 19-08-2021 |
| WO 2016044415 | A1 | 24-03-2016 | NONE | | |
| US 2006071668 | A1 | 06-04-2006 | US | 2005209791 A1 | 22-09-2005 |
| | | | US | 2006071668 A1 | 06-04-2006 |
| | | | WO | 2005093404 A2 | 06-10-2005 |
| EP 3751367 | A1 | 16-12-2020 | CN | 112083650 A | 15-12-2020 |
| | | | EP | 3751367 A1 | 16-12-2020 |
| | | | JP | 6989078 B2 | 05-01-2022 |
| | | | JP | 2020203484 A | 24-12-2020 |
| | | | US | 2020393813 A1 | 17-12-2020 |
| US 2020264335 | A1 | 20-08-2020 | CN | 113454552 A | 28-09-2021 |
| | | | CN | 118131709 A | 04-06-2024 |
| | | | JP | 7471312 B2 | 19-04-2024 |
| | | | JP | 2022520247 A | 29-03-2022 |
| | | | JP | 2024059663 A | 01-05-2024 |
| | | | KR | 20210118243 A | 29-09-2021 |
| | | | KR | 20230169475 A | 15-12-2023 |
| | | | SG | 11202108577U A | 29-09-2021 |
| | | | TW | 202040500 A | 01-11-2020 |
| | | | TW | 202403658 A | 16-01-2024 |
| | | | US | 2020264335 A1 | 20-08-2020 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 24 16 7298

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | Publication date | Patent family member(s) | Publication date |
|---|---|---|---|
| | | US 2023205196 A1 | 29-06-2023 |
| | | WO 2020172186 A1 | 27-08-2020 |

For more details about this annex : see Official Journal of the European Patent Office, No. 12/82